# EUROPEAN PATENT SPECIFICATION

(11) **EP 3 780 775 B1**
(45) Date of publication and mention of the grant of the patent: **28.01.2026**
(21) Application number: 19781421.3
(22) Date of filing: 03.04.2019
(51) Int. Cl.: H04W 52/14

(54) **INFORMATION TRANSMISSION METHOD AND APPARATUS, AND NETWORK DEVICE AND TERMINAL**
VERFAHREN UND VORRICHTUNG ZUR INFORMATIONSÜBERTRAGUNG SOWIE NETZWERKGERÄT UND ENDGERÄT
PROCÉDÉ ET APPAREIL DE TRANSMISSION D'INFORMATIONS, DISPOSITIF RÉSEAU ET TERMINAL

(30) Priority: 04.04.2018 CN 201810302143
(43) Date of publication of application: 17.02.2021
(73) Proprietor: China Mobile Communication Co., Ltd Research Institute, Beijing 100053 (CN); China Mobile Communications Group Co., Ltd, Beijing 100032 (CN)
(72) Inventor: LI, Nan, Beijing 100032 (CN); ZHANG, Xiaoran, Beijing 100032 (CN); SHAO, Zhe, Beijing 100032 (CN); HU, Nan, Beijing 100032 (CN); YANG, Guang, Beijing 100032 (CN)
(74) Representative: SONN Patentanwälte GmbH & Co KG
(86) International application number: PCT/CN2019/081248
(87) International publication number: WO 2019/192517

(56) References cited:
- EP-A1- 2 550 830
- EP-B1- 2 550 830
- WO-A1-2015/062024
- CN-A- 101 599 877
- CN-A- 104 684 060
- US-A1- 2011 034 135
- US-A1- 2012 231 784
- US-A1- 2016 183 201
- US-A1- 2017 265 148
- US-A1- 2017 332 333
- "3rd Generation Partnership Project; Technical Specification Group Radio Access Network; Evolved Universal Terrestrial Radio Access (E-UTRA); Radio Resource Control (RRC); Protocol specification (Release 15)", 3GPP STANDARD; TECHNICAL SPECIFICATION; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.0.1, 9 January 2018 (2018-01-09), pages 1 - 776, XP051392555

## Description

### TECHNICAL FIELD

The present disclosure relates to the field of communications technology, in particular to an information transmission method, a device, a network device and a terminal.

### BACKGROUND

Specific Absorption Ratio (SAR) refers to the electromagnetic radiation energy absorbed by a unit mass of matter per unit time. The SAR value is usually used to measure the thermal effect of terminal radiation internationally, and it also represents the impact of radiation on the human body. The lower the SAR value, the less radiation is absorbed. Each country or region has formulated corresponding mandatory management requirements for the SAR value, and the terminal access detection must comply with it. China, Japan and the European Union adopt the same standards, the SAR limit received per 10g object is less than 2.0w/kg; the United States, South Korea, and Australia refer to the IEEE standard, the SAR limit received per 10g object is less than 1.6w/kg.

In order to effectively improve the uplink coverage and rate of the network, operators have proposed standardized requirements for high-power terminals in multiple TDD frequency bands (n41, 2496-2690MHz; n78, 3300-3800MHz; n79, 4400-5000MHz). When the transmitting power of the terminal increases, the SAR value of its specific absorption ratio will also increase. It is necessary to formulate reasonable measures to ensure that these high-power terminals in the TDD frequency band meet the requirements of regional SAR values and serve more abundant business types, such as telemedicine/education/monitoring, networked drones, cloud robots and other services that has a requirement of high uplink speed and a requirement of delay.

US2012231784A1 discloses that a network node determines one or more parameters related to a Specific Absorption Rate (SAR) target, where SAR is a measure of a maximum energy or power absorbed by a unit of mass of tissue exposed to radio frequency (RF) electromagnetic field (EMF) radiation generated as a result of radio transmissions generated by a UE. The network node generates content for a message for transmission to the UE including the determined one or more SAR-related parameters to be applied by a transmitter in the UE. Based on those one or more SAR-related parameters, the UE determines and implements an action in order to meet the SAR target. EP2550830B1 discloses methods and arrangements for controlling uplink transmit power to be used by the UE. The UE comprises multiple radio interfaces wherein at least one of the multiple interfaces is a cellular radio interface. The UE stores information comprising a total transmit power budget set aside for use over the multiple radio interfaces of the UE and receives transmit power control commands from a network node on the cellular radio interface indicating whether the UE should increase or decrease or maintain the uplink transmit power on the cellular radio interface. Transmit power levels to be used for uplink transmissions over the multiple radio interfaces based on the received transmit power control commands are calculated, wherein the said total transmit power budget for the multiple radio interfaces is taken into account. US2011/0034135A1 discloses transmission of data from a portable communication device to a station via a radio frequency signal using a protocol that has recurring frames, each having a plurality of transmission slots, different numbers of which can be used to transmit the data. When the portable communication device desires to send a data transmission, a first value is selected for either a power level for the radio frequency signal or the number of transmission slots to use. Then the first value is used to select a second value for the other one of the power level and the number of transmission slots. The first and second values are selected so that the data transmission at the selected power level using the selected number of transmission slots does not result in a specific absorption rate that is greater than a specific absorption rate limit. 3GPP TS 36.331 v15.0.1 (2018-01) discusses *ue-PowerClass-N, ue-PowerClass-5* indicates whether the UE supports UE power class 1, 2, 4 or 5 in the E-UTRA band. CN104684060A discloses a transmitting power adjusting method and a terminal. The method comprises the following steps that: the terminal acquires the public land mobile network (PLMN) identification information of a network side; the terminal looks up a transmitting power value range corresponding to the PLMN identification information of the network side according to a one-to-one relationship between the PLMN identification information and transmitting power value ranges, wherein the transmitting power value range corresponding to the PLMN identification information of the network side meets the specific absorption rate (SAR) requirement of the network side; and the transmitting power of the terminal is set to satisfy the transmitting power value range corresponding to the PLMN identification information of the network side. Through the embodiment of the invention, the contradiction between the transmitting power and the SAR is coordinated under the situation of keeping the competitiveness.

### SUMMARY

The present disclosure is to provide an information transmission method, a device, a network device and a terminal, so as to solve the issues of conflicts between high-power terminals and SAR values in the related art. The invention is set out in the appended set of claims.

### BRIEF DESCRIPTION OF THE DRAWINGS

FIG. 1 is a first flow chart of an information transmission method in an embodiment of the present disclosure;
FIG. 2 is a second flow chart of an information transmission method in an embodiment of the present disclosure;
FIG. 3 is a schematic diagram of an interaction process of Example 1 in an information transmission method in an embodiment of the present disclosure;
FIG. 4 is a schematic diagram of an interaction process of Example 2 in an information transmission method in an embodiment of the present disclosure;
FIG. 5 is a third flow chart of an information transmission method in an embodiment of the present disclosure;
Fig. 6 is a fourth flow chart of an information transmission method in an embodiment of the present disclosure;
FIG. 7 is a schematic diagram of an interaction process of Example 3 in an information transmission method in an embodiment of the present disclosure;
FIG. 8 is a schematic structural diagram of a network device in an embodiment of the present disclosure; and
FIG. 9 is a schematic structural diagram of a terminal in an embodiment of the present disclosure.

### DETAILED DESCRIPTION

In order to make the technical problems, technical solutions, and advantages to be solved by the present disclosure clearer, a detailed description will be given below with reference to the drawings and specific embodiments.

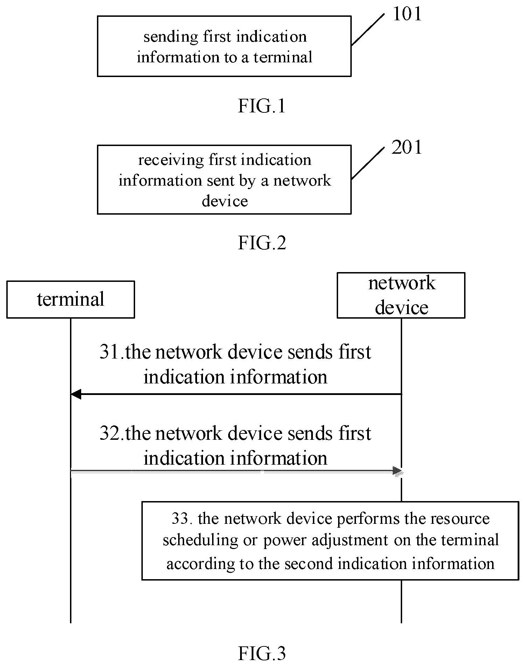

As shown in FIG. 1, an information transmission method applied to a network device is provided in an embodiment of the present disclosure, where the method includes:
Step 101: sending first indication information to a terminal, where the first indication information includes at least one of:
location area identity information of the network device;
information of current uplink and downlink configuration of the network device;
specific absorption ratio limit information, including: an applicable electromagnetic power density exposure requirement, an electromagnetic radiation specific absorption ratio requirement limit, an applicable electromagnetic power density exposure requirement identity or an electromagnetic radiation specific absorption ratio requirement limit identity;
uplink resource control information, including at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbols capable of being scheduled or transmitted of the terminal, a maximum quantity of uplink slots capable of being scheduled or transmitted of the terminal, a maximum percentage of uplink duration capable of being scheduled or transmitted of the terminal, a maximum percentage of uplink slot capable of being scheduled or transmitted of the terminal, a maximum percentage of uplink sub-frame capable of being scheduled or transmitted of the terminal and a maximum percentage of uplink symbol capable of being scheduled or transmitted of the terminal in the first time window; and
first time window configuration information configured to indicate a duration of a first time window.

Optionally, the current uplink and downlink configuration information of the network device includes: current uplink and downlink slot configuration information of the network device or current uplink and downlink sub-frame configuration information of the network device.

The specific absorption ratio limit information is the specific absorption ratio limit information of the country where the network device is located or the operator to which it belongs. The specific absorption ratio limit information can be the applicable electromagnetic power density exposure requirement or the electromagnetic radiation specific absorption ratio requirement limit, e.g., 2.0w/kg; or the specific absorption ratio limit information may also be the applicable electromagnetic power density exposure requirement identity or electromagnetic radiation specific absorption ratio requirement limit identity, e.g., standard 1 (corresponding to 2.0w/kg), standard 2 (corresponding to 1.6w/kg), etc., and the terminal and network device may determine the unique applicable electromagnetic power density exposure requirement or electromagnetic radiation specific absorption ratio requirement limit according to the applicable electromagnetic power density exposure requirement identity or electromagnetic radiation specific absorption ratio requirement limit identity.

Optionally, in the embodiment of the present disclosure, Step 101 includes:
sending the first indication information to the terminal through broadcast information, where this method is suitable for cell selection or reselection, and is used before the terminal accesses the base station;
or sending the first indication information to the terminal through a dedicated signaling; for example, send through a RRC Connection Reconfiguration or RRC Connection Setup or a Radio Resource Config Common, where this method is suitable for, when sub-carriers or sub-cells (carrier aggregation or dual connectivity) are added, the network device to inform the terminal of the relevant configuration information of the new added sub-carriers or sub-cells. For another example, it is used when sending the first RRC reconfiguration signaling (Mobility Control Info) to notify the terminal of the relevant configuration information of the target cell.

Further, Step 101 includes:
sending the first indication information to the terminal at a first working frequency band where the network device works.

For example, the terminal supports band 41 power class 2 (power class 2) 26dBm operation, at this time the first working frequency band where the network device works is band 41 frequency band.

Optionally, in the embodiment of the present disclosure, in a case where the first indication information includes the first time window configuration information, the first time window includes at least one frame structure period; or the first time window includes at least one slot; or the first time window includes at least one sub-frame; or the first time window includes at least one symbol; or the first time window includes at least one millisecond.

Optionally, the first time window is a predefined evaluation period;
the first time window is a time reference for the terminal to evaluate whether the applicable electromagnetic power density exposure requirement or the electromagnetic radiation specific absorption ratio requirement limit is met; or
the first time window is a time range of a maximum available uplink resource of the terminal in a case that the terminal evaluates that the applicable electromagnetic power density exposure requirement or the electromagnetic radiation specific absorption ratio requirement limit is met; or
the first time window is a time range of a maximum available output power configurable by the terminal in the case that the terminal evaluates that the applicable electromagnetic power density exposure requirement or the electromagnetic radiation specific absorption ratio requirement limit is met.

Further, in the embodiment of the present disclosure, after Step 101, the method further includes:
acquiring second indication information reported by the terminal,
where the second indication information includes at least one of:
   available uplink and downlink configuration information of the terminal (available uplink and downlink slot configuration information of the terminal or available uplink and downlink sub-frame configuration information of the terminal), in a case of ensuring compliance with applicable electromagnetic power density exposure requirement or the electromagnetic radiation specific absorption ratio requirement limit;
   in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
   in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
   first power class information of the terminal at a first working frequency band where the network device works; and
   the maximum available output powers configurable by the terminal corresponding to different uplink and downlink configurations, in the case that the applicable electromagnetic power density exposure requirement or the electromagnetic radiation specific absorption ratio requirement limit is met.

In the above embodiment of the present disclosure, after receiving the first indication information, the terminal feeds back second indication information to the network device according to the first indication information, where the second indication information includes at least one of the foregoing information.

Further, in the above embodiments of the present disclosure, the method further includes:
prior to acquiring the second indication information, acquiring second power class information of the terminal at the first working frequency band where the network device works;
where a transmitting power corresponding to the second power class information is larger than a transmitting power corresponding to the first power class information.

Further, in a case that the current uplink and downlink configuration of the network device is applied and the terminal determines that the applicable electromagnetic power density exposure requirement or the electromagnetic radiation specific absorption ratio requirement limit is not met, the second power class information of the terminal at the first working frequency band where the network device works which is sent by the terminal is received.

For example, the terminal supports band 41 power class 2 26dBm operation, which is the first power class, but if the ratio of the uplink and downlink slots indicated in the uplink and downlink slot configuration configured by the network side is 4: 1, when the ratio of the uplink and downlink slots is configured in the standard, the terminal of power class 2 cannot meet the SAR value requirement. Therefore, when the terminal reports the capability information to the network side, the power class in band 41 will be degraded and reported, e.g., power class 3 23dBm is reported, i.e., the second power class, the network side will use the corresponding index of power class 3 for processing when performing the power control and scheduling.

Following the above example, in the above embodiment of the present disclosure, the method further includes:
determining the maximum available output power configurable by the terminal in the first time window, according to the second indication information reported by the terminal; or
determining the first power class information of the terminal at a first working frequency band where the network device works, according to the second indication information reported by the terminal; or
determining, according to the second indication information reported by the terminal, at least one of the maximum uplink duration capable of being scheduled or transmitted of the terminal, the maximum quantity of uplink slots capable of being scheduled or transmitted of the terminal, the maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window.

It should be noted that the network device can also determine at least one of the following information without depending on the second indication information sent by the terminal:
in a case that a current uplink and downlink configuration of the network device is applied, determining a maximum available output power configurable by the terminal in a case of ensuring compliance with applicable electromagnetic power density exposure requirement or the electromagnetic radiation specific absorption ratio requirement limit; or
in the case that the current uplink and downlink configuration of the network device is applied, determining at least one of a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal; or
determining first power class information of the terminal at a first working frequency band where the network device works; or
determining a maximum available output power configurable by the terminal in the first time window; or
determining at least one of a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window.

In summary, after the network device determines the capability information of the terminal based on the second indication information or the network device determines the capability information of the terminal without depending on the second indication information, the method further includes:
the network device performing an uplink resource scheduling or uplink transmission for the terminal;
where a duration of scheduled or transmitted resource is less than or equal to a maximum uplink duration capable of being scheduled or transmitted of the terminal; or
a quantity of slots of the scheduled or transmitted resource is less than or equal to a maximum quantity of uplink slots capable of being scheduled or transmitted of the terminal; or
a quantity of uplink sub-frames of the scheduled or transmitted resource is less than or equal to a maximum quantity of uplink sub-frames capable of being scheduled or transmitted of the terminal; or
a quantity of uplink symbols of the scheduled or transmitted resource is less than or equal to a maximum quantity of uplink symbols capable of being scheduled or transmitted of the terminal; or
an uplink duration percentage of the scheduled or transmitted resource is less than or equal to a maximum percentage of uplink duration capable of being scheduled or transmitted of the terminal; or
an uplink slot percentage of the scheduled or transmitted resource is less than or equal to a maximum percentage of uplink slot capable of being scheduled or transmitted of the terminal; or
an uplink sub-frame percentage of the scheduled or transmitted resource is less than or equal to a maximum percentage of uplink sub-frame capable of being scheduled or transmitted of the terminal; or
an uplink symbol percentage of the scheduled or transmitted resource is less than or equal to a maximum percentage of uplink symbol capable of being scheduled or transmitted of the terminal;
and/or, after the network device determines the capability information of the terminal based on the second indication information or the network device determines the capability information of the terminal without depending on the second indication information, the method further includes:
sending, by the network device, a power adjustment value to the terminal; where
in a case that the power adjustment value is applied to the terminal, a transmitting power of the terminal is less than or equal to a maximum available output power configurable by the terminal; or
in the case that the power adjustment value is applied to the terminal, the transmitting power of the terminal is less than or equal to a transmitting power value corresponding to a first power class of the terminal at a first working frequency band; or
in the case that the power adjustment value is applied to the terminal, the transmitting power of the terminal is less than or equal to the maximum available output power configurable by the terminal in a case that the current uplink and downlink configuration of the network device is applied.

In summary, according to the above embodiments of the present disclosure, the network device sends first indication information to the terminal, and the network device or the terminal may adjust the power or resources of the terminal in a case that the regional SAR limit requirements are satisfied, without restricting the uplink resource configuration of the high-power terminal, so that the high-power terminal may be used in more scenarios.

As shown in FIG. 2, an information transmission method applied to a terminal is further provided in an embodiment of the present disclosure, including:
Step 201: receiving first indication information sent by a network device, where the first indication information includes at least one of:
location area identity information of the network device;
information of current uplink and downlink configuration of the network device;
specific absorption ratio limit information, including: an applicable electromagnetic power density exposure requirement, an electromagnetic radiation specific absorption ratio requirement limit, an applicable electromagnetic power density exposure requirement identity or an electromagnetic radiation specific absorption ratio requirement limit identity;
uplink resource control information, including at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbols capable of being scheduled or transmitted of the terminal, a maximum quantity of uplink slots capable of being scheduled or transmitted of the terminal, a maximum percentage of uplink duration capable of being scheduled or transmitted of the terminal, a maximum percentage of uplink slot capable of being scheduled or transmitted of the terminal, a maximum percentage of uplink sub-frame capable of being scheduled or transmitted of the terminal and a maximum percentage of uplink symbol capable of being scheduled or transmitted of the terminal in the first time window; and
first time window configuration information configured to indicate a duration of a first time window.

Optionally, the current uplink and downlink configuration information of the network device includes: current uplink and downlink slot configuration information of the network device or current uplink and downlink sub-frame configuration information of the network device.

The specific absorption ratio limit information is the specific absorption ratio limit information of the country where the network device is located or the operator to which it belongs. The specific absorption ratio limit information can be the applicable electromagnetic power density exposure requirement or the electromagnetic radiation specific absorption ratio requirement limit, e.g., 2.0w/kg; or the specific absorption ratio limit information may also be the applicable electromagnetic power density exposure requirement identity or electromagnetic radiation specific absorption ratio requirement limit identity, e.g., standard 1 (corresponding to 2.0w/kg), standard 2 (corresponding to 1.6w/kg), etc., and the terminal and network device may determine the unique applicable electromagnetic power density exposure requirement or electromagnetic radiation specific absorption ratio requirement limit according to the applicable electromagnetic power density exposure requirement identity or electromagnetic radiation specific absorption ratio requirement limit identity.

Optionally, in the above embodiment of the present disclosure, Step 201 includes:

Optionally, in the embodiment of the present disclosure, Step 201 includes:
receiving the first indication information which is sent by the network device through broadcast information, e.g., SIB1 (system information block 1), where this method is suitable for cell selection or reselection, and is used before the terminal accesses the base station;
or receiving the first indication information which is sent by the network device through a dedicated signaling; for example, send through a RRC Connection Reconfiguration or RRC Connection Setup or a Radio Resource Config Common, where this method is suitable for, when sub-carriers or sub-cells (carrier aggregation or dual connectivity) are added, the network device to inform the terminal of the relevant configuration information of the new added sub-carriers or sub-cells. For another example, it is used when sending the first RRC reconfiguration signaling (Mobility Control Info) to notify the terminal of the relevant configuration information of the target cell.

Further, Step 201 includes:
receiving the first indication information which is sent by the network device at a first working frequency band where the network device works.

For example, the terminal supports band 41 power class 2 (power class 2) 26dBm operation, at this time the first working frequency band where the network device works is band 41 frequency band.

Optionally, in the embodiment of the present disclosure, in a case where the first indication information includes the first time window configuration information, the first time window includes at least one frame structure period; or the first time window includes at least one slot; or the first time window includes at least one sub-frame; or the first time window includes at least one symbol; or the first time window includes at least one millisecond.

Optionally, the first time window is a predefined evaluation period;
the first time window is a time reference for the terminal to evaluate whether the applicable electromagnetic power density exposure requirement or the electromagnetic radiation specific absorption ratio requirement limit is met; or
the first time window is a time range of a maximum available uplink resource of the terminal in a case that the terminal evaluates that the applicable electromagnetic power density exposure requirement or the electromagnetic radiation specific absorption ratio requirement limit is met; or
the first time window is a time range of a maximum available output power configurable by the terminal in the case that the terminal evaluates that the applicable electromagnetic power density exposure requirement or the electromagnetic radiation specific absorption ratio requirement limit is met.

Further, in the above embodiment of the present disclosure, after Step 201, the method further includes:
reporting second indication information to the network device according to the first indication information, where the second indication information includes at least one of:
available uplink and downlink configuration information of the terminal (available uplink and downlink slot configuration information of the terminal or available uplink and downlink sub-frame configuration information of the terminal), in a case of ensuring compliance with applicable electromagnetic power density exposure requirement or the electromagnetic radiation specific absorption ratio requirement limit;
at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
first power class information of the terminal at a first working frequency band where the network device works; and
maximum available output powers configurable by the terminal corresponding to different uplink and downlink configurations, in the case that the applicable electromagnetic power density exposure requirement or the electromagnetic radiation specific absorption ratio requirement limit is met.

In the above embodiment of the present disclosure, after Step 201, the method further includes:
reporting second indication information to the network device, where the second indication information includes at least one of:
available uplink and downlink configuration information of the terminal (available uplink and downlink slot configuration information of the terminal or available uplink and downlink sub-frame configuration information of the terminal), in a case of ensuring compliance with applicable electromagnetic power density exposure requirement or the electromagnetic radiation specific absorption ratio requirement limit;
at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
first power class information of the terminal at a first working frequency band where the network device works; and
maximum available output powers configurable by the terminal corresponding to different uplink and downlink configurations, in the case that the applicable electromagnetic power density exposure requirement or the electromagnetic radiation specific absorption ratio requirement limit is met.
In the above embodiment of the present disclosure, after receiving the first indication information, the terminal feeds back second indication information to the network device according to the first indication information, and the second indication information includes at least one of the foregoing information.

Further, in the above embodiments of the present disclosure, the method further includes:
prior to reporting the second indication information to the network device, sending, to the network device, second power class information of the terminal at the first working frequency band where the network device works;
where a transmitting power corresponding to the second power class information is larger than a transmitting power corresponding to the first power class information.

Further, in a case that the current uplink and downlink configuration of the network device is applied and the terminal determines that the applicable electromagnetic power density exposure requirement or the electromagnetic radiation specific absorption ratio requirement limit is not met, the second power class information of the terminal at the first working frequency band where the network device works is sent to the network device.

For example, the terminal supports band 41 power class 2 26dBm operation, which is the first power class, but if the ratio of the uplink and downlink slots indicated in the uplink and downlink slot configuration configured by the network side is 4: 1, when the ratio of the uplink and downlink slots is configured in the standard, the terminal of power class 2 cannot meet the SAR value requirement. Therefore, when the terminal reports the capability information to the network side, the power class in band 41 will be degraded and reported, e.g., power class 3 23dBm is reported, i.e., the second power class, the network side will use the corresponding index of power class 3 for processing when performing the power control and scheduling.

Following the above example, in the above embodiment of the present disclosure, in a case that the first indication information includes the location area identity information of the network device, the method further includes:
determining, according to a country identity in the location area identity information of the network device, a country where the network device is located, and acquiring the applicable electromagnetic power density exposure requirement or the electromagnetic radiation specific absorption ratio requirement limit corresponding to the country; or
determining, according to a country identity and an operator identity in the location area identity information of the network device, a country and an operator where the network device is located, and acquiring the applicable electromagnetic power density exposure requirement or the electromagnetic radiation specific absorption ratio requirement limit corresponding to the country and the operator.

That is, the terminal determines the applicable electromagnetic power density exposure requirement or electromagnetic radiation specific absorption ratio requirement limit of the country or country and the operator where the network device is located and belong to, and the applicable electromagnetic power density exposure requirement or electromagnetic radiation specific absorption ratio requirement limit is defined in the standard, or pre-stored in the terminal, or determined according to the specific absorption ratio limit information in the first indication information.

The terminal determining the country or country where the network device is located and the operator to which it belongs includes: the terminal determining the country where the network device is located according to the country identification code in the first indication information; or the terminal determining country where the network device is located and the operator to which it belongs according to the country identification code and operator identification code in the first indication information.

Further, in the above embodiment of the present disclosure, the reporting the second indication information to the network device according to the first indication information includes:
in a case that a second power class of the terminal at the first working frequency band where the network device works does not meet the applicable electromagnetic power density exposure requirement or the electromagnetic radiation specific absorption ratio requirement limit, sending the second indication information to the network device; or
in a case that the terminal with the current uplink and downlink configuration of the network device does not meet the applicable electromagnetic power density exposure requirement or the electromagnetic radiation specific absorption ratio requirement limit, sending the second indication information to the network device; or
in a case that a duration of scheduled or transmitted resource of the terminal is greater than the maximum uplink duration capable of being scheduled or transmitted of the terminal in the first time window, sending the second indication information to the network device; or
in a case that a quantity of slots of scheduled or transmitted resource of the terminal is greater than the maximum quantity of uplink slots capable of being scheduled or transmitted of the terminal in the first time window, sending the second indication information to the network device; or
in a case that a quantity of uplink sub-frames of scheduled or transmitted resource of the terminal is greater than the maximum quantity of uplink sub-frames capable of being scheduled or transmitted of the terminal in the first time window, sending the second indication information to the network device; or
in a case that a quantity of uplink symbols of scheduled or transmitted resource of the terminal is greater than the maximum quantity of uplink symbols capable of being scheduled or transmitted of the terminal in the first time window, sending the second indication information to the network device; or
in a case that an uplink duration percentage of scheduled or transmitted resource of the terminal is greater than the maximum percentage of uplink duration capable of being scheduled or transmitted of the terminal in the first time window, sending the second indication information to the network device; or
in a case that an uplink slot percentage of scheduled or transmitted resource of the terminal is greater than the maximum percentage of uplink slot capable of being scheduled or transmitted of the terminal in the first time window, sending the second indication information to the network device; or
in a case that an uplink sub-frame percentage of scheduled or transmitted resource of the terminal is greater than the maximum percentage of uplink sub-frame capable of being scheduled or transmitted of the terminal in the first time window, sending the second indication information to the network device; or
in a case that an uplink symbol percentage of scheduled or transmitted resource of the terminal is greater than the maximum percentage of uplink symbol capable of being scheduled or transmitted of the terminal in the first time window, sending the second indication information to the network device; or
sending the second indication information to the network device according to the specific absorption ratio limit information.

Optionally, in the above embodiment of the present disclosure, the reporting the second indication information to the network device includes: in a case that a second power class of the terminal at the first working frequency band where the network device works does not meet the applicable electromagnetic power density exposure requirement or the electromagnetic radiation specific absorption ratio requirement limit, sending the second indication information to the network device; or in a case that the terminal with the current uplink and downlink configuration of the network device does not meet the applicable electromagnetic power density exposure requirement or the electromagnetic radiation specific absorption ratio requirement limit, sending the second indication information to the network device; or in a case that a duration of scheduled or transmitted resource of the terminal is greater than the maximum uplink duration capable of being scheduled or transmitted of the terminal in the first time window, sending the second indication information to the network device; or in a case that a quantity of slots of scheduled or transmitted resource of the terminal is greater than the maximum quantity of uplink slots capable of being scheduled or transmitted of the terminal in the first time window, sending the second indication information to the network device; or in a case that a quantity of uplink sub-frames of scheduled or transmitted resource of the terminal is greater than the maximum quantity of uplink sub-frames capable of being scheduled or transmitted of the terminal in the first time window, sending the second indication information to the network device; or in a case that a quantity of uplink symbols of scheduled or transmitted resource of the terminal is greater than the maximum quantity of uplink symbols capable of being scheduled or transmitted of the terminal in the first time window, sending the second indication information to the network device; or in a case that an uplink duration percentage of scheduled or transmitted resource of the terminal is greater than the maximum percentage of uplink duration capable of being scheduled or transmitted of the terminal in the first time window, sending the second indication information to the network device; or in a case that an uplink slot percentage of scheduled or transmitted resource of the terminal is greater than the maximum percentage of uplink slot capable of being scheduled or transmitted of the terminal in the first time window, sending the second indication information to the network device; or in a case that an uplink sub-frame percentage of scheduled or transmitted resource of the terminal is greater than the maximum percentage of uplink sub-frame capable of being scheduled or transmitted of the terminal in the first time window, sending the second indication information to the network device; or in a case that an uplink symbol percentage of scheduled or transmitted resource of the terminal is greater than the maximum percentage of uplink symbol capable of being scheduled or transmitted of the terminal in the first time window, sending the second indication information to the network device; or sending the second indication information to the network device according to the specific absorption ratio limit information.

It should be noted that in the above embodiment of the present disclosure, after the terminal reports the second indication information to the network device, the network device may determine the capability information of the terminal based on the second indication information, and perform the resource scheduling and/or power adjustment on the terminal based on the capability information of the terminal. The specific manner in which the network device performs resource scheduling and/or power adjustment of the terminal has been described in detail in the information transmission method applied to the network device, and the description is not repeated here.

It should be noted that, in another embodiment of the present disclosure, after the terminal receives the first indication information, the method further includes:
determining, according to the first indication information, at least one of:
in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal;
in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit; and
the maximum available output powers configurable by the terminal in different uplink and downlink configurations, in the case that the applicable electromagnetic power density exposure requirement or the electromagnetic radiation specific absorption ratio requirement limit is met.

Based on the foregoing information determined by the terminal, the method further includes:
reconfiguring a maximum available output power of the terminal, or controlling the terminal to perform a power back-off, or prohibiting a transmission of at least one piece of uplink information of the terminal; where the uplink information includes: an uplink slot, or an uplink sub-frame, or an uplink symbol.

Further, the controlling the terminal to perform the power back-off includes:
determining the maximum available output power configurable by the terminal according to the first indication information, or determining the maximum available output power configurable by the terminal in a case that the current uplink and downlink configuration of the network device is applied;
in a case that a power of the terminal configured by a network device power control is greater than the maximum available output power configurable by the terminal, performing the power back-off, and controlling the power of the control terminal to back to be less than or equal to the maximum available output power configurable by the terminal.

Optionally, a back-off value of the power back-off is equal to the power configured for the terminal by the network device minus the maximum available output power configurable by the terminal.

That is, the terminal determines that, in a case that the current uplink and downlink configuration information of the network device included in the first indication information is applied and the terminal of the first power class in the first working frequency band meets the SAR limit of the country where the network device is located or the operator which it belongs to, the maximum available output power PSAR_max configurable by the terminal, which is defined in the standard or pre-stored in the terminal. When the terminal power value P configured by the network device exceeds PSAR_max, P is set to PSAR_max, and the power back-off value of the terminal is P-PSAR_max.

Optionally, the prohibiting the transmission of the at least one piece of uplink information of the terminal includes:
in a case of ensuring compliance with applicable electromagnetic power density exposure requirement or the electromagnetic radiation specific absorption ratio requirement limit, determining, according to the first indication information, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal;
in a case that an uplink duration scheduled by the network device for the terminal is greater than the maximum uplink duration capable of being scheduled or transmitted of the terminal or in a case that an uplink duration percentage scheduled by the network device for the terminal is greater than the maximum percentage of uplink duration capable of being scheduled or transmitted of the terminal, prohibiting a data transmission on at least one uplink time unit; or
in a case that a resource quantity of uplink slots scheduled by the network device for the terminal is greater than a maximum resource quantity of uplink slots capable of being scheduled or transmitted of the terminal or in a case that an uplink slot percentage scheduled by the network device for the terminal is greater than the maximum percentage of uplink slot capable of being scheduled or transmitted of the terminal, prohibiting a data transmission on a resource of at least one uplink slot; or
in a case that a resource quantity of uplink sub-frames scheduled by the network device for the terminal is greater than the maximum quantity of uplink sub-frames capable of being scheduled or transmitted of the terminal or in a case that an uplink sub-frame percentage scheduled by the network device for the terminal is greater than the maximum percentage of uplink sub-frame capable of being scheduled or transmitted of the terminal, prohibiting a data transmission on a resource of at least one uplink sub-frame; or
in a case that a resource quantity of uplink symbols scheduled by the network device for the terminal is greater than the maximum quantity of uplink symbols capable of being scheduled or transmitted of the terminal or in a case that an uplink symbol percentage scheduled by the network device for the terminal is greater than the maximum percentage of uplink symbol capable of being scheduled or transmitted of the terminal, prohibiting a data transmission on a resource of at least one uplink symbol.

Optionally, the method further includes:
in a case that a duration of scheduled or transmitted resource of the terminal is greater than the maximum uplink duration capable of being scheduled or transmitted of the terminal in the first time window, reconfiguring, by the terminal, a maximum available output power of the terminal or performing a power back-off by the terminal; or
in a case that a quantity of slots of scheduled or transmitted resource of the terminal is greater than the maximum quantity of uplink slots capable of being scheduled or transmitted of the terminal in the first time window, reconfiguring, by the terminal, a maximum available output power of the terminal or performing a power back-off by the terminal; or
in a case that a quantity of uplink sub-frames of scheduled or transmitted resource of the terminal is greater than the maximum quantity of uplink sub-frames capable of being scheduled or transmitted of the terminal in the first time window, reconfiguring, by the terminal, a maximum available output power of the terminal or performing a power back-off by the terminal; or
in a case that a quantity of uplink symbols of scheduled or transmitted resource of the terminal is greater than the maximum quantity of uplink symbols capable of being scheduled or transmitted of the terminal in the first time window, reconfiguring, by the terminal, a maximum available output power of the terminal or performing a power back-off by the terminal; or
in a case that an uplink duration percentage of scheduled or transmitted resource of the terminal is greater than the maximum percentage of uplink duration capable of being scheduled or transmitted of the terminal in the first time window, reconfiguring, by the terminal, a maximum available output power of the terminal or performing a power back-off by the terminal; or
in a case that an uplink slot percentage of scheduled or transmitted resource of the terminal is greater than the maximum percentage of uplink slot capable of being scheduled or transmitted of the terminal in the first time window, reconfiguring, by the terminal, a maximum available output power of the terminal or performing a power back-off by the terminal; or
in a case that an uplink sub-frame percentage of scheduled or transmitted resource of the terminal is greater than the maximum percentage of uplink sub-frame capable of being scheduled or transmitted of the terminal in the first time window, reconfiguring, by the terminal, a maximum available output power of the terminal or performing a power back-off by the terminal; or
in a case that an uplink symbol percentage of scheduled or transmitted resource of the terminal is greater than the maximum percentage of uplink symbol capable of being scheduled or transmitted of the terminal in the first time window, reconfiguring, by the terminal, a maximum available output power of the terminal or performing a power back-off by the terminal.

Optionally, one or more of the maximum uplink duration capable of being scheduled or transmitted of the terminal, the maximum quantity of uplink slots capable of being scheduled or transmitted of the terminal, the maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal is determined by the terminal according to uplink resource control information in the first indication information; or
one or more of the maximum uplink duration capable of being scheduled or transmitted of the terminal, the maximum quantity of uplink slots capable of being scheduled or transmitted of the terminal, the maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal is predefined in a criterion.

Optionally, the method further includes:
reporting a reconfigured maximum available output power of the terminal to the network device; or
in a case that scheduled uplink resource of the terminal in the first time window exceeds a first threshold, after the terminal performs the power back-off, a power value of the terminal is less than or equal to a maximum available output power configurable by the terminal.

Specifically, the method further includes:
determining the first threshold according to the first indication information, where the first threshold is the maximum quantity of uplink time domain resources that can be scheduled or transmitted by the terminal within the first time window.

To sum up, according to the above embodiments of the present disclosure, after receiving the first indication information, the terminal may reconfigure the maximum available output power of the terminal based on the first indication information or control the terminal to perform the power back-off or prohibit the transmission of at least one uplink information of the terminal; or after receiving the first indication information, the terminal sends second indication information to the network device based on the first indication information, and the network device may perform the resource scheduling and/or power adjustment on the terminal based on the second indication information. That is, the network device or terminal may adjust the power or resources of the terminal while ensuring that the regional SAR limit requirement is met, without restricting the uplink resource configuration of the high-power terminal, so that the high-power terminal may be used in more scenarios.

### Example one

As shown in FIG. 3, the interaction process between the network device and the terminal includes:
Step 31: the network device sends first indication information;
Step 32: the terminal sends second indication information to the network device;
Step 33: the network device performs the resource scheduling or power adjustment on the terminal according to the second indication information.

It should be noted that the content and transmission method included in the first indication information in Example 1, the content and transmission method included in the second indication information and how the network device performs resource scheduling or power adjustment on the terminal according to the second indication information correspond to the description in the above embodiment, which will not be repeated here.

### Example two

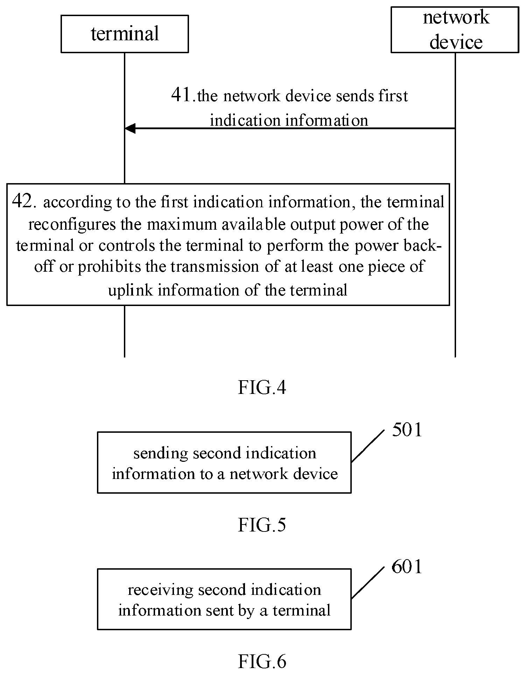

As shown in FIG. 4, the interaction process between the network device and the terminal includes:
Step 41: the network device sends first indication information;
Step 42: according to the first indication information, the terminal reconfigures the maximum available output power of the terminal or controls the terminal to perform the power back-off or prohibits the transmission of at least one piece of uplink information of the terminal.

It should be noted that the content and transmission method of the first indication information in Example 2 and how the terminal reconfigures the maximum available output power of the terminal or controls the terminal to perform power back-off or prohibit transmission of at least one piece of uplink information of the terminal according to the first indication information correspond to the description in the above embodiment, and the details thereof are not repeated here.

As shown in FIG. 5, an information transmission method is further provided in an embodiment of the present disclosure, which is applied to a terminal, and the method includes:
Step 501: sending second indication information to a network device.
where the second indication information includes at least one of:
   available uplink and downlink configuration information of the terminal (available uplink and downlink slot configuration information of the terminal or available uplink and downlink sub-frame configuration information of the terminal), in a case of ensuring compliance with applicable electromagnetic power density exposure requirement or the electromagnetic radiation specific absorption ratio requirement limit;
   in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
   in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
   first power class information of the terminal at a first working frequency band where the network device works; and
   the maximum available output powers configurable by the terminal corresponding to different uplink and downlink configurations, in the case that the applicable electromagnetic power density exposure requirement or the electromagnetic radiation specific absorption ratio requirement limit is met.

Optionally, in the above embodiment of the present disclosure, the first time window includes: the first time window includes at least one frame structure period; or the first time window includes at least one slot; or the first time window includes at least one sub-frame; or the first time window includes at least one symbol; or the first time window includes at least one millisecond.

Optionally, the first time window is a predefined evaluation period;
the first time window is a time range for the terminal to evaluate whether the applicable electromagnetic power density exposure requirement or the electromagnetic radiation specific absorption ratio requirement limit is met; or
the first time window is a time range of a maximum available uplink resource of the terminal in a case that the terminal evaluates that the applicable electromagnetic power density exposure requirement or the electromagnetic radiation specific absorption ratio requirement limit is met; or
the first time window is a time range of a maximum available output power configurable by the terminal in the case that the terminal evaluates that the applicable electromagnetic power density exposure requirement or the electromagnetic radiation specific absorption ratio requirement limit is met.

Further, in the above embodiments of the present disclosure, the method further includes:
prior to sending the second indication information to the network device, sending, to the network device, second power class information of the terminal at the first working frequency band where the network device works;
where a transmitting power corresponding to the second power class information is larger than a transmitting power corresponding to the first power class information.

Further, in the above embodiment of the present disclosure, the sending to the network device the second power class information of the terminal at the first working frequency band where the network device works includes:
in a case that the current uplink and downlink configuration of the network device is applied and the terminal determines that the applicable electromagnetic power density exposure requirement or the electromagnetic radiation specific absorption ratio requirement limit is not met, sending, to the network device, the second power class information of the terminal at the first working frequency band where the network device works.

For example, the terminal supports band 41 power class 2 26dBm operation, which is the first power class, but if the ratio of the uplink and downlink slots indicated in the uplink and downlink slot configuration configured by the network side is 4:1, when the ratio of the uplink and downlink slots is configured in the standard, the terminal of power class 2 cannot meet the SAR value requirement. Therefore, when the terminal reports the capability information to the network side, the power class in band 41 will be degraded and reported, e.g., power class 3 23dBm is reported, i.e., the second power class, the network side will use the corresponding index of power class 3 for processing when performing the power control and scheduling.

Further, in the above embodiments of the present disclosure, the method further includes:
reporting a power headroom by the terminal, where the power headroom is based on the maximum available output power configurable by the terminal in a case of ensuring compliance with applicable electromagnetic power density exposure requirement or the electromagnetic radiation specific absorption ratio requirement limit.

To sum up, according to the above embodiments of the present disclosure, the terminal actively reports the second indication information (equivalent to the capability information of the terminal) to the network device, and the network device may, according to the second indication information reported by the terminal, adjust the power or resources of the terminal in a case that the regional SAR value requirements are satisfied, without restricting the uplink resource configuration of the high-power terminal, so that the high-power terminal may be used in more scenarios.

As shown in FIG. 6, an information transmission method is further provided in an embodiment of the present disclosure, which is applied to a network device, and the method includes:
Step 601: receiving second indication information sent by a terminal,
where the second indication information includes at least one of:
   available uplink and downlink configuration information of the terminal, in a case of ensuring compliance with applicable electromagnetic power density exposure requirement or the electromagnetic radiation specific absorption ratio requirement limit;
   in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
   in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
   first power class information of the terminal at a first working frequency band where the network device works; and
   the maximum available output powers configurable by the terminal corresponding to different uplink and downlink configurations, in the case that the applicable electromagnetic power density exposure requirement or the electromagnetic radiation specific absorption ratio requirement limit is met.

Optionally, in the above embodiment of the present disclosure, the first time window includes: the first time window includes at least one frame structure period; or the first time window includes at least one slot; or the first time window includes at least one sub-frame; or the first time window includes at least one symbol; or the first time window includes at least one millisecond.

Optionally, the first time window is a predefined evaluation period;
the first time window is a time range for the terminal to evaluate whether the applicable electromagnetic power density exposure requirement or the electromagnetic radiation specific absorption ratio requirement limit is met; or
the first time window is a time range of a maximum available uplink resource of the terminal in a case that the terminal evaluates that the applicable electromagnetic power density exposure requirement or the electromagnetic radiation specific absorption ratio requirement limit is met; or
the first time window is a time range of a maximum available output power configurable by the terminal in the case that the terminal evaluates that the applicable electromagnetic power density exposure requirement or the electromagnetic radiation specific absorption ratio requirement limit is met.

Further, in the above embodiments of the present disclosure, the method further includes:
prior to receiving the second indication information sent by the terminal, receiving second power class information of the terminal at the first working frequency band where the network device works which is sent by the terminal;
where a transmitting power corresponding to the second power class information is larger than a transmitting power corresponding to the first power class information.

Specifically, the receiving the second power class information of the terminal at the first working frequency band where the network device works which is sent by the terminal includes:
in a case that the current uplink and downlink configuration of the network device is applied and the terminal determines that the applicable electromagnetic power density exposure requirement or the electromagnetic radiation specific absorption ratio requirement limit is not met, receiving the second power class information of the terminal at the first working frequency band where the network device works which is sent by the terminal.

For example, the terminal supports band 41 power class 2 26dBm operation, which is the first power class, but if the ratio of the uplink and downlink slots indicated in the uplink and downlink slot configuration configured by the network side is 4:1, when the ratio of the uplink and downlink slots is configured in the standard, the terminal of power class 2 cannot meet the SAR value requirement. Therefore, when the terminal reports the capability information to the network side, the power class in band 41 will be degraded and reported, e.g., power class 3 23dBm is reported, i.e., the second power class, the network side will use the corresponding index of power class 3 for processing when performing the power control and scheduling..

Further, in the above embodiments of the present disclosure, the method further includes:
receiving a power headroom reported by the terminal, where the power headroom is based on the maximum available output power configurable by the terminal in a case of ensuring compliance with applicable electromagnetic power density exposure requirement or the electromagnetic radiation specific absorption ratio requirement limit.

Further, the network device can perform the resource scheduling or power adjustment on the terminal based on the second indication information. Specifically, the method further includes:
the network device performing an uplink resource scheduling or an uplink transmission for the terminal;
a duration of scheduled or transmitted resource is less than or equal to the maximum uplink duration capable of being scheduled or transmitted of the terminal in the first time window; or
a quantity of slots of scheduled or transmitted resource is less than or equal to the maximum quantity of uplink slots capable of being scheduled or transmitted of the terminal in the first time window,; or
a quantity of uplink sub-frames of scheduled or transmitted resource is less than or equal to the maximum quantity of uplink sub-frames capable of being scheduled or transmitted of the terminal in the first time window; or
a quantity of uplink symbols of scheduled or transmitted resource is less than or equal to the maximum quantity of uplink symbols capable of being scheduled or transmitted of the terminal in the first time window; or
an uplink duration percentage of scheduled or transmitted resource is less than or equal to the maximum percentage of uplink duration capable of being scheduled or transmitted of the terminal in the first time window; or
an uplink slot percentage of scheduled or transmitted resource is less than or equal to the maximum percentage of uplink slot capable of being scheduled or transmitted of the terminal in the first time window; or
an uplink sub-frame percentage of scheduled or transmitted resource is less than or equal to the maximum percentage of uplink sub-frame capable of being scheduled or transmitted of the terminal in the first time window; or
an uplink symbol percentage of scheduled or transmitted resource is less than or equal to the maximum percentage of uplink symbol capable of being scheduled or transmitted of the terminal in the first time window;
and/or, in the above embodiment of the present disclosure, the method further includes:
sending, by the network device, a power adjustment value to the terminal; where
in a case that the power adjustment value is applied to the terminal, a transmitting power of the terminal is less than or equal to a maximum available output power configurable by the terminal; or
in the case that the power adjustment value is applied to the terminal, the transmitting power of the terminal is less than or equal to a transmitting power value corresponding to a first power class of the terminal at a first working frequency band; or
in the case that the power adjustment value is applied to the terminal, the transmitting power of the terminal is less than or equal to the maximum available output power configurable by the terminal in a case that the current uplink and downlink configuration of the network device is applied.

### Example 3

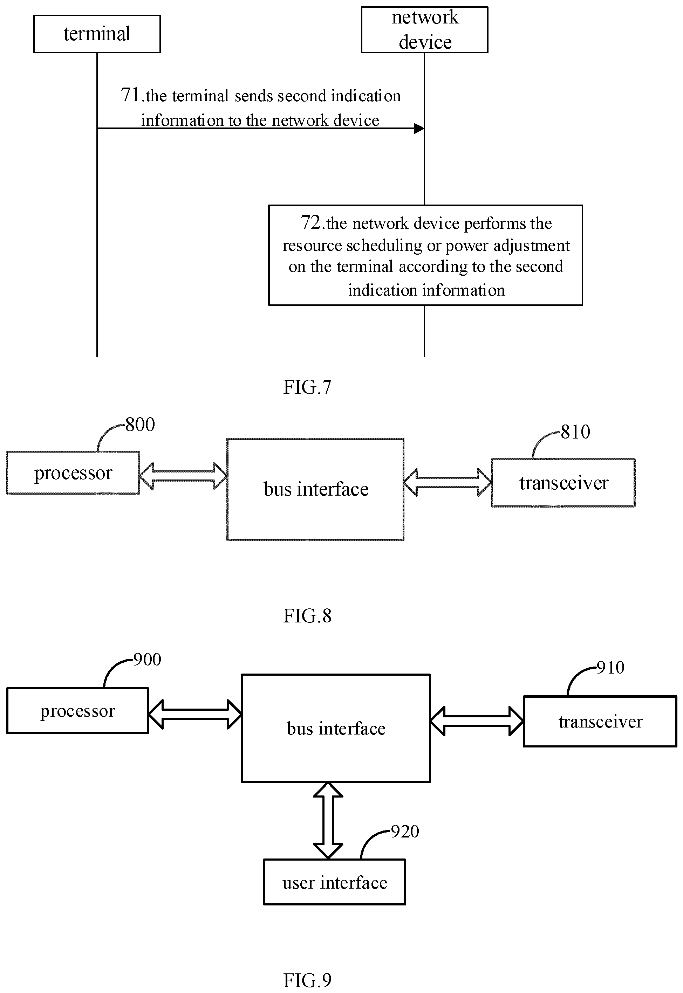

As shown in FIG. 7, the interaction process between the network device and the terminal includes:
Step 71: the terminal sends second indication information to the network device.
Step 72: the network device performs the resource scheduling or power adjustment on the terminal according to the second indication information.

To sum up, according to the above embodiments of the present disclosure, the terminal actively reports the second indication information (equivalent to the capability information of the terminal) to the network device, and the network device may, according to the second indication information reported by the terminal, adjust the power or resources of the terminal in a case that the regional SAR value requirements are satisfied, without restricting the uplink resource configuration of the high-power terminal, so that the high-power terminal may be used in more scenarios.

As shown in FIG. 8, a network device is further provided in an embodiment of the present disclosure, including a processor 800 and a transceiver 810, where the processor 800 is configured to control the transceiver to:
send first indication information to a terminal, where the first indication information includes at least one of:
location area identity information of the network device;
information of current uplink and downlink configuration of the network device;
specific absorption ratio limit information, including: an applicable electromagnetic power density exposure requirement, an electromagnetic radiation specific absorption ratio requirement limit, an applicable electromagnetic power density exposure requirement identity or an electromagnetic radiation specific absorption ratio requirement limit identity;
uplink resource control information, including at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbols capable of being scheduled or transmitted of the terminal, a maximum quantity of uplink slots capable of being scheduled or transmitted of the terminal, a maximum percentage of uplink duration capable of being scheduled or transmitted of the terminal, a maximum percentage of uplink slot capable of being scheduled or transmitted of the terminal, a maximum percentage of uplink sub-frame capable of being scheduled or transmitted of the terminal and a maximum percentage of uplink symbol capable of being scheduled or transmitted of the terminal in the first time window; and
first time window configuration information configured to indicate a duration of a first time window.

Optionally, the transceiver 810 is further configured to:
send the first indication information to the terminal through broadcast information; or
send the first indication information to the terminal through a dedicated signaling.

Optionally, the transceiver 810 is further configured to:
send the first indication information to the terminal at a first working frequency band where the network device works.

Optionally, the first time window includes at least one frame structure period; or
the first time window includes at least one slot; or
the first time window includes at least one sub-frame; or,
the first time window includes at least one symbol; or
the first time window includes at least one millisecond.

Optionally, the first time window is a predefined evaluation period;
the first time window is a time reference for the terminal to evaluate whether the applicable electromagnetic power density exposure requirement or the electromagnetic radiation specific absorption ratio requirement limit is met; or
the first time window is a time range of a maximum available uplink resource of the terminal in a case that the terminal evaluates that the applicable electromagnetic power density exposure requirement or the electromagnetic radiation specific absorption ratio requirement limit is met; or
the first time window is a time range of a maximum available output power configurable by the terminal in the case that the terminal evaluates that the applicable electromagnetic power density exposure requirement or the electromagnetic radiation specific absorption ratio requirement limit is met.

The transceiver 810 is further configured to acquire second indication information reported by the terminal,
where the second indication information includes at least one of:
available uplink and downlink configuration information of the terminal, in a case of ensuring compliance with applicable electromagnetic power density exposure requirement or the electromagnetic radiation specific absorption ratio requirement limit;
in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
first power class information of the terminal at a first working frequency band where the network device works; and
the maximum available output powers configurable by the terminal corresponding to different uplink and downlink configurations, in the case that the applicable electromagnetic power density exposure requirement or the electromagnetic radiation specific absorption ratio requirement limit is met.

Optionally, the transceiver 810 is further configured to: prior to acquiring the second indication information, acquire second power class information of the terminal at the first working frequency band where the network device works;
where a transmitting power corresponding to the second power class information is larger than a transmitting power corresponding to the first power class information.

Optionally, the processor 800 is further configured to:
in a case that a current uplink and downlink configuration of the network device is applied, determine a maximum available output power configurable by the terminal in a case of ensuring compliance with applicable electromagnetic power density exposure requirement or the electromagnetic radiation specific absorption ratio requirement limit; or
in the case that the current uplink and downlink configuration of the network device is applied, determine at least one of a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal; or
determine first power class information of the terminal at a first working frequency band where the network device works; or
determine a maximum available output power configurable by the terminal in the first time window; or
determine at least one of a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window.

Optionally, the processor 800 is further configured to:
determine the maximum available output power configurable by the terminal in the first time window, according to the second indication information reported by the terminal; or
determine the first power class information of the terminal at a first working frequency band where the network device works, according to the second indication information reported by the terminal; or
determine, according to the second indication information reported by the terminal, at least one of the maximum uplink duration capable of being scheduled or transmitted of the terminal, the maximum quantity of uplink slots capable of being scheduled or transmitted of the terminal, the maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window.

Optionally, the processor 800 is further configured to:
perform an uplink resource scheduling or uplink transmission for the terminal;
where a duration of scheduled or transmitted resource is less than or equal to a maximum uplink duration capable of being scheduled or transmitted of the terminal; or
a quantity of slots of the scheduled or transmitted resource is less than or equal to a maximum quantity of uplink slots capable of being scheduled or transmitted of the terminal; or
a quantity of uplink sub-frames of the scheduled or transmitted resource is less than or equal to a maximum quantity of uplink sub-frames capable of being scheduled or transmitted of the terminal; or
a quantity of uplink symbols of the scheduled or transmitted resource is less than or equal to a maximum quantity of uplink symbols capable of being scheduled or transmitted of the terminal; or
an uplink duration percentage of the scheduled or transmitted resource is less than or equal to a maximum percentage of uplink duration capable of being scheduled or transmitted of the terminal; or
an uplink slot percentage of the scheduled or transmitted resource is less than or equal to a maximum percentage of uplink slot capable of being scheduled or transmitted of the terminal; or
an uplink sub-frame percentage of the scheduled or transmitted resource is less than or equal to a maximum percentage of uplink sub-frame capable of being scheduled or transmitted of the terminal; or
an uplink symbol percentage of the scheduled or transmitted resource is less than or equal to a maximum percentage of uplink symbol capable of being scheduled or transmitted of the terminal.

Optionally, the processor 800 is further configured to:
send a power adjustment value to the terminal; where
in a case that the power adjustment value is applied to the terminal, a transmitting power of the terminal is less than or equal to a maximum available output power configurable by the terminal; or
in the case that the power adjustment value is applied to the terminal, the transmitting power of the terminal is less than or equal to a transmitting power value corresponding to a first power class of the terminal at a first working frequency band; or
in the case that the power adjustment value is applied to the terminal, the transmitting power of the terminal is less than or equal to the maximum available output power configurable by the terminal in a case that the current uplink and downlink configuration of the network device is applied.

In summary, according to the above embodiments of the present disclosure, the network device sends first indication information to the terminal, and the network device or the terminal may adjust the power or resources of the terminal in a case that the regional SAR limit requirements are satisfied, without restricting the uplink resource configuration of the high-power terminal, so that the high-power terminal may be used in more scenarios.

It should be noted that the network device provided in the embodiments of the present disclosure is a network device capable of executing the above information transmission method, and all the embodiments of the above information transmission method are applicable to the network device, and can achieve the same or similar beneficial effects..

An information transmission device is further provided in an embodiment of the present disclosure, which is applied to network device, including:
a first sending module, configured to send first indication information to a terminal, where the first indication information includes at least one of:
location area identity information of the network device;
information of current uplink and downlink configuration of the network device;
specific absorption ratio limit information, including: an applicable electromagnetic power density exposure requirement, an electromagnetic radiation specific absorption ratio requirement limit, an applicable electromagnetic power density exposure requirement identity or an electromagnetic radiation specific absorption ratio requirement limit identity;
uplink resource control information, including at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbols capable of being scheduled or transmitted of the terminal, a maximum quantity of uplink slots capable of being scheduled or transmitted of the terminal, a maximum percentage of uplink duration capable of being scheduled or transmitted of the terminal, a maximum percentage of uplink slot capable of being scheduled or transmitted of the terminal, a maximum percentage of uplink sub-frame capable of being scheduled or transmitted of the terminal and a maximum percentage of uplink symbol capable of being scheduled or transmitted of the terminal in the first time window; and
first time window configuration information configured to indicate a duration of a first time window.

In summary, according to the above embodiments of the present disclosure, the network device sends first indication information to the terminal, and the network device or the terminal may adjust the power or resources of the terminal in a case that the regional SAR limit requirements are satisfied, without restricting the uplink resource configuration of the high-power terminal, so that the high-power terminal may be used in more scenarios.

It should be noted that the information transmission device provided in the embodiments of the present disclosure is an information transmission device capable of executing the above information transmission method, and all the embodiments of the above information transmission method are applicable to the information transmission device, and can achieve the same or similar beneficial effects.

As shown in FIG. 9, a terminal is further provided in an embodiment of the present disclosure, including a processor 900 and a transceiver 910, the terminal also includes a user interface 920, and the processor 900 is configured to control the transceiver 910 to:
receive first indication information sent by a network device, where the first indication information includes at least one of:
location area identity information of the network device;
information of current uplink and downlink configuration of the network device;
specific absorption ratio limit information, including: an applicable electromagnetic power density exposure requirement, an electromagnetic radiation specific absorption ratio requirement limit, an applicable electromagnetic power density exposure requirement identity or an electromagnetic radiation specific absorption ratio requirement limit identity;
uplink resource control information, including at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbols capable of being scheduled or transmitted of the terminal, a maximum quantity of uplink slots capable of being scheduled or transmitted of the terminal, a maximum percentage of uplink duration capable of being scheduled or transmitted of the terminal, a maximum percentage of uplink slot capable of being scheduled or transmitted of the terminal, a maximum percentage of uplink sub-frame capable of being scheduled or transmitted of the terminal and a maximum percentage of uplink symbol capable of being scheduled or transmitted of the terminal in the first time window; and
first time window configuration information configured to indicate a duration of a first time window.

Optionally, the transceiver 910 is further configured to:
receive the first indication information of the network device sent by the network device through broadcast information; or
receive the first indication information of the network device sent by the network device through a dedicated signaling.

Optionally, the transceiver 910 is further configured to:
receive the first indication information which is sent by the network device at a first working frequency band where the network device works.

Optionally, the first time window includes at least one frame structure period; or
the first time window includes at least one slot; or
the first time window includes at least one sub-frame; or,
the first time window includes at least one symbol; or
the first time window includes at least one millisecond.

Optionally, the first time window is a predefined evaluation period;
the first time window is a time range for the terminal to evaluate whether the applicable electromagnetic power density exposure requirement or the electromagnetic radiation specific absorption ratio requirement limit is met; or
the first time window is a time range of a maximum available uplink resource of the terminal in a case that the terminal evaluates that the applicable electromagnetic power density exposure requirement or the electromagnetic radiation specific absorption ratio requirement limit is met; or
the first time window is a time range of a maximum available output power configurable by the terminal in the case that the terminal evaluates that the applicable electromagnetic power density exposure requirement or the electromagnetic radiation specific absorption ratio requirement limit is met.

The processor 900 is further configured to:
control the transceiver to report second indication information to the network device,
where the second indication information includes at least one of:
   available uplink and downlink configuration information of the terminal, in a case of ensuring compliance with applicable electromagnetic power density exposure requirement or the electromagnetic radiation specific absorption ratio requirement limit;
   at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
   in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
   first power class information of the terminal at a first working frequency band where the network device works; and
   maximum available output powers configurable by the terminal corresponding to different uplink and downlink configurations, in the case that the applicable electromagnetic power density exposure requirement or the electromagnetic radiation specific absorption ratio requirement limit is met.

Optionally, the transceiver 910 is further configured to:
prior to reporting the second indication information to the network device, send, to the network device, second power class information of the terminal at the first working frequency band where the network device works;
where a transmitting power corresponding to the second power class information is larger than a transmitting power corresponding to the first power class information.

Optionally, in a case that the first indication information includes the location area identity information of the network device, the processor 900 is further configured to:
determine, according to a country identity in the location area identity information of the network device, a country where the network device is located, and acquire the applicable electromagnetic power density exposure requirement or the electromagnetic radiation specific absorption ratio requirement limit corresponding to the country; or
determine, according to a country identity and an operator identity in the location area identity information of the network device, a country and an operator where the network device is located, and acquire the applicable electromagnetic power density exposure requirement or the electromagnetic radiation specific absorption ratio requirement limit corresponding to the country and the operator.

Optionally, the transceiver 910 is further configured to:
in a case that a second power class of the terminal at the first working frequency band where the network device works does not meet the applicable electromagnetic power density exposure requirement or the electromagnetic radiation specific absorption ratio requirement limit, send the second indication information to the network device; or
in a case that the terminal with the current uplink and downlink configuration of the network device does not meet the applicable electromagnetic power density exposure requirement or the electromagnetic radiation specific absorption ratio requirement limit, send the second indication information to the network device; or
in a case that a duration of scheduled or transmitted resource of the terminal is greater than the maximum uplink duration capable of being scheduled or transmitted of the terminal in the first time window, send the second indication information to the network device; or
in a case that a quantity of slots of scheduled or transmitted resource of the terminal is greater than the maximum quantity of uplink slots capable of being scheduled or transmitted of the terminal in the first time window, send the second indication information to the network device; or
in a case that a quantity of uplink sub-frames of scheduled or transmitted resource of the terminal is greater than the maximum quantity of uplink sub-frames capable of being scheduled or transmitted of the terminal in the first time window, send the second indication information to the network device; or
in a case that a quantity of uplink symbols of scheduled or transmitted resource of the terminal is greater than the maximum quantity of uplink symbols capable of being scheduled or transmitted of the terminal in the first time window, send the second indication information to the network device; or
in a case that an uplink duration percentage of scheduled or transmitted resource of the terminal is greater than the maximum percentage of uplink duration capable of being scheduled or transmitted of the terminal in the first time window, send the second indication information to the network device; or
in a case that an uplink slot percentage of scheduled or transmitted resource of the terminal is greater than the maximum percentage of uplink slot capable of being scheduled or transmitted of the terminal in the first time window, send the second indication information to the network device; or
in a case that an uplink sub-frame percentage of scheduled or transmitted resource of the terminal is greater than the maximum percentage of uplink sub-frame capable of being scheduled or transmitted of the terminal in the first time window, send the second indication information to the network device; or
in a case that an uplink symbol percentage of scheduled or transmitted resource of the terminal is greater than the maximum percentage of uplink symbol capable of being scheduled or transmitted of the terminal in the first time window, send the second indication information to the network device; or
send the second indication information to the network device according to the specific absorption ratio limit information.

Optionally, the processor 900 is further configured to:
determine, according to the first indication information, at least one of:
in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal;
in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit; and
the maximum available output powers configurable by the terminal in different uplink and downlink configurations, in the case that the applicable electromagnetic power density exposure requirement or the electromagnetic radiation specific absorption ratio requirement limit is met.

Optionally, the processor 900 is further configured to:
reconfigure a maximum available output power of the terminal, or controlling the terminal to perform a power back-off, or prohibit a transmission of at least one piece of uplink information of the terminal; where the uplink information includes: an uplink slot, or an uplink sub-frame, or an uplink symbol.

Optionally, the processor 900 is further configured to:
determine the maximum available output power configurable by the terminal according to the first indication information, or determine the maximum available output power configurable by the terminal in a case that the current uplink and downlink configuration of the network device is applied;
in a case that a power of the terminal configured by a network device power control is greater than the maximum available output power configurable by the terminal, perform the power back-off, and controlling the power of the control terminal to back to be less than or equal to the maximum available output power configurable by the terminal.

Optionally, a back-off value of the power back-off is equal to the power configured for the terminal by the network device minus the maximum available output power configurable by the terminal.

Optionally, the processor 900 is further configured to:
in a case of ensuring compliance with applicable electromagnetic power density exposure requirement or the electromagnetic radiation specific absorption ratio requirement limit, determine, according to the first indication information, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal;
in a case that an uplink duration scheduled by the network device for the terminal is greater than the maximum uplink duration capable of being scheduled or transmitted of the terminal or in a case that an uplink duration percentage scheduled by the network device for the terminal is greater than the maximum percentage of uplink duration capable of being scheduled or transmitted of the terminal, prohibit a data transmission on at least one uplink time unit; or
in a case that a resource quantity of uplink slots scheduled by the network device for the terminal is greater than a maximum resource quantity of uplink slots capable of being scheduled or transmitted of the terminal or in a case that an uplink slot percentage scheduled by the network device for the terminal is greater than the maximum percentage of uplink slot capable of being scheduled or transmitted of the terminal, prohibit a data transmission on a resource of at least one uplink slot; or
in a case that a resource quantity of uplink sub-frames scheduled by the network device for the terminal is greater than the maximum quantity of uplink sub-frames capable of being scheduled or transmitted of the terminal or in a case that an uplink sub-frame percentage scheduled by the network device for the terminal is greater than the maximum percentage of uplink sub-frame capable of being scheduled or transmitted of the terminal, prohibit a data transmission on a resource of at least one uplink sub-frame; or
in a case that a resource quantity of uplink symbols scheduled by the network device for the terminal is greater than the maximum quantity of uplink symbols capable of being scheduled or transmitted of the terminal or in a case that an uplink symbol percentage scheduled by the network device for the terminal is greater than the maximum percentage of uplink symbol capable of being scheduled or transmitted of the terminal, prohibit a data transmission on a resource of at least one uplink symbol.

Optionally, the processor 900 is further configured to:
in a case that a duration of scheduled or transmitted resource of the terminal is greater than the maximum uplink duration capable of being scheduled or transmitted of the terminal in the first time window, reconfigure a maximum available output power of the terminal or performing a power back-off by the terminal; or
in a case that a quantity of slots of scheduled or transmitted resource of the terminal is greater than the maximum quantity of uplink slots capable of being scheduled or transmitted of the terminal in the first time window, reconfigure a maximum available output power of the terminal or performing a power back-off by the terminal; or
in a case that a quantity of uplink sub-frames of scheduled or transmitted resource of the terminal is greater than the maximum quantity of uplink sub-frames capable of being scheduled or transmitted of the terminal in the first time window, reconfigure a maximum available output power of the terminal or performing a power back-off by the terminal; or
in a case that a quantity of uplink symbols of scheduled or transmitted resource of the terminal is greater than the maximum quantity of uplink symbols capable of being scheduled or transmitted of the terminal in the first time window, reconfigure a maximum available output power of the terminal or performing a power back-off by the terminal; or
in a case that an uplink duration percentage of scheduled or transmitted resource of the terminal is greater than the maximum percentage of uplink duration capable of being scheduled or transmitted of the terminal in the first time window, reconfigure a maximum available output power of the terminal or performing a power back-off by the terminal; or
in a case that an uplink slot percentage of scheduled or transmitted resource of the terminal is greater than the maximum percentage of uplink slot capable of being scheduled or transmitted of the terminal in the first time window, reconfigure a maximum available output power of the terminal or performing a power back-off by the terminal; or
in a case that an uplink sub-frame percentage of scheduled or transmitted resource of the terminal is greater than the maximum percentage of uplink sub-frame capable of being scheduled or transmitted of the terminal in the first time window, reconfigure a maximum available output power of the terminal or performing a power back-off by the terminal; or
in a case that an uplink symbol percentage of scheduled or transmitted resource of the terminal is greater than the maximum percentage of uplink symbol capable of being scheduled or transmitted of the terminal in the first time window, reconfigure a maximum available output power of the terminal or performing a power back-off by the terminal.

Optionally, one or more of the maximum uplink duration capable of being scheduled or transmitted of the terminal, the maximum quantity of uplink slots capable of being scheduled or transmitted of the terminal, the maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal is determined by the terminal according to uplink resource control information in the first indication information; or
one or more of the maximum uplink duration capable of being scheduled or transmitted of the terminal, the maximum quantity of uplink slots capable of being scheduled or transmitted of the terminal, the maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal is predefined in a criterion.

Optionally, the processor 900 is further configured to:
report a reconfigured maximum available output power of the terminal to the network device; or
in a case that scheduled uplink resource of the terminal in the first time window exceeds a first threshold, after the terminal performs the power back-off, a power value of the terminal is less than or equal to a maximum available output power configurable by the terminal.

Optionally, the processor 900 is further configured to:
in a case that an uplink symbol percentage scheduled or transmitted by the terminal in the first time window is greater than a capability of the terminal corresponding to the second indication information, apply all requirements for the first power class to the supported power class.

Optionally, the processor 900 is further configured to:
in a case that an uplink symbol percentage scheduled or transmitted by the terminal in the first time window is greater than a capability of the terminal corresponding to the second indication information, lower a lower limit of a maximum transmitting power configuration value of the terminal.

To sum up, according to the above embodiments of the present disclosure, after receiving the first indication information, the terminal may reconfigure the maximum available output power of the terminal based on the first indication information or control the terminal to perform the power back-off or prohibit the transmission of at least one uplink information of the terminal; or after receiving the first indication information, the terminal sends second indication information to the network device based on the first indication information, and the network device may perform the resource scheduling and/or power adjustment on the terminal based on the second indication information. That is, the network device or terminal may adjust the power or resources of the terminal while ensuring that the regional SAR limit requirement is met, without restricting the uplink resource configuration of the high-power terminal, so that the high-power terminal may be used in more scenarios.

It should be noted that the terminal provided in the embodiments of the present disclosure is a terminal capable of executing the above information transmission method, so all embodiments of the above information transmission method are applicable to the terminal and can achieve the same or similar beneficial effects.

An information transmission device applied to a terminal is further provided in an embodiment of the present disclosure, where the information transmission includes:
a first receiving module, configured to receive first indication information sent by a network device, where the first indication information includes at least one of:
location area identity information of the network device;
information of current uplink and downlink configuration of the network device;
specific absorption ratio limit information, including: an applicable electromagnetic power density exposure requirement, an electromagnetic radiation specific absorption ratio requirement limit, an applicable electromagnetic power density exposure requirement identity or an electromagnetic radiation specific absorption ratio requirement limit identity;
uplink resource control information, including at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbols capable of being scheduled or transmitted of the terminal, a maximum quantity of uplink slots capable of being scheduled or transmitted of the terminal, a maximum percentage of uplink duration capable of being scheduled or transmitted of the terminal, a maximum percentage of uplink slot capable of being scheduled or transmitted of the terminal, a maximum percentage of uplink sub-frame capable of being scheduled or transmitted of the terminal and a maximum percentage of uplink symbol capable of being scheduled or transmitted of the terminal in the first time window; and
first time window configuration information configured to indicate a duration of a first time window.

To sum up, according to the above embodiments of the present disclosure, after receiving the first indication information, the terminal may reconfigure the maximum available output power of the terminal based on the first indication information or control the terminal to perform the power back-off or prohibit the transmission of at least one uplink information of the terminal; or after receiving the first indication information, the terminal sends second indication information to the network device based on the first indication information, and the network device may perform the resource scheduling and/or power adjustment on the terminal based on the second indication information. That is, the network device or terminal may adjust the power or resources of the terminal while ensuring that the regional SAR limit requirement is met, without restricting the uplink resource configuration of the high-power terminal, so that the high-power terminal may be used in more scenarios.

It should be noted that the information transmission device provided in the embodiments of the present disclosure is an information transmission device capable of executing the above information transmission method, so all the embodiments of the above information transmission method are applicable to the information transmission device, and can achieve the same or similar beneficial effects.

As shown in FIG. 9, a terminal is further provided in an embodiment of the present disclosure, including a processor 900 and a transceiver 910, the terminal also includes a user interface 920, and the processor 900 is configured to control the transceiver 910 to:
send second indication information to a network device,
where the second indication information includes at least one of:
   available uplink and downlink configuration information of the terminal, in a case of ensuring compliance with applicable electromagnetic power density exposure requirement or the electromagnetic radiation specific absorption ratio requirement limit;
   in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
   in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
   first power class information of the terminal at a first working frequency band where the network device works; and
   the maximum available output powers configurable by the terminal corresponding to different uplink and downlink configurations, in the case that the applicable electromagnetic power density exposure requirement or the electromagnetic radiation specific absorption ratio requirement limit is met.

Optionally, the first time window includes at least one frame structure period; or
the first time window includes at least one slot; or
the first time window includes at least one sub-frame; or,
the first time window includes at least one symbol; or
the first time window includes at least one millisecond.

Optionally, the first time window is a predefined evaluation period;
the first time window is a time range for the terminal to evaluate whether the applicable electromagnetic power density exposure requirement or the electromagnetic radiation specific absorption ratio requirement limit is met; or
the first time window is a time range of a maximum available uplink resource of the terminal in a case that the terminal evaluates that the applicable electromagnetic power density exposure requirement or the electromagnetic radiation specific absorption ratio requirement limit is met; or
the first time window is a time range of a maximum available output power configurable by the terminal in the case that the terminal evaluates that the applicable electromagnetic power density exposure requirement or the electromagnetic radiation specific absorption ratio requirement limit is met.

Optionally, the transceiver 910 is further configured to:
prior to sending the second indication information to the network device, send, to the network device, second power class information of the terminal at the first working frequency band where the network device works;
where a transmitting power corresponding to the second power class information is larger than a transmitting power corresponding to the first power class information.

Optionally, the transceiver 910 is further configured to:
in a case that the current uplink and downlink configuration of the network device is applied and the terminal determines that the applicable electromagnetic power density exposure requirement or the electromagnetic radiation specific absorption ratio requirement limit is not met, send, to the network device, the second power class information of the terminal at the first working frequency band where the network device works.

Optionally, the transceiver 910 is further configured to: report a power headroom, where the power headroom is based on the maximum available output power configurable by the terminal in a case of ensuring compliance with applicable electromagnetic power density exposure requirement or the electromagnetic radiation specific absorption ratio requirement limit.

Optionally, the processor 900 is further configured to:
in a case that an uplink symbol percentage scheduled or transmitted by the terminal in the first time window is greater than a capability of the terminal corresponding to the second indication information, apply all requirements for the first power class to the supported power class.

Optionally, the processor 900 is further configured to:
in a case that an uplink symbol percentage scheduled or transmitted by the terminal in the first time window is greater than a capability of the terminal corresponding to the second indication information, lower a lower limit of a maximum transmitting power configuration value of the terminal.

To sum up, according to the above embodiments of the present disclosure, the terminal actively reports the second indication information (equivalent to the capability information of the terminal) to the network device, and the network device may, according to the second indication information reported by the terminal, adjust the power or resources of the terminal in a case that the regional SAR value requirements are satisfied, without restricting the uplink resource configuration of the high-power terminal, so that the high-power terminal may be used in more scenarios.

It should be noted that the terminal provided in the embodiments of the present disclosure is a terminal capable of executing the above information transmission method, and all the embodiments of the above information transmission method are applicable to the terminal and can achieve the same or similar beneficial effects.

An information transmission device applied to a terminal is further provided in an embodiment of the present disclosure, including:
a second sending module, configured to send second indication information to a network device,
where the second indication information includes at least one of:
   available uplink and downlink configuration information of the terminal, in a case of ensuring compliance with applicable electromagnetic power density exposure requirement or the electromagnetic radiation specific absorption ratio requirement limit;
   in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
   in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
   first power class information of the terminal at a first working frequency band where the network device works; and
   the maximum available output powers configurable by the terminal corresponding to different uplink and downlink configurations, in the case that the applicable electromagnetic power density exposure requirement or the electromagnetic radiation specific absorption ratio requirement limit is met.

To sum up, according to the above embodiments of the present disclosure, the terminal actively reports the second indication information (equivalent to the capability information of the terminal) to the network device, and the network device may, according to the second indication information reported by the terminal, adjust the power or resources of the terminal in a case that the regional SAR value requirements are satisfied, without restricting the uplink resource configuration of the high-power terminal, so that the high-power terminal may be used in more scenarios.

It should be noted that the information transmission device provided in the embodiments of the present disclosure is an information transmission device capable of executing the above information transmission method, and all the embodiments of the above information transmission method are applicable to the information transmission device, and all can achieve the same or similar beneficial effects.

As shown in FIG. 8, a network device is further provided in an embodiment of the present disclosure, including a processor 800 and a transceiver 810, and the processor 800 is configured to control the transceiver 810 to:
receive second indication information sent by a terminal,
where the second indication information includes at least one of:
   available uplink and downlink configuration information of the terminal, in a case of ensuring compliance with applicable electromagnetic power density exposure requirement or the electromagnetic radiation specific absorption ratio requirement limit;
   in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
   in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
   first power class information of the terminal at a first working frequency band where the network device works; and
   the maximum available output powers configurable by the terminal corresponding to different uplink and downlink configurations, in the case that the applicable electromagnetic power density exposure requirement or the electromagnetic radiation specific absorption ratio requirement limit is met.

Optionally, the first time window includes at least one frame structure period; or
the first time window includes at least one slot; or
the first time window includes at least one sub-frame; or,
the first time window includes at least one symbol; or
the first time window includes at least one millisecond.

Optionally, the first time window is a predefined evaluation period;
the first time window is a time range for the terminal to evaluate whether the applicable electromagnetic power density exposure requirement or the electromagnetic radiation specific absorption ratio requirement limit is met; or
the first time window is a time range of a maximum available uplink resource of the terminal in a case that the terminal evaluates that the applicable electromagnetic power density exposure requirement or the electromagnetic radiation specific absorption ratio requirement limit is met; or
the first time window is a time range of a maximum available output power configurable by the terminal in the case that the terminal evaluates that the applicable electromagnetic power density exposure requirement or the electromagnetic radiation specific absorption ratio requirement limit is met.

Optionally, the transceiver 810 is further configured to:
prior to receiving the second indication information sent by the terminal, receive second power class information of the terminal at the first working frequency band where the network device works which is sent by the terminal;
where a transmitting power corresponding to the second power class information is larger than a transmitting power corresponding to the first power class information.

Optionally, the transceiver 810 is further configured to:
in a case that the current uplink and downlink configuration of the network device is applied and the terminal determines that the applicable electromagnetic power density exposure requirement or the electromagnetic radiation specific absorption ratio requirement limit is not met, receive the second power class information of the terminal at the first working frequency band where the network device works which is sent by the terminal.

Optionally, the transceiver 810 is further configured to: receive a power headroom reported by the terminal, where the power headroom is based on the maximum available output power configurable by the terminal in a case of ensuring compliance with applicable electromagnetic power density exposure requirement or the electromagnetic radiation specific absorption ratio requirement limit.

Optionally, the processor 800 is further configured to:
perform an uplink resource scheduling or an uplink transmission for the terminal;
a duration of scheduled or transmitted resource is less than or equal to the maximum uplink duration capable of being scheduled or transmitted of the terminal in the first time window; or
a quantity of slots of scheduled or transmitted resource is less than or equal to the maximum quantity of uplink slots capable of being scheduled or transmitted of the terminal in the first time window,; or
a quantity of uplink sub-frames of scheduled or transmitted resource is less than or equal to the maximum quantity of uplink sub-frames capable of being scheduled or transmitted of the terminal in the first time window; or
a quantity of uplink symbols of scheduled or transmitted resource is less than or equal to the maximum quantity of uplink symbols capable of being scheduled or transmitted of the terminal in the first time window; or
an uplink duration percentage of scheduled or transmitted resource is less than or equal to the maximum percentage of uplink duration capable of being scheduled or transmitted of the terminal in the first time window; or
an uplink slot percentage of scheduled or transmitted resource is less than or equal to the maximum percentage of uplink slot capable of being scheduled or transmitted of the terminal in the first time window; or
an uplink sub-frame percentage of scheduled or transmitted resource is less than or equal to the maximum percentage of uplink sub-frame capable of being scheduled or transmitted of the terminal in the first time window; or
an uplink symbol percentage of scheduled or transmitted resource is less than or equal to the maximum percentage of uplink symbol capable of being scheduled or transmitted of the terminal in the first time window.

Optionally, the processor 800 is further configured to:
send a power adjustment value to the terminal; where
in a case that the power adjustment value is applied to the terminal, a transmitting power of the terminal is less than or equal to a maximum available output power configurable by the terminal; or
in the case that the power adjustment value is applied to the terminal, the transmitting power of the terminal is less than or equal to a transmitting power value corresponding to a first power class of the terminal at a first working frequency band; or
in the case that the power adjustment value is applied to the terminal, the transmitting power of the terminal is less than or equal to the maximum available output power configurable by the terminal in a case that the current uplink and downlink configuration of the network device is applied.

To sum up, according to the above embodiments of the present disclosure, the terminal actively reports the second indication information to the network device, and the network device may, according to the second indication information reported by the terminal, adjust the power or resources of the terminal in a case that the regional SAR value requirements are satisfied, without restricting the uplink resource configuration of the high-power terminal, so that the high-power terminal may be used in more scenarios.

It should be noted that the network device provided in the embodiments of the present disclosure is a network device capable of executing the above information transmission method, so all embodiments of the above information transmission method are applicable to the network device, and can achieve the same or similar benefits effect.

An information transmission method applied to a terminal is further provided in an embodiment of the present disclosure, including: sending second indication information to a network device,
where the second indication information includes at least one of:
available uplink and downlink configuration information of the terminal (available uplink and downlink slot configuration information of the terminal or available uplink and downlink sub-frame configuration information of the terminal), in a case of ensuring compliance with applicable electromagnetic power density exposure requirement or the electromagnetic radiation specific absorption ratio requirement limit;
in a case of ensuring compliance with applicable electromagnetic power density exposure requirement or the electromagnetic radiation specific absorption ratio requirement limit, at least one of the available uplink and downlink configuration information of the terminal, a maximum uplink duration capable of being scheduled or transmitted of the terminal, the maximum quantity of uplink slots capable of being scheduled or transmitted of the terminal, a maximum quantity of uplink sub-frames capable of being scheduled or transmitted of the terminal, the maximum quantity of uplink symbols capable of being scheduled or transmitted of the terminal, the maximum percentage of uplink duration capable of being scheduled or transmitted of the terminal, the maximum percentage of uplink slot capable of being scheduled or transmitted of the terminal, the maximum percentage of uplink sub-frame capable of being scheduled or transmitted of the terminal and the maximum percentage of uplink symbol capable of being scheduled or transmitted of the terminal in the first time window;
in a case that the current uplink and downlink configuration of the network device is applied, a maximum available output power configurable by the terminal in a case of ensuring compliance with applicable electromagnetic power density exposure requirement or the electromagnetic radiation specific absorption ratio requirement limit;
first power class information of the terminal at a first working frequency band where the network device works; and
the maximum available output powers configurable by the terminal corresponding to different uplink and downlink configurations, in the case that the applicable electromagnetic power density exposure requirement or the electromagnetic radiation specific absorption ratio requirement limit is met.

Optionally, in the above embodiment of the present disclosure, the first time window includes: the first time window includes at least one frame structure period; or the first time window includes at least one slot; or the first time window includes at least one sub-frame; or the first time window includes at least one symbol; or the first time window includes at least one millisecond.

Further, in the above embodiments of the present disclosure, the method further includes:
prior to sending the second indication information to the network device, sending, to the network device, second power class information of the terminal at the first working frequency band where the network device works;
where a transmitting power corresponding to the second power class information is larger than a transmitting power corresponding to the first power class information.

For example, the terminal supports band 41 power class 2 26dBm operation, i.e., the second power class, and the first power class is a default power class of the terminal (e.g., the maximum transmitting power is 23dBm).

Optionally, the method further includes:
in a case that an uplink symbol percentage scheduled or transmitted by the terminal in the first time window is greater than a capability of the terminal corresponding to the second indication information, the terminal applying all requirements for the first power class to the supported power class.

Optionally, the method further includes:
in a case that an uplink symbol percentage scheduled or transmitted by the terminal in the first time window is greater than a capability of the terminal corresponding to the second indication information, the terminal lowering a lower limit of a maximum transmitting power permitted to be configured.

To sum up, according to the above embodiments of the present disclosure, the terminal actively reports the second indication information (equivalent to the capability information of the terminal) to the network device, and the network device may, according to the second indication information, schedule reasonably the power or uplink scheduling or transmission resource of the terminal in a case that the regional SAR value requirements are satisfied; or in a case that the scheduled or transmitted uplink resources of the terminal exceed the maximum capacity of the terminal to be scheduled or transmitted to meet the SAR value requirements, the terminal uses the index requirements of a low power class or a default power class; or the terminal lowers a lower limit of a maximum transmitting power configured by the terminal, so as to prevent the terminal from not complying with the SAR value requirements of the regulatory agency under special conditions

It should be noted that the information transmission device provided in the embodiments of the present disclosure is an information transmission device capable of executing the above information transmission method, so all the embodiments of the above information transmission method are applicable to the information transmission device, and can achieve the same or similar beneficial effects.

A computer-readable storage medium is further provided in an embodiment of the present disclosure, where a computer program is in the computer-readable storage medium. A processor executes the computer program to perform each process in the embodiment of the information transmission method applied to a network device or executes the computer program to perform each process in the embodiment of the information transmission method applied to a terminal, and the same technical effect can be achieved. To avoid repetition, details thereof are not described here. The computer-readable storage medium, such as read-only memory (Read-Only Memory, ROM), random access memory (Random Access Memory, RAM), magnetic disk, or optical disk, etc.

Those skilled in the art should understand that the embodiments of the present application can be provided as methods, systems or computer program products. Therefore, the present disclosure may adopt the form of a complete hardware embodiment, a complete software embodiment, or an embodiment combining software and hardware. Moreover, the present disclosure may adopt the form of a computer program product implemented on one or more computer-readable storage media (including but not limited to disk storage, optical storage, etc.) containing computer-usable program codes.

The present disclosure is described with reference to flowcharts and/or block diagrams of methods, equipment (systems) and computer program products according to the embodiments of the present disclosure. It should be understood that each process and/or block in the flowchart and/or block diagram, and the combination of processes and/or blocks in the flowchart and/or block diagram can be implemented by computer program instructions. These computer program instructions can be provided to the processor of a general-purpose computer, a special-purpose computer, an embedded processor, or other programmable data processing equipment to generate a machine, so that the instructions executed by the processor of the computer or other programmable data processing equipment are generated for use. It is a device that realizes the functions specified in one process or multiple processes and/or one block or multiple blocks in the flowchart.

These computer program instructions can also be stored in a computer-readable storage medium that can guide a computer or other programmable data processing equipment to work in a specific manner, so that the instructions stored in the computer-readable storage medium produce paper products including instruction devices, The instruction device realizes the functions specified in one process or multiple processes in the flowchart and/or one block or multiple blocks in the block diagram.

These computer program instructions can also be loaded on a computer or other programmable data processing equipment, so that the computer or other programmable equipment executes a series of operation steps to produce computer-implemented processing, thereby executing instructions on the computer or other scientific programming equipment Provides steps for realizing the functions specified in one process or multiple processes in the flowchart and/or one block or multiple blocks in the block diagram.

## Claims

1. An information transmission method, applied to a network device, comprising:
receiving (601) second indication information sent by a terminal,
**characterized in that**,
the second indication information comprises:
at least one of following information: in a first time window, a maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal, in case that specific absorption ratio, SAR, value of the terminal complies with applicable electromagnetic energy absorption requirement(s) or the electromagnetic radiation specific absorption ratio requirement(s).

2. The method according to claim 1, prior to receiving (601) the second indication information sent by the terminal, further comprising:
sending (101) first indication information to the terminal, wherein the first indication information comprises at least one of:
location area identity information of the network device;
information of uplink and downlink configuration of the network device; and
uplink resource control information, comprising at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbol(s) capable of being scheduled or transmitted of the terminal, a maximum quantity of uplink slot(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal in the first time window.

3. The method according to claim 2, wherein the sending (101) the first indication information to the terminal comprises:
sending the first indication information to the terminal through broadcast information; or
sending the first indication information to the terminal through a dedicated signaling.

4. The method according to claim 2, wherein
the first time window comprises at least one frame structure period; or
the first time window comprises at least one slot; or
the first time window comprises at least one sub-frame; or,
the first time window comprises at least one symbol; or
the first time window comprises at least one millisecond.

5. The method according to claim 2 or 4, wherein
the first time window is a predefined evaluation period;
the first time window is a time reference for the terminal to evaluate whether the applicable electromagnetic energy absorption requirement(s) or the electromagnetic radiation specific absorption ratio requirement(s) is met; or
the first time window is a time range of a maximum available uplink resource of the terminal in a case that the terminal evaluates that the applicable electromagnetic energy absorption requirement(s) or the electromagnetic radiation specific absorption ratio requirement(s) is met; or
the first time window is a time range of a maximum available output power configured for the terminal in the case that the terminal evaluates that the applicable electromagnetic energy absorption requirement(s) or the electromagnetic radiation specific absorption ratio requirement(s) is met.

6. The method according to claim 2, further comprising: prior to acquiring the second indication information, acquiring second power class information of the terminal at the first working frequency band where the network device works;
wherein a transmitting power corresponding to the second power class information is larger than a transmitting power corresponding to first power class information;
or
the method further comprises:
determining the maximum available output power configured for the terminal in the first time window, according to the second indication information reported by the terminal; or
determining first power class information of the terminal at a first working frequency band where the network device works, according to the second indication information reported by the terminal; or
determining, according to the second indication information reported by the terminal, at least one of the maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal in the first time window; or
wherein the method further comprises:
sending, by the network device, a power adjustment value to the terminal; wherein
in a case that the power adjustment value is applied to the terminal, a transmitting power of the terminal is less than or equal to a maximum available output power configured for the terminal; or
in the case that the power adjustment value is applied to the terminal, the transmitting power of the terminal is less than or equal to a transmitting power value corresponding to a first power class of the terminal at a first working frequency band; or
in the case that the power adjustment value is applied to the terminal, the transmitting power of the terminal is less than or equal to the maximum available output power configured for the terminal in a case that the current uplink and downlink configuration of the network device is applied.

7. The method according to claim 2, wherein either the method further comprising:
in a case that a current uplink and downlink configuration of the network device is applied, determining a maximum available output power configured for the terminal in a case of ensuring compliance with applicable electromagnetic energy absorption requirement(s) or the electromagnetic radiation specific absorption ratio requirement(s); or
in the case that the current uplink and downlink configuration of the network device is applied, determining at least one of a maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, the maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal; or
determining first power class information of the terminal at a first working frequency band where the network device works; or
determining a maximum available output power configured for the terminal in the first time window; or
determining at least one of a maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal in the first time window;
or,
wherein the method further comprises:
the network device performing an uplink resource scheduling or uplink transmission for the terminal;
wherein a duration of scheduled or transmitted resource is less than or equal to a maximum uplink duration capable of being scheduled or transmitted of the terminal; or
a quantity of slots of the scheduled or transmitted resource is less than or equal to a maximum quantity of uplink slot(s) capable of being scheduled or transmitted of the terminal; or
a quantity of uplink sub-frames of the scheduled or transmitted resource is less than or equal to a maximum quantity of uplink sub-frame(s) capable of being scheduled or transmitted of the terminal; or
a quantity of uplink symbols of the scheduled or transmitted resource is less than or equal to a maximum quantity of uplink symbol(s) capable of being scheduled or transmitted of the terminal; or
an uplink duration percentage of the scheduled or transmitted resource is less than or equal to a maximum percentage of uplink duration capable of being scheduled or transmitted of the terminal; or
an uplink slot percentage of the scheduled or transmitted resource is less than or equal to a maximum percentage of uplink slot(s) capable of being scheduled or transmitted of the terminal; or
an uplink sub-frame percentage of the scheduled or transmitted resource is less than or equal to a maximum percentage of uplink sub-frame(s) capable of being scheduled or transmitted of the terminal; or
an uplink symbol percentage of the scheduled or transmitted resource is less than or equal to a maximum percentage of uplink symbol(s) capable of being scheduled or transmitted of the terminal.

8. The method according to claim 1, wherein
the first time window comprises at least one frame structure period; or
the first time window comprises at least one slot; or
the first time window comprises at least one sub-frame; or,
the first time window comprises at least one symbol; or
the first time window comprises at least one millisecond.

9. The method according to claim 1 or 8, wherein the first time window is a predefined evaluation period;
the first time window is a time range for the terminal to evaluate whether the applicable electromagnetic energy absorption requirement(s) or the electromagnetic radiation specific absorption ratio requirement(s) is met; or
the first time window is a time range of a maximum available uplink resource of the terminal in a case that the terminal evaluates that the applicable electromagnetic energy absorption requirement(s) or the electromagnetic radiation specific absorption ratio requirement(s) is met; or
the first time window is a time range of a maximum available output power configured for the terminal in the case that the terminal evaluates that the applicable electromagnetic energy absorption requirement(s) or the electromagnetic radiation specific absorption ratio requirement(s) is met.

10. The method according to claim 1, further comprising:
prior to receiving the second indication information sent by the terminal, receiving second power class information of the terminal at the first working frequency band where the network device works which is sent by the terminal;
wherein a transmitting power corresponding to the second power class information is larger than a transmitting power corresponding to first power class information.

11. The method according to claim 1, further comprising:
the network device performing an uplink resource scheduling or an uplink transmission for the terminal;
a duration of scheduled or transmitted resource is less than or equal to the maximum uplink duration capable of being scheduled or transmitted of the terminal in the first time window; or
a quantity of slots of scheduled or transmitted resource is less than or equal to a maximum quantity of uplink slot(s) capable of being scheduled or transmitted of the terminal in the first time window,; or
a quantity of uplink sub-frames of scheduled or transmitted resource is less than or equal to a maximum quantity of uplink sub-frame(s) capable of being scheduled or transmitted of the terminal in the first time window; or
a quantity of uplink symbols of scheduled or transmitted resource is less than or equal to a maximum quantity of uplink symbol(s) capable of being scheduled or transmitted of the terminal in the first time window; or
an uplink duration percentage of scheduled or transmitted resource is less than or equal to a maximum percentage of uplink duration capable of being scheduled or transmitted of the terminal in the first time window; or
an uplink slot percentage of scheduled or transmitted resource is less than or equal to a maximum percentage of uplink slot(s) capable of being scheduled or transmitted of the terminal in the first time window; or
an uplink sub-frame percentage of scheduled or transmitted resource is less than or equal to a maximum percentage of uplink sub-frame(s) capable of being scheduled or transmitted of the terminal in the first time window; or
an uplink symbol percentage of scheduled or transmitted resource is less than or equal to a maximum percentage of uplink symbol(s) capable of being scheduled or transmitted of the terminal in the first time window;
or,
the method further comprises:
sending, by the network device, a power adjustment value to the terminal; wherein
in a case that the power adjustment value is applied to the terminal, a transmitting power of the terminal is less than or equal to a maximum available output power configured for the terminal; or
in the case that the power adjustment value is applied to the terminal, the transmitting power of the terminal is less than or equal to a transmitting power value corresponding to a first power class of the terminal at a first working frequency band; or
in the case that the power adjustment value is applied to the terminal, the transmitting power of the terminal is less than or equal to the maximum available output power configured for the terminal in a case that the current uplink and downlink configuration of the network device is applied.

12. An information transmission method, applied to a terminal, comprising: sending (501) second indication information to a network device,
**characterized in that**,
the second indication information comprises:
at least one of following information: in a first time window, a maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal, in case that specific absorption ratio, SAR, value of the terminal complies with applicable electromagnetic energy absorption requirement(s) or the electromagnetic radiation specific absorption ratio requirement(s).

13. The method according to claim 12, prior to sending (501) the second indication information to the network device, further comprising:
receiving (201) first indication information sent by the network device, wherein the first indication information comprises at least one of:
location area identity information of the network device;
information of current uplink and downlink configuration of the network device; and
uplink resource control information, comprising at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbol(s) capable of being scheduled or transmitted of the terminal, a maximum quantity of uplink slot(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal in the first time window.

14. The method according to claim 13, wherein the receiving (201) the first indication information sent by the network device comprises:
receiving the first indication information of the network device sent by the network device through broadcast information; or
receiving the first indication information of the network device sent by the network device through a dedicated signaling.

15. The method according to claim 13, wherein
the first time window comprises at least one frame structure period; or
the first time window comprises at least one slot; or
the first time window comprises at least one sub-frame; or,
the first time window comprises at least one symbol; or
the first time window comprises at least one millisecond.

16. The method according to claim 13 or 15, wherein
the first time window is a predefined evaluation period;
the first time window is a time range for the terminal to evaluate whether the applicable electromagnetic energy absorption requirement(s) or the electromagnetic radiation specific absorption ratio requirement(s) is met; or
the first time window is a time range of a maximum available uplink resource of the terminal in a case that the terminal evaluates that the applicable electromagnetic energy absorption requirement(s) or the electromagnetic radiation specific absorption ratio requirement(s) is met; or
the first time window is a time range of a maximum available output power configured for the terminal in the case that the terminal evaluates that the applicable electromagnetic energy absorption requirement(s) or the electromagnetic radiation specific absorption ratio requirement(s) is met.

17. The method according to claim 13,
wherein the method further comprises:
prior to reporting the second indication information to the network device, sending, to the network device, second power class information of the terminal at the first working frequency band where the network device works;
wherein a transmitting power corresponding to the second power class information is larger than a transmitting power corresponding to first power class information.

18. The method according to claim 13, further comprising:
determining, according to the first indication information, at least one of:
in a case of ensuring compliance with applicable electromagnetic energy absorption requirement(s) or the electromagnetic radiation specific absorption ratio requirement(s), at least one of the available uplink and downlink configuration information of the terminal, a maximum uplink duration capable of being scheduled or transmitted of the terminal, a maximum quantity of uplink slot(s) capable of being scheduled or transmitted of the terminal, the maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal;
in a case that the current uplink and downlink configuration of the network device is applied, a maximum available output power configured for the terminal in a case of ensuring compliance with applicable electromagnetic energy absorption requirement(s) or the electromagnetic radiation specific absorption ratio requirement(s); and
the maximum available output powers configured for the terminal in different uplink and downlink configurations, in the case that the applicable electromagnetic energy absorption requirement(s) or the electromagnetic radiation specific absorption ratio requirement(s) is met;
wherein the method further comprises:
reconfiguring a maximum available output power of the terminal, or controlling the terminal to perform a power back-off, or prohibiting a transmission of at least one piece of uplink information of the terminal; wherein the uplink information comprises: an uplink slot, or an uplink sub-frame, or an uplink symbol;
wherein the prohibiting the transmission of the at least one piece of uplink information of the terminal comprises:
in a case of ensuring compliance with applicable electromagnetic energy absorption requirement(s) or the electromagnetic radiation specific absorption ratio requirement(s), determining, according to the first indication information, at least one of the available uplink and downlink configuration information of the terminal, a maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal;
in a case that an uplink duration scheduled by the network device for the terminal is greater than a maximum uplink duration capable of being scheduled or transmitted of the terminal or in a case that an uplink duration percentage scheduled by the network device for the terminal is greater than a maximum percentage of uplink duration capable of being scheduled or transmitted of the terminal, prohibiting a data transmission on at least one uplink time unit; or
in a case that a resource quantity of uplink slots scheduled by the network device for the terminal is greater than a maximum resource quantity of uplink slots capable of being scheduled or transmitted of the terminal or in a case that an uplink slot percentage scheduled by the network device for the terminal is greater than a maximum percentage of uplink slot(s) capable of being scheduled or transmitted of the terminal, prohibiting a data transmission on a resource of at least one uplink slot; or
in a case that a resource quantity of uplink sub-frames scheduled by the network device for the terminal is greater than a maximum quantity of uplink sub-frame(s) capable of being scheduled or transmitted of the terminal or in a case that an uplink sub-frame percentage scheduled by the network device for the terminal is greater than a maximum percentage of uplink sub-frame(s) capable of being scheduled or transmitted of the terminal, prohibiting a data transmission on a resource of at least one uplink sub-frame; or
in a case that a resource quantity of uplink symbols scheduled by the network device for the terminal is greater than a maximum quantity of uplink symbol(s) capable of being scheduled or transmitted of the terminal or in a case that an uplink symbol percentage scheduled by the network device for the terminal is greater than a maximum percentage of uplink symbol(s) capable of being scheduled or transmitted of the terminal, prohibiting a data transmission on a resource of at least one uplink symbol.

19. The method according to claim 13, further comprising:
in a case that a duration of scheduled or transmitted resource of the terminal is greater than a maximum uplink duration capable of being scheduled or transmitted of the terminal in the first time window, reconfiguring, by the terminal, a maximum available output power of the terminal or performing a power back-off by the terminal; or
in a case that a quantity of slots of scheduled or transmitted resource of the terminal is greater than a maximum quantity of uplink slot(s) capable of being scheduled or transmitted of the terminal in the first time window, reconfiguring, by the terminal, a maximum available output power of the terminal or performing a power back-off by the terminal; or
in a case that a quantity of uplink sub-frames of scheduled or transmitted resource of the terminal is greater than a maximum quantity of uplink sub-frame(s) capable of being scheduled or transmitted of the terminal in the first time window, reconfiguring, by the terminal, a maximum available output power of the terminal or performing a power back-off by the terminal; or
in a case that a quantity of uplink symbols of scheduled or transmitted resource of the terminal is greater than a maximum quantity of uplink symbol(s) capable of being scheduled or transmitted of the terminal in the first time window, reconfiguring, by the terminal, a maximum available output power of the terminal or performing a power back-off by the terminal; or
in a case that an uplink duration percentage of scheduled or transmitted resource of the terminal is greater than a maximum percentage of uplink duration capable of being scheduled or transmitted of the terminal in the first time window, reconfiguring, by the terminal, a maximum available output power of the terminal or performing a power back-off by the terminal; or
in a case that an uplink slot percentage of scheduled or transmitted resource of the terminal is greater than a maximum percentage of uplink slot(s) capable of being scheduled or transmitted of the terminal in the first time window, reconfiguring, by the terminal, a maximum available output power of the terminal or performing a power back-off by the terminal; or
in a case that an uplink sub-frame percentage of scheduled or transmitted resource of the terminal is greater than a maximum percentage of uplink sub-frame(s) capable of being scheduled or transmitted of the terminal in the first time window, reconfiguring, by the terminal, a maximum available output power of the terminal or performing a power back-off by the terminal; or
in a case that an uplink symbol percentage of scheduled or transmitted resource of the terminal is greater than a maximum percentage of uplink symbol(s) capable of being scheduled or transmitted of the terminal in the first time window, reconfiguring, by the terminal, a maximum available output power of the terminal or performing a power back-off by the terminal;
wherein the method further comprises:
reporting a reconfigured maximum available output power of the terminal to the network device; or
in a case that scheduled uplink resource of the terminal in the first time window exceeds a first threshold, performing, by the terminal, the power back-off, to make that a power value of the terminal is less than or equal to a maximum available output power configured for the terminal.

20. The method according to claim 13 or 17, further comprising:
in a case that the uplink symbol percentage scheduled or transmitted of the terminal in the first time window is greater than a capability of the terminal corresponding to the second indication information, applying all requirements for the first power class to a supported power class;
or,
the method further comprises:
in a case that the uplink symbol percentage scheduled or transmitted of the terminal in the first time window is greater than a capability of the terminal corresponding to the second indication information, lowering a lower limit of a maximum transmitting power configuration value of the terminal.

21. The method according to claim 12, wherein
the first time window comprises at least one frame structure period; or
the first time window comprises at least one slot; or
the first time window comprises at least one sub-frame; or,
the first time window comprises at least one symbol; or
the first time window comprises at least one millisecond.

22. The method according to claim 12 or 21, wherein
the first time window is a predefined evaluation period;
the first time window is a time range for the terminal to evaluate whether the applicable electromagnetic energy absorption requirement(s) or the electromagnetic radiation specific absorption ratio requirement(s) is met; or
the first time window is a time range of a maximum available uplink resource of the terminal in a case that the terminal evaluates that the applicable electromagnetic energy absorption requirement(s) or the electromagnetic radiation specific absorption ratio requirement(s) is met; or
the first time window is a time range of a maximum available output power configured for the terminal in the case that the terminal evaluates that the applicable electromagnetic energy absorption requirement(s) or the electromagnetic radiation specific absorption ratio requirement(s) is met.

23. The method according to claim 12, further comprising:
prior to sending the second indication information to the network device, sending, to the network device, second power class information of the terminal at the first working frequency band where the network device works;
wherein a transmitting power corresponding to the second power class information is larger than a transmitting power corresponding to first power class information.

24. The method according to claim 12 or 23, further comprising:
in a case that the uplink symbol percentage scheduled or transmitted of the terminal in the first time window is greater than a capability of the terminal corresponding to the second indication information, applying all requirements for the first power class to a supported power class;
or,
the method further comprises:
in a case that the uplink symbol percentage scheduled or transmitted of the terminal in the first time window is greater than a capability of the terminal corresponding to the second indication information, lowering a lower limit of a maximum transmitting power configuration value of the terminal.

25. A network device, comprising a processor (800) and a transceiver (810), wherein the processor (800) is configured to control the transceiver (810) to:
receive second indication information sent by a terminal,
**characterized in that**,
the second indication information comprises:
at least one of following information: in a first time window, a maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal, in case that specific absorption ratio, SAR, value of the terminal complies with applicable electromagnetic energy absorption requirement(s) or the electromagnetic radiation specific absorption ratio requirement(s).

26. The network device according to claim 25, wherein prior to receiving the second indication information reported by the terminal, the transceiver (810) is further configured to:
send first indication information to the terminal, wherein the first indication information comprises at least one of:
location area identity information of the network device;
information of current uplink and downlink configuration of the network device; and
uplink resource control information, comprising at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slots of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbol(s) capable of being scheduled or transmitted of the terminal, a maximum quantity of uplink slot(s) capable of being scheduled or transmitted of the terminal, a maximum percentage of uplink duration capable of being scheduled or transmitted of the terminal, a maximum percentage of uplink slot capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal in the first time window.

27. The network device according to claim 26, wherein the transceiver (810) is further configured to: prior to acquiring the second indication information, acquire second power class information of the terminal at the first working frequency band where the network device works;
wherein a transmitting power corresponding to the second power class information is larger than a transmitting power corresponding to first power class information;
or,
the processor (800) is further configured to:
determine the maximum available output power configured for the terminal in the first time window, according to the second indication information reported by the terminal; or
determine first power class information of the terminal at a first working frequency band where the network device works, according to the second indication information reported by the terminal; or
determine, according to the second indication information reported by the terminal, at least one of the maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal in the first time window.

28. The network device according to claim 26 or 27, wherein the processor (800) is further configured to:
perform an uplink resource scheduling or uplink transmission for the terminal;
wherein a duration of scheduled or transmitted resource is less than or equal to a maximum uplink duration capable of being scheduled or transmitted of the terminal; or
a quantity of slots of the scheduled or transmitted resource is less than or equal to a maximum quantity of uplink slot(s) capable of being scheduled or transmitted of the terminal; or
a quantity of uplink sub-frames of the scheduled or transmitted resource is less than or equal to a maximum quantity of uplink sub-frame(s) capable of being scheduled or transmitted of the terminal; or
a quantity of uplink symbols of the scheduled or transmitted resource is less than or equal to a maximum quantity of uplink symbol(s) capable of being scheduled or transmitted of the terminal; or
an uplink duration percentage of the scheduled or transmitted resource is less than or equal to a maximum percentage of uplink duration capable of being scheduled or transmitted of the terminal; or
an uplink slot percentage of the scheduled or transmitted resource is less than or equal to a maximum percentage of uplink slot(s) capable of being scheduled or transmitted of the terminal; or
an uplink sub-frame percentage of the scheduled or transmitted resource is less than or equal to a maximum percentage of uplink sub-frame(s) capable of being scheduled or transmitted of the terminal; or
an uplink symbol percentage of the scheduled or transmitted resource is less than or equal to a maximum percentage of uplink symbol(s) capable of being scheduled or transmitted of the terminal.

29. The network device according to claim 26 or 27, wherein the processor (800) is further configured to:
send a power adjustment value to the terminal; wherein
in a case that the power adjustment value is applied to the terminal, a transmitting power of the terminal is less than or equal to a maximum available output power configured for the terminal; or
in the case that the power adjustment value is applied to the terminal, the transmitting power of the terminal is less than or equal to a transmitting power value corresponding to a first power class of the terminal at a first working frequency band; or
in the case that the power adjustment value is applied to the terminal, the transmitting power of the terminal is less than or equal to the maximum available output power configured for the terminal in a case that the current uplink and downlink configuration of the network device is applied.

30. The network device according to claim 25, wherein the first time window is a predefined evaluation period;
the first time window is a time range for the terminal to evaluate whether the applicable electromagnetic energy absorption requirement(s) or the electromagnetic radiation specific absorption ratio requirement(s) is met; or
the first time window is a time range of a maximum available uplink resource of the terminal in a case that the terminal evaluates that the applicable electromagnetic energy absorption requirement(s) or the electromagnetic radiation specific absorption ratio requirement(s) is met; or
the first time window is a time range of a maximum available output power configured for the terminal in the case that the terminal evaluates that the applicable electromagnetic energy absorption requirement(s) or the electromagnetic radiation specific absorption ratio requirement(s) is met.

31. The network device according to claim 25, wherein the transceiver (810) is further configured to:
prior to receiving the second indication information sent by the terminal, receive second power class information of the terminal at the first working frequency band where the network device works which is sent by the terminal;
wherein a transmitting power corresponding to the second power class information is larger than a transmitting power corresponding to first power class information.

32. The network device according to claim 25, wherein the processor (800) is further configured to:
perform an uplink resource scheduling or an uplink transmission for the terminal;
a duration of scheduled or transmitted resource is less than or equal to the maximum uplink duration capable of being scheduled or transmitted of the terminal in the first time window; or
a quantity of slots of scheduled or transmitted resource is less than or equal to a maximum quantity of uplink slot(s) capable of being scheduled or transmitted of the terminal in the first time window,; or
a quantity of uplink sub-frames of scheduled or transmitted resource is less than or equal to a maximum quantity of uplink sub-frame(s) capable of being scheduled or transmitted of the terminal in the first time window; or
a quantity of uplink symbols of scheduled or transmitted resource is less than or equal to a maximum quantity of uplink symbol(s) capable of being scheduled or transmitted of the terminal in the first time window; or
an uplink duration percentage of scheduled or transmitted resource is less than or equal to a maximum percentage of uplink duration capable of being scheduled or transmitted of the terminal in the first time window; or
an uplink slot percentage of scheduled or transmitted resource is less than or equal to a maximum percentage of uplink slot(s) capable of being scheduled or transmitted of the terminal in the first time window; or
an uplink sub-frame percentage of scheduled or transmitted resource is less than or equal to a maximum percentage of uplink sub-frame(s) capable of being scheduled or transmitted of the terminal in the first time window; or
an uplink symbol percentage of scheduled or transmitted resource is less than or equal to a maximum percentage of uplink symbol(s) capable of being scheduled or transmitted of the terminal in the first time window;
or,
the processor (800) is further configured to:
send a power adjustment value to the terminal; wherein
in a case that the power adjustment value is applied to the terminal, a transmitting power of the terminal is less than or equal to a maximum available output power configured for the terminal; or
in the case that the power adjustment value is applied to the terminal, the transmitting power of the terminal is less than or equal to a transmitting power value corresponding to a first power class of the terminal at a first working frequency band; or
in the case that the power adjustment value is applied to the terminal, the transmitting power of the terminal is less than or equal to the maximum available output power configured for the terminal in a case that the current uplink and downlink configuration of the network device is applied.

33. A terminal, comprising a processor (900) and a transceiver (910), wherein the processor (900) is configured to control the transceiver (910) to:
send second indication information to a network device,
**characterized in that**,
the second indication information comprises:
at least one of following information: in a first time window, a maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal, in case that specific absorption ratio, SAR, value of the terminal complies with applicable electromagnetic energy absorption requirement(s) or the electromagnetic radiation specific absorption ratio requirement(s).

34. The terminal according to claim 33, wherein, prior to sending the second indication information to the network device, wherein the processor (900) is further configured to control the transceiver (910) to:
receive first indication information sent by the network device, wherein the first indication information comprises at least one of:
location area identity information of the network device;
information of current uplink and downlink configuration of the network device; and
uplink resource control information, comprising at least one of: a quantity of uplink time domain resources, a quantity of uplink symbols, a quantity of uplink slots, an uplink symbol duty ratio, an uplink slot duty ratio, a maximum quantity of available uplink time domain resources of the terminal, a maximum quantity of available uplink symbols of the terminal, a maximum quantity of available uplink slot(s) of the terminal, a maximum available uplink symbol duty ratio of the terminal, a maximum uplink slot duty ratio of the terminal, a maximum quantity of uplink time domain resources capable of being scheduled or transmitted of the terminal, a maximum quantity of uplink symbol(s) capable of being scheduled or transmitted of the terminal, a maximum quantity of uplink slot(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal in the first time window.

35. The terminal according to claim 34, wherein the transceiver (910) is further configured to:
prior to reporting the second indication information to the network device, send, to the network device, second power class information of the terminal at the first working frequency band where the network device works;
wherein a transmitting power corresponding to the second power class information is larger than a transmitting power corresponding to first power class information.

36. The terminal according to claim 34, wherein in a case that the first indication information comprises the location area identity information of the network device, the processor (900) is further configured to:
determine, according to a country identity in the location area identity information of the network device, a country where the network device is located, and acquire the applicable electromagnetic energy absorption requirement(s) or the electromagnetic radiation specific absorption ratio requirement(s) corresponding to the country; or
determine, according to a country identity and an operator identity in the location area identity information of the network device, a country and an operator where the network device is located, and acquire the applicable electromagnetic energy absorption requirement(s) or the electromagnetic radiation specific absorption ratio requirement(s) corresponding to the country and the operator.

37. The terminal according to claim 34, wherein the processor (900) is further configured to:
determine, according to the first indication information, at least one of:
in a case of ensuring compliance with applicable electromagnetic energy absorption requirement(s) or the electromagnetic radiation specific absorption ratio requirement(s), at least one of the available uplink and downlink configuration information of the terminal, a maximum uplink duration capable of being scheduled or transmitted of the terminal, a maximum quantity of uplink slot(s) capable of being scheduled or transmitted of the terminal, a maximum quantity of uplink sub-frame(s) capable of being scheduled or transmitted of the terminal, a maximum quantity of uplink symbol(s) capable of being scheduled or transmitted of the terminal, a maximum percentage of uplink duration capable of being scheduled or transmitted of the terminal, a maximum percentage of uplink slot(s) capable of being scheduled or transmitted of the terminal, a maximum percentage of uplink sub-frame(s) capable of being scheduled or transmitted of the terminal and a maximum percentage of uplink symbol(s) capable of being scheduled or transmitted of the terminal;
in a case that the current uplink and downlink configuration of the network device is applied, a maximum available output power configured for the terminal in a case of ensuring compliance with applicable electromagnetic energy absorption requirement(s) or the electromagnetic radiation specific absorption ratio requirement(s); and
the maximum available output powers configured for the terminal in different uplink and downlink configurations, in the case that the applicable electromagnetic energy absorption requirement(s) or the electromagnetic radiation specific absorption ratio requirement(s) is met.

38. The terminal according to claim 34, wherein the processor (900) is further configured to:
in a case that a duration of scheduled or transmitted resource of the terminal is greater than a maximum uplink duration capable of being scheduled or transmitted of the terminal in the first time window, reconfigure a maximum available output power of the terminal or performing a power back-off by the terminal; or
in a case that a quantity of slots of scheduled or transmitted resource of the terminal is greater than a maximum quantity of uplink slot(s) capable of being scheduled or transmitted of the terminal in the first time window, reconfigure a maximum available output power of the terminal or performing a power back-off by the terminal; or
in a case that a quantity of uplink sub-frames of scheduled or transmitted resource of the terminal is greater than a maximum quantity of uplink sub-frame(s) capable of being scheduled or transmitted of the terminal in the first time window, reconfigure a maximum available output power of the terminal or performing a power back-off by the terminal; or
in a case that a quantity of uplink symbols of scheduled or transmitted resource of the terminal is greater than a maximum quantity of uplink symbol(s) capable of being scheduled or transmitted of the terminal in the first time window, reconfigure a maximum available output power of the terminal or performing a power back-off by the terminal; or
in a case that an uplink duration percentage of scheduled or transmitted resource of the terminal is greater than a maximum percentage of uplink duration capable of being scheduled or transmitted of the terminal in the first time window, reconfigure a maximum available output power of the terminal or performing a power back-off by the terminal; or
in a case that an uplink slot percentage of scheduled or transmitted resource of the terminal is greater than a maximum percentage of uplink slot(s) capable of being scheduled or transmitted of the terminal in the first time window, reconfigure a maximum available output power of the terminal or performing a power back-off by the terminal; or
in a case that an uplink sub-frame percentage of scheduled or transmitted resource of the terminal is greater than a maximum percentage of uplink sub-frame(s) capable of being scheduled or transmitted of the terminal in the first time window, reconfigure a maximum available output power of the terminal or performing a power back-off by the terminal; or
in a case that an uplink symbol percentage of scheduled or transmitted resource of the terminal is greater than a maximum percentage of uplink symbol(s) capable of being scheduled or transmitted of the terminal in the first time window, reconfigure a maximum available output power of the terminal or performing a power back-off by the terminal.

39. The terminal according to claim 34 or 35, wherein the processor (900) is further configured to:
in a case that an uplink symbol percentage scheduled or transmitted by the terminal in the first time window is greater than a capability of the terminal corresponding to the second indication information, apply all requirements for the first power class to a supported power class;
or,
the processor (900) is further configured to:
in a case that an uplink symbol percentage scheduled or transmitted by the terminal in the first time window is greater than a capability of the terminal corresponding to the second indication information, lower a lower limit of a maximum transmitting power configuration value of the terminal.

40. The terminal according to claim 33, wherein
the first time window is a predefined evaluation period;
the first time window is a time range for the terminal to evaluate whether the applicable electromagnetic energy absorption requirement(s) or the electromagnetic radiation specific absorption ratio requirement(s) is met; or
the first time window is a time range of a maximum available uplink resource of the terminal in a case that the terminal evaluates that the applicable electromagnetic energy absorption requirement(s) or the electromagnetic radiation specific absorption ratio requirement(s) is met; or
the first time window is a time range of a maximum available output power configured for the terminal in the case that the terminal evaluates that the applicable electromagnetic energy absorption requirement(s) or the electromagnetic radiation specific absorption ratio requirement(s) is met.

41. The terminal according to claim 33, wherein the transceiver (910) is further configured to:
prior to sending the second indication information to the network device, send, to the network device, second power class information of the terminal at the first working frequency band where the network device works;
wherein a transmitting power corresponding to the second power class information is larger than a transmitting power corresponding to first power class information.

42. The terminal according to claim 33 or 41, wherein the processor (900) is further configured to:
in a case that an uplink symbol percentage scheduled or transmitted by the terminal in the first time window is greater than a capability of the terminal corresponding to the second indication information, apply all requirements for the first power class to a supported power class;
or,
the processor (900) is further configured to:
in a case that an uplink symbol percentage scheduled or transmitted by the terminal in the first time window is greater than a capability of the terminal corresponding to the second indication information, lower a lower limit of a maximum transmitting power configuration value of the terminal.

43. A computer-readable storage medium comprising instructions which, when executed by a processor of a network device, cause the processor to carry out the method of claims 1 to 11.

44. A computer-readable storage medium comprising instructions which, when executed by a processor of a terminal, cause the processor to carry out the method of claims 12 to 24.

## Patentansprüche

1. Informationsübertragungsverfahren, angewandt auf eine Netzwerkvorrichtung, aufweisend:
Empfangen (601) von zweiten Anzeigeinformationen, die von einem Endgerät gesendet werden,
**dadurch gekennzeichnet, dass**
die zweiten Anzeigeinformationen Folgendes aufweisen:
mindestens eine der folgenden Informationen: in einem ersten Zeitfenster eine maximale Uplink-Dauer des Endgeräts, die geplant oder übertragen werden kann, eine maximale Anzahl von Uplink-Slot(s) des Endgeräts, die geplant oder übertragen werden kann, eine maximale Anzahl von Uplink-Subframe(s) des Endgeräts, die geplant oder übertragen werden kann, eine maximale Anzahl von Uplink-Symbol(en) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, für den Fall, dass der spezifische Absorptionsraten-, SAR-, Wert des Endgeräts einschlägigen Anforderung(en) an die elektromagnetische Energieabsorption oder den Anforderung(en) an die spezifische Absorptionsrate der elektromagnetischen Strahlung entspricht.

2. Verfahren nach Anspruch 1, umfassend vor dem Empfangen (601) der vom Endgerät gesendeten zweiten Anzeigeinformationen ferner:
Senden (101) von ersten Anzeigeinformationen an das Endgerät, wobei die ersten Anzeigeinformationen mindestens eines der folgenden aufweisen:
Ortsbereichsidentitätsinformation der Netzwerkvorrichtung;
Informationen einer Uplink- und Downlink-Konfiguration der Netzwerkvorrichtung; und
Uplink-Ressourcensteuerungsinformationen, aufweisend mindestens eines von: eine Anzahl von Uplink-Zeitbereichsressourcen, eine Anzahl von Uplink-Symbolen, eine Anzahl von Uplink-Slots, ein Uplink-Symbol-Tastverhältnis, ein Uplink-Slot-Tastverhältnis, eine maximale Anzahl verfügbarer Uplink-Zeitbereichsressourcen des Endgeräts, eine maximale Anzahl verfügbarer Uplink-Symbole des Endgeräts, eine maximale Anzahl verfügbarer Uplink-Slots des Endgeräts, ein maximales verfügbares Uplink-Symbol-Tastverhältnis des Endgeräts, ein maximales Uplink-Slot-Tastverhältnis des Endgeräts, eine maximale Anzahl von Uplink-Zeitbereichsressourcen des Endgeräts, die geplant oder übertragen werden kann, eine maximale Anzahl von Uplink-Symbol(en) des Endgeräts, die geplant oder übertragen werden kann, eine maximale Anzahl von Uplink-Slot(s) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, in dem ersten Zeitfenster.

3. Verfahren nach Anspruch 2, wobei das Senden (101) der ersten Anzeigeinformationen an das Endgerät Folgendes aufweist:
Senden der ersten Anzeigeinformationen an das Endgerät durch Broadcast-Informationen; oder
Senden der ersten Anzeigeinformationen an das Endgerät durch eine dedizierte Signalisierung.

4. Verfahren nach Anspruch 2, wobei
das erste Zeitfenster mindestens eine Rahmenstrukturperiode aufweist; oder
das erste Zeitfenster mindestens einen Slot aufweist; oder
das erste Zeitfenster mindestens einen Subframe aufweist; oder,
das erste Zeitfenster mindestens ein Symbol aufweist; oder
das erste Zeitfenster mindestens eine Millisekunde aufweist.

5. Verfahren nach Anspruch 2 oder 4, wobei
das erste Zeitfenster ein vordefinierter Auswertungszeitraum ist;
das erste Zeitfenster ein Zeitbezug für das Endgerät ist, um auszuwerten, ob die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren Uplink-Ressource des Endgeräts in einem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren, für das Endgerät konfigurierten Ausgangsleistung in dem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind.

6. Verfahren nach Anspruch 2, ferner aufweisend: vor dem Erfassen der zweiten Anzeigeinformationen Erfassen von zweiten Leistungsklasseninformationen des Endgeräts an dem ersten Arbeitsfrequenzband, an dem die Netzwerkvorrichtung arbeitet;
wobei eine einer zweiten Leistungsklasseninformation entsprechende Sendeleistung größer ist als eine einer ersten Leistungsklasseninformation entsprechende Sendeleistung;
oder
wobei das Verfahren ferner Folgendes aufweist:
Bestimmen der maximal verfügbaren, für das Endgerät im ersten Zeitfenster konfigurierten Ausgangsleistung gemäß den vom Endgerät gemeldeten zweiten Anzeigeinformationen; oder
Bestimmen von ersten Leistungsklasseninformationen des Endgeräts an einem ersten Arbeitsfrequenzband, an dem die Netzwerkvorrichtung arbeitet, gemäß den vom Endgerät gemeldeten zweiten Anzeigeinformationen; oder
Bestimmen von, gemäß den vom Endgerät gemeldeten zweiten Anzeigeinformationen, mindestens einer der maximalen Uplink-Dauer des Endgeräts, die geplant oder übertragen werden kann, einer maximalen Anzahl von Uplink-Slot(s) des Endgeräts, die geplant oder übertragen werden kann, einer maximalen Anzahl von Uplink-Subframe(s) des Endgeräts, die geplant oder übertragen werden kann, einer maximalen Anzahl von Uplink-Symbol(en) des Endgeräts, die geplant oder übertragen werden kann, eines maximalen Prozentsatzes einer Uplink-Dauer des Endgeräts, die geplant oder übertragen werden kann, eines maximalen Prozentsatzes von Uplink-Slot(s) des Endgeräts, die geplant oder übertragen werden kann, eines maximalen Prozentsatzes von Uplink-Subframe(s) des Endgeräts, die geplant oder übertragen werden kann, und eines maximalen Prozentsatzes von Uplink-Symbol(en) des Endgeräts, die geplant oder übertragen werden kann, in dem ersten Zeitfenster; oder
wobei das Verfahren ferner Folgendes aufweist:
Senden eines Leistungsanpassungswerts an das Endgerät durch die Netzwerkvorrichtung; wobei
in einem Fall, dass der Leistungsanpassungswert auf das Endgerät angewandt wird, eine Sendeleistung des Endgeräts kleiner oder gleich einer maximal verfügbaren, für das Endgerät konfigurierten Ausgangsleistung ist; oder
in dem Fall, dass der Leistungsanpassungswert auf das Endgerät angewandt wird, die Sendeleistung des Endgeräts kleiner oder gleich einem einer ersten Leistungsklasse des Endgeräts an einem ersten Arbeitsfrequenzband entsprechenden Sendeleistungswert ist; oder
in dem Fall, dass der Leistungsanpassungswert auf das Endgerät angewandt wird, die Sendeleistung des Endgeräts kleiner oder gleich der maximal verfügbaren, für das Endgerät konfigurierten Ausgangsleistung in einem Fall ist, dass die aktuelle Uplink- und Downlink-Konfiguration der Netzwerkvorrichtung angewandt wird.

7. Verfahren nach Anspruch 2, wobei das Verfahren ferner Folgendes aufweist:
in einem Fall, dass eine aktuelle Uplink- und Downlink-Konfiguration der Netzwerkvorrichtung angewandt wird, Bestimmen einer maximal verfügbaren, für das Endgerät konfigurierten Ausgangsleistung in einem Fall der Sicherstellung der Einhaltung der einschlägigen Anforderung(en) an die elektromagnetische Energieabsorption oder der Anforderung(en) an die spezifische Absorptionsrate der elektromagnetischen Strahlung; oder
in dem Fall, dass die aktuelle Uplink- und Downlink-Konfiguration der Netzwerkvorrichtung angewandt wird, Bestimmen von mindestens einer der maximalen Uplink-Dauer des Endgeräts, die geplant oder übertragen werden kann, einer maximalen Anzahl von Uplink-Slot(s) des Endgeräts, die geplant oder übertragen werden kann, einer maximalen Anzahl von Uplink-Subframe(s) des Endgeräts, die geplant oder übertragen werden kann, einer maximalen Anzahl von Uplink-Symbol(en) des Endgeräts, die geplant oder übertragen werden kann, eines maximalen Prozentsatzes einer Uplink-Dauer des Endgeräts, die geplant oder übertragen werden kann, eines maximalen Prozentsatzes von Uplink-Slot(s) des Endgeräts, die geplant oder übertragen werden kann, eines maximalen Prozentsatzes von Uplink-Subframe(s) des Endgeräts, die geplant oder übertragen werden kann, und eines maximalen Prozentsatzes von Uplink-Symbol(en) des Endgeräts, die geplant oder übertragen werden kann; oder
Bestimmen von ersten Leistungsklasseninformationen des Endgeräts an einem ersten Arbeitsfrequenzband, an dem die Netzwerkvorrichtung arbeitet; oder
Bestimmen einer maximal verfügbaren, für das Endgerät im ersten Zeitfenster konfigurierten Ausgangsleistung; oder
Bestimmen von mindestens einer der maximalen Uplink-Dauer des Endgeräts, die geplant oder übertragen werden kann, einer maximalen Anzahl von Uplink-Slot(s) des Endgeräts, die geplant oder übertragen werden kann, einer maximalen Anzahl von Uplink-Subframe(s) des Endgeräts, die geplant oder übertragen werden kann, einer maximalen Anzahl von Uplink-Symbol(en) des Endgeräts, die geplant oder übertragen werden kann, eines maximalen Prozentsatzes einer Uplink-Dauer des Endgeräts, die geplant oder übertragen werden kann, eines maximalen Prozentsatzes von Uplink-Slot(s) des Endgeräts, die geplant oder übertragen werden kann, eines maximalen Prozentsatzes von Uplink-Subframe(s) des Endgeräts, die geplant oder übertragen werden kann, und eines maximalen Prozentsatzes von Uplink-Symbol(en) des Endgeräts, die geplant oder übertragen werden kann, in dem ersten Zeitfenster;
oder,
wobei das Verfahren ferner Folgendes aufweist:
Durchführen einer Uplink-Ressourcenplanung oder einer Uplink-Übertragung für das Endgerät durch die Netzwerkvorrichtung;
wobei eine Dauer einer geplanten oder übertragenen Ressource kleiner oder gleich einer maximalen Uplink-Dauer des Endgeräts ist, die geplant oder übertragen werden kann; oder
eine Anzahl von Slots der geplanten oder übertragenen Ressource kleiner oder gleich einer maximalen Anzahl von Uplink-Slot(s) des Endgeräts ist, die geplant oder übertragen werden kann; oder
eine Anzahl von Uplink-Subframes der geplanten oder übertragenen Ressource kleiner oder gleich einer maximalen Anzahl von Uplink-Subframe(s) des Endgeräts ist, die geplant oder übertragen werden kann; oder
eine Anzahl von Uplink-Symbolen der geplanten oder übertragenen Ressource kleiner oder gleich einer maximalen Anzahl von Uplink-Symbol(en) des Endgeräts ist, die geplant oder übertragen werden kann; oder
ein Uplink-Dauer-Prozentsatz der geplanten oder übertragenen Ressource kleiner oder gleich einem maximalen Prozentsatz einer Uplink-Dauer des Endgeräts ist, die geplant oder übertragen werden kann; oder
ein Uplink-Slot-Prozentsatz der geplanten oder übertragenen Ressource kleiner oder gleich einem maximalen Prozentsatz von Uplink-Slot(s) des Endgeräts ist, die geplant oder übertragen werden kann; oder
ein Uplink-Subframe-Prozentsatz der geplanten oder übertragenen Ressource kleiner oder gleich einem maximalen Prozentsatz von Uplink-Subframe(s) des Endgeräts ist, die geplant oder übertragen werden kann; oder
ein Uplink-Symbol-Prozentsatz der geplanten oder übertragenen Ressource kleiner oder gleich einem maximalen Prozentsatz von Uplink-Symbol(en) des Endgeräts ist, die geplant oder übertragen werden kann.

8. Verfahren nach Anspruch 1, wobei
das erste Zeitfenster mindestens eine Rahmenstrukturperiode aufweist; oder
das erste Zeitfenster mindestens einen Slot aufweist; oder
das erste Zeitfenster mindestens einen Subframe aufweist; oder,
das erste Zeitfenster mindestens ein Symbol aufweist; oder
das erste Zeitfenster mindestens eine Millisekunde aufweist.

9. Verfahren nach Anspruch 1 oder 8, wobei
das erste Zeitfenster ein vordefinierter Auswertungszeitraum ist;
das erste Zeitfenster ein Zeitraum für das Endgerät ist, um auszuwerten, ob die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren Uplink-Ressource des Endgeräts in einem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren, für das Endgerät konfigurierten Ausgangsleistung in dem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind.

10. Verfahren nach Anspruch 1, weiter aufweisend:
vor dem Empfangen der vom Endgerät gesendeten zweiten Anzeigeinformationen Empfangen von zweiten Leistungsklasseninformationen des Endgeräts an dem ersten Arbeitsfrequenzband, an dem die Netzwerkvorrichtung arbeitet, welche vom Endgerät gesendet werden;
wobei eine einer zweiten Leistungsklasseninformation entsprechende Sendeleistung größer ist als eine einer ersten Leistungsklasseninformation entsprechende Sendeleistung.

11. Verfahren nach Anspruch 1, weiter aufweisend:
Durchführen einer Uplink-Ressourcenplanung oder einer Uplink-Übertragung für das Endgerät durch die Netzwerkvorrichtung;
eine Dauer einer geplanten oder übertragenen Ressource kleiner oder gleich der maximalen Uplink-Dauer des Endgeräts im ersten Zeitfenster ist, die geplant oder übertragen werden kann; oder
eine Anzahl von Slots einer geplanten oder übertragenen Ressource kleiner oder gleich einer maximalen Anzahl von Uplink-Slot(s) des Endgeräts im ersten Zeitfenster ist, die geplant oder übertragen werden kann; oder
eine Anzahl von Uplink-Subframes einer geplanten oder übertragenen Ressource kleiner oder gleich einer maximalen Anzahl von Uplink-Subframe(s) des Endgeräts im ersten Zeitfenster ist, die geplant oder übertragen werden kann; oder
eine Anzahl von Uplink-Symbolen einer geplanten oder übertragenen Ressource kleiner oder gleich einer maximalen Anzahl von Uplink-Symbol(en) des Endgeräts im ersten Zeitfenster ist, die geplant oder übertragen werden kann; oder
ein Uplink-Dauer-Prozentsatz einer geplanten oder übertragenen Ressource kleiner oder gleich einem maximalen Prozentsatz einer Uplink-Dauer des Endgeräts im ersten Zeitfenster ist, die geplant oder übertragen werden kann; oder
ein Uplink-Slot-Prozentsatz einer geplanten oder übertragenen Ressource kleiner oder gleich einem maximalen Prozentsatz von Uplink-Slot(s) des Endgeräts im ersten Zeitfenster ist, die geplant oder übertragen werden kann; oder
ein Uplink-Subframe-Prozentsatz einer geplanten oder übertragenen Ressource kleiner oder gleich einem maximalen Prozentsatz von Uplink-Subframe(s) des Endgeräts im ersten Zeitfenster ist, die geplant oder übertragen werden kann; oder
ein Uplink-Symbol-Prozentsatz einer geplanten oder übertragenen Ressource kleiner oder gleich einem maximalen Prozentsatz von Uplink-Symbol(en) des Endgeräts im ersten Zeitfenster ist, die geplant oder übertragen werden kann;
oder,
wobei das Verfahren ferner Folgendes aufweist:
Senden eines Leistungsanpassungswerts an das Endgerät durch die Netzwerkvorrichtung; wobei
in einem Fall, dass der Leistungsanpassungswert auf das Endgerät angewandt wird, eine Sendeleistung des Endgeräts kleiner oder gleich einer maximal verfügbaren, für das Endgerät konfigurierten Ausgangsleistung ist; oder
in dem Fall, dass der Leistungsanpassungswert auf das Endgerät angewandt wird, die Sendeleistung des Endgeräts kleiner oder gleich einem einer ersten Leistungsklasse des Endgeräts an einem ersten Arbeitsfrequenzband entsprechenden Sendeleistungswert ist; oder
in dem Fall, dass der Leistungsanpassungswert auf das Endgerät angewandt wird, die Sendeleistung des Endgeräts kleiner oder gleich der maximal verfügbaren, für das Endgerät konfigurierten Ausgangsleistung in einem Fall ist, dass die aktuelle Uplink- und Downlink-Konfiguration der Netzwerkvorrichtung angewandt wird.

12. Ein Informationsübertragungsverfahren, angewandt auf ein Endgerät, aufweisend:
Senden (501) von zweiten Anzeigeinformationen an eine Netzwerkvorrichtung,
**dadurch gekennzeichnet, dass**
die zweiten Anzeigeinformationen Folgendes aufweisen:
mindestens eine der folgenden Informationen: in einem ersten Zeitfenster eine maximale Uplink-Dauer des Endgeräts, die geplant oder übertragen werden kann, eine maximale Anzahl von Uplink-Slot(s) des Endgeräts, die geplant oder übertragen werden kann, eine maximale Anzahl von Uplink-Subframe(s) des Endgeräts, die geplant oder übertragen werden kann, eine maximale Anzahl von Uplink-Symbol(en) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, für den Fall, dass der spezifische Absorptionsraten-, SAR-, Wert des Endgeräts einschlägigen Anforderung(en) an die elektromagnetische Energieabsorption oder den Anforderung(en) an die spezifische Absorptionsrate der elektromagnetischen Strahlung entspricht.

13. Verfahren nach Anspruch 12, umfassend vor dem Senden (501) der zweiten Anzeigeinformationen an die Netzwerkvorrichtung ferner:
Empfangen (201) von ersten Anzeigeinformationen, die von der Netzwerkvorrichtung gesendet werden, wobei die ersten Anzeigeinformationen mindestens eines der folgenden aufweisen:
Ortsbereichsidentitätsinformation der Netzwerkvorrichtung;
Informationen einer aktuellen Uplink- und Downlink-Konfiguration der Netzwerkvorrichtung; und
Uplink-Ressourcensteuerungsinformationen, aufweisend mindestens eines von: eine Anzahl von Uplink-Zeitbereichsressourcen, eine Anzahl von Uplink-Symbolen, eine Anzahl von Uplink-Slots, ein Uplink-Symbol-Tastverhältnis, ein Uplink-Slot-Tastverhältnis, eine maximale Anzahl verfügbarer Uplink-Zeitbereichsressourcen des Endgeräts, eine maximale Anzahl verfügbarer Uplink-Symbole des Endgeräts, eine maximale Anzahl verfügbarer Uplink-Slot(s) des Endgeräts, ein maximales verfügbares Uplink-Symbol-Tastverhältnis des Endgeräts, ein maximales Uplink-Slot-Tastverhältnis des Endgeräts, eine maximale Anzahl von Uplink-Zeitbereichsressourcen des Endgeräts, die geplant oder übertragen werden kann, eine maximale Anzahl von Uplink-Symbol(en) des Endgeräts, die geplant oder übertragen werden kann, eine maximale Anzahl von Uplink-Slot(s) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, in dem ersten Zeitfenster.

14. Verfahren nach Anspruch 13, wobei das Empfangen (201) der von der Netzwerkvorrichtung gesendeten ersten Anzeigeinformationen Folgendes aufweist:
Empfangen der ersten Anzeigeinformationen der Netzwerkvorrichtung über Broadcast-Informationen; oder
Empfangen der ersten Anzeigeinformationen der Netzwerkvorrichtung über eine dedizierte Signalisierung.

15. Verfahren nach Anspruch 13, wobei
das erste Zeitfenster mindestens eine Rahmenstrukturperiode aufweist; oder
das erste Zeitfenster mindestens einen Slot aufweist; oder
das erste Zeitfenster mindestens einen Subframe aufweist; oder,
das erste Zeitfenster mindestens ein Symbol aufweist; oder
das erste Zeitfenster mindestens eine Millisekunde aufweist.

16. Verfahren nach Anspruch 13 oder 15, wobei
das erste Zeitfenster ein vordefinierter Auswertungszeitraum ist;
das erste Zeitfenster ein Zeitraum für das Endgerät ist, um auszuwerten, ob die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren Uplink-Ressource des Endgeräts in einem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren, für das Endgerät konfigurierten Ausgangsleistung in dem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind.

17. Verfahren nach Anspruch 13, wobei das Verfahren ferner Folgendes aufweist:
vor dem Melden der zweiten Anzeigeinformationen an die Netzwerkvorrichtung Senden von zweiten Leistungsklasseninformationen des Endgeräts an das erste Arbeitsfrequenzband, an dem die Netzwerkvorrichtung arbeitet;
wobei eine einer zweiten Leistungsklasseninformation entsprechende Sendeleistung größer ist als eine einer ersten Leistungsklasseninformation entsprechende Sendeleistung.

18. Verfahren nach Anspruch 13, weiter aufweisend:
Bestimmen, gemäß den ersten Anzeigeinformationen, mindestens eines von:
in einem Fall der Sicherstellung der Einhaltung der einschlägigen Anforderung(en) an die elektromagnetische Energieabsorption oder der Anforderung(en) an die spezifische Absorptionsrate der elektromagnetischen Strahlung mindestens eines der verfügbaren Uplink- und Downlink-Konfigurationsinformationen des Endgeräts, einer maximalen Uplink-Dauer des Endgeräts, die geplant oder übertragen werden kann, einer maximalen Anzahl von Uplink-Slot(s) des Endgeräts, die geplant oder übertragen werden kann, der maximalen Anzahl von Uplink-Subframe(s) des Endgeräts, die geplant oder übertragen werden kann, einer maximalen Anzahl von Uplink-Symbol(en) des Endgeräts, die geplant oder übertragen werden kann, eines maximalen Prozentsatzes einer Uplink-Dauer des Endgeräts, die geplant oder übertragen werden kann, eines maximalen Prozentsatzes von Uplink-Slot(s) des Endgeräts, die geplant oder übertragen werden kann, eines maximalen Prozentsatzes von Uplink-Subframe(s) des Endgeräts, die geplant oder übertragen werden kann, und eines maximalen Prozentsatzes von Uplink-Symbol(en) des Endgeräts, die geplant oder übertragen werden kann;
in einem Fall, dass die aktuelle Uplink- und Downlink-Konfiguration der Netzwerkvorrichtung angewandt wird, einer maximal verfügbaren, für das Endgerät konfigurierten Ausgangsleistung in einem Fall der Sicherstellung der Einhaltung der einschlägigen Anforderung(en) an die elektromagnetische Energieabsorption oder der Anforderung(en) an die spezifische Absorptionsrate der elektromagnetischen Strahlung; und
der maximal verfügbaren, für das Endgerät konfigurierten Ausgangsleistungen in unterschiedlichen Uplink- und Downlink-Konfigurationen, in dem Fall, dass die einschlägigen Anforderung(en) an die elektromagnetische Energieabsorption oder die Anforderung(en) an die spezifische Absorptionsrate der elektromagnetischen Strahlung erfüllt sind;
wobei das Verfahren ferner Folgendes aufweist:
Rekonfigurieren einer maximal verfügbaren Ausgangsleistung des Endgeräts oder Steuern des Endgeräts zur Durchführung eines Power-Back-Off oder Untersagen einer Übertragung von mindestens einem Stück Uplink-Information des Endgeräts;
wobei die Uplink-Information Folgendes aufweist: einen Uplink-Slot oder einen Uplink-Subframe oder ein Uplink-Symbol;
wobei das Untersagen der Übertragung mindestens eines Stücks Uplink-Information des Endgeräts Folgendes aufweist:
in einem Fall der Sicherstellung der Einhaltung der einschlägigen Anforderung(en) an die elektromagnetische Energieabsorption oder der Anforderung(en) an die spezifische Absorptionsrate der elektromagnetischen Strahlung Bestimmen gemäß den ersten Anzeigeinformationen mindestens eines der verfügbaren Uplink- und Downlink-Konfigurationsinformationen des Endgeräts, einer maximalen Uplink-Dauer des Endgeräts, die geplant oder übertragen werden kann, einer maximalen Anzahl von Uplink-Slot(s) des Endgeräts, die geplant oder übertragen werden kann, der maximalen Anzahl von Uplink-Subframe(s) des Endgeräts, die geplant oder übertragen werden kann, einer maximalen Anzahl von Uplink-Symbol(en) des Endgeräts, die geplant oder übertragen werden kann, eines maximalen Prozentsatzes einer Uplink-Dauer des Endgeräts, die geplant oder übertragen werden kann, eines maximalen Prozentsatzes von Uplink-Slot(s) des Endgeräts, die geplant oder übertragen werden kann, eines maximalen Prozentsatzes von Uplink-Subframe(s) des Endgeräts, die geplant oder übertragen werden kann, und eines maximalen Prozentsatzes von Uplink-Symbol(en) des Endgeräts, die geplant oder übertragen werden kann;
in einem Fall, dass eine vom Netzwerkgerät geplante Uplink-Dauer für das Endgerät größer ist als eine maximale Uplink-Dauer des Endgeräts, die geplant oder übertragen werden kann, oder in einem Fall, dass ein vom Netzwerkgerät geplanter Uplink-Dauer-Prozentsatz für das Endgerät größer ist als ein maximaler Prozentsatz einer Uplink-Dauer des Endgeräts, die geplant oder übertragen werden kann, Untersagen einer Datenübertragung auf mindestens einer Uplink-Zeiteinheit; oder
in einem Fall, dass eine vom Netzwerkgerät geplante Ressourcenzahl von Uplink-Slots für das Endgerät größer ist als eine maximale Ressourcenzahl von Uplink-Slot(s) des Endgeräts, die geplant oder übertragen werden kann, oder in einem Fall, dass ein vom Netzwerkgerät geplanter Uplink-Slot-Prozentsatz für das Endgerät größer ist als ein maximaler Prozentsatz von Uplink-Slot(s) des Endgeräts, die geplant oder übertragen werden kann, Untersagen einer Datenübertragung auf einer Ressource von mindestens einem Uplink-Slot; oder
in einem Fall, dass eine vom Netzwerkgerät geplante Ressourcenzahl von Uplink-Subframes für das Endgerät größer ist als eine maximale Anzahl von Uplink-Subframe(s) des Endgeräts, die geplant oder übertragen werden kann, oder in einem Fall, dass ein vom Netzwerkgerät geplanter Uplink-Subframe-Prozentsatz für das Endgerät größer ist als ein maximaler Prozentsatz von Uplink-Subframe(s) des Endgeräts, die geplant oder übertragen werden kann, Untersagen einer Datenübertragung auf einer Ressource von mindestens einem Uplink-Subframe; oder
in einem Fall, dass eine vom Netzwerkgerät geplante Ressourcenzahl von Uplink-Symbolen für das Endgerät größer ist als eine maximale Anzahl von Uplink-Symbol(en) des Endgeräts, die geplant oder übertragen werden kann, oder in einem Fall, dass ein vom Netzwerkgerät geplanter Uplink-Symbol-Prozentsatz für das Endgerät größer ist als ein maximaler Prozentsatz von Uplink-Symbol(en) des Endgeräts, die geplant oder übertragen werden kann, Untersagen einer Datenübertragung auf einer Ressource von mindestens einem Uplink-Symbol.

19. Verfahren nach Anspruch 13, weiter aufweisend:
in einem Fall, dass eine Dauer einer geplanten oder übertragenen Ressource des Endgeräts größer ist als eine maximale Uplink-Dauer des Endgeräts im ersten Zeitfenster, die geplant oder übertragen werden kann, Rekonfigurieren einer maximal verfügbaren Ausgangsleistung des Endgeräts oder Durchführen eines Power-Back-Off durch das Endgerät; oder
in einem Fall, dass eine Anzahl von Slots einer geplanten oder übertragenen Ressource des Endgeräts größer ist als eine maximale Anzahl von Uplink-Slot(s) des Endgeräts im ersten Zeitfenster, die geplant oder übertragen werden kann, Rekonfigurieren einer maximal verfügbaren Ausgangsleistung des Endgeräts oder Durchführen eines Power-Back-Off durch das Endgerät; oder
in einem Fall, dass eine Anzahl von Uplink-Subframes einer geplanten oder übertragenen Ressource des Endgeräts größer ist als eine maximale Anzahl von Uplink-Subframe(s) des Endgeräts im ersten Zeitfenster, die geplant oder übertragen werden kann, Rekonfigurieren einer maximal verfügbaren Ausgangsleistung des Endgeräts oder Durchführen eines Power-Back-Off durch das Endgerät; oder
in einem Fall, dass eine Anzahl von Uplink-Symbolen einer geplanten oder übertragenen Ressource des Endgeräts größer ist als eine maximale Anzahl von Uplink-Symbol(en) des Endgeräts im ersten Zeitfenster, die geplant oder übertragen werden kann, Rekonfigurieren einer maximal verfügbaren Ausgangsleistung des Endgeräts oder Durchführen eines Power-Back-Off durch das Endgerät; oder
in einem Fall, dass ein Uplink-Dauer-Prozentsatz einer geplanten oder übertragenen Ressource des Endgeräts größer ist als ein maximaler Prozentsatz einer Uplink-Dauer des Endgeräts im ersten Zeitfenster, die geplant oder übertragen werden kann, Rekonfigurieren einer maximal verfügbaren Ausgangsleistung des Endgeräts oder Durchführen eines Power-Back-Off durch das Endgerät; oder
in einem Fall, dass ein Uplink-Slot-Prozentsatz einer geplanten oder übertragenen Ressource des Endgeräts größer ist als ein maximaler Prozentsatz von Uplink-Slot(s) des Endgeräts im ersten Zeitfenster, die geplant oder übertragen werden kann, Rekonfigurieren einer maximal verfügbaren Ausgangsleistung des Endgeräts oder Durchführen eines Power-Back-Off durch das Endgerät; oder
in einem Fall, dass ein Uplink-Subframe-Prozentsatz einer geplanten oder übertragenen Ressource des Endgeräts größer ist als ein maximaler Prozentsatz von Uplink-Subframe(s) des Endgeräts im ersten Zeitfenster, die geplant oder übertragen werden kann, Rekonfigurieren einer maximal verfügbaren Ausgangsleistung des Endgeräts oder Durchführen eines Power-Back-Off durch das Endgerät; oder
in einem Fall, dass ein Uplink-Symbol-Prozentsatz einer geplanten oder übertragenen Ressource des Endgeräts größer ist als ein maximaler Prozentsatz von Uplink-Symbol(en) des Endgeräts im ersten Zeitfenster, die geplant oder übertragen werden kann, Rekonfigurieren einer maximal verfügbaren Ausgangsleistung des Endgeräts oder Durchführen eines Power-Back-Off durch das Endgerät;
wobei das Verfahren ferner Folgendes aufweist:
Melden einer rekonfigurierten maximal verfügbaren Ausgangsleistung des Endgeräts an die Netzwerkvorrichtung; oder
in einem Fall, dass eine geplante Uplink-Ressource des Endgeräts im ersten Zeitfenster einen ersten Schwellenwert überschreitet, Durchführen eines Power-Back-Off durch das Endgerät, sodass ein Leistungswert des Endgeräts kleiner oder gleich einer maximal verfügbaren, für das Endgerät konfigurierten Ausgangsleistung ist.

20. Verfahren nach Anspruch 13 oder 17, weiter aufweisend:
in einem Fall, dass der geplante oder übertragene Uplink-Symbol-Prozentsatz des Endgeräts im ersten Zeitfenster größer ist als eine Fähigkeit des Endgeräts, die den zweiten Anzeigeinformationen entspricht, Anwenden aller Anforderungen für die erste Leistungsklasse auf eine unterstützte Leistungsklasse;
oder, wobei das Verfahren ferner Folgendes aufweist:
in einem Fall, dass der geplante oder übertragene Uplink-Symbol-Prozentsatz des Endgeräts im ersten Zeitfenster größer ist als eine Fähigkeit des Endgeräts, die den zweiten Anzeigeinformationen entspricht, Absenken einer unteren Grenze eines maximalen Ausgangsleistungskonfigurationswertes des Endgeräts.

21. Verfahren nach Anspruch 12, wobei
das erste Zeitfenster mindestens eine Rahmenstrukturperiode aufweist; oder
das erste Zeitfenster mindestens einen Slot aufweist; oder
das erste Zeitfenster mindestens einen Subframe aufweist; oder,
das erste Zeitfenster mindestens ein Symbol aufweist; oder
das erste Zeitfenster mindestens eine Millisekunde aufweist.

22. Verfahren nach Anspruch 12 oder 21, wobei
das erste Zeitfenster ein vordefinierter Auswertungszeitraum ist;
das erste Zeitfenster ein Zeitraum für das Endgerät ist, um auszuwerten, ob die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren Uplink-Ressource des Endgeräts in einem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren, für das Endgerät konfigurierten Ausgangsleistung in dem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind.

23. Verfahren nach Anspruch 12, weiter aufweisend:
vor dem Senden der zweiten Anzeigeinformationen an die Netzwerkvorrichtung Senden von zweiten Leistungsklasseninformationen des Endgeräts an das erste Arbeitsfrequenzband, an dem die Netzwerkvorrichtung arbeitet;
wobei eine einer zweiten Leistungsklasseninformation entsprechende Sendeleistung größer ist als eine einer ersten Leistungsklasseninformation entsprechende Sendeleistung.

24. Verfahren nach Anspruch 12 oder 23, weiter aufweisend:
in einem Fall, dass der geplante oder übertragene Uplink-Symbol-Prozentsatz des Endgeräts im ersten Zeitfenster größer ist als eine Fähigkeit des Endgeräts, die den zweiten Anzeigeinformationen entspricht, Anwenden aller Anforderungen für die erste Leistungsklasse auf eine unterstützte Leistungsklasse;
oder, wobei das Verfahren ferner Folgendes aufweist:
in einem Fall, dass der geplante oder übertragene Uplink-Symbol-Prozentsatz des Endgeräts im ersten Zeitfenster größer ist als eine Fähigkeit des Endgeräts, die den zweiten Anzeigeinformationen entspricht, Absenken einer unteren Grenze eines maximalen Ausgangsleistungskonfigurationswertes des Endgeräts.

25. Eine Netzwerkvorrichtung, aufweisend einen Prozessor (800) und einen Transceiver (810), wobei der Prozessor (800) derart konfiguriert ist, den Transceiver (810) zu steuern zum:
Empfangen von zweiten Anzeigeinformationen, die von einem Endgerät gesendet werden,
**dadurch gekennzeichnet, dass**
die zweiten Anzeigeinformationen Folgendes aufweisen:
mindestens eine der folgenden Informationen: in einem ersten Zeitfenster eine maximale Uplink-Dauer des Endgeräts, die geplant oder übertragen werden kann, eine maximale Anzahl von Uplink-Slot(s) des Endgeräts, die geplant oder übertragen werden kann, eine maximale Anzahl von Uplink-Subframe(s) des Endgeräts, die geplant oder übertragen werden kann, eine maximale Anzahl von Uplink-Symbol(en) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, in dem Fall, dass der spezifische Absorptionsraten-, SAR-, Wert des Endgeräts einschlägigen Anforderung(en) an die elektromagnetische Energieabsorption oder den Anforderung(en) an die spezifische Absorptionsrate der elektromagnetischen Strahlung entspricht.

26. Die Netzwerkvorrichtung nach Anspruch 25, wobei der Transceiver (810) ferner derart konfiguriert ist, vor dem Empfangen der vom Endgerät gemeldeten zweiten Anzeigeinformationen:
erste Anzeigeinformationen an das Endgerät zu senden, wobei die ersten Anzeigeinformationen mindestens eines der folgenden aufweisen:
Ortsbereichsidentitätsinformation der Netzwerkvorrichtung;
Informationen einer aktuellen Uplink- und Downlink-Konfiguration der Netzwerkvorrichtung; und
Uplink-Ressourcensteuerungsinformationen, aufweisend mindestens eines von:
eine Anzahl von Uplink-Zeitbereichsressourcen, eine Anzahl von Uplink-Symbolen, eine Anzahl von Uplink-Slots, ein Uplink-Symbol-Tastverhältnis, ein Uplink-Slot-Tastverhältnis, eine maximale Anzahl verfügbarer Uplink-Zeitbereichsressourcen des Endgeräts, eine maximale Anzahl verfügbarer Uplink-Symbole des Endgeräts, eine maximale Anzahl verfügbarer Uplink-Slots des Endgeräts, ein maximales verfügbares Uplink-Symbol-Tastverhältnis des Endgeräts, ein maximales Uplink-Slot-Tastverhältnis des Endgeräts, eine maximale Anzahl von Uplink-Zeitbereichsressourcen des Endgeräts, die geplant oder übertragen werden kann, eine maximale Anzahl von Uplink-Symbol(en) des Endgeräts, die geplant oder übertragen werden kann, eine maximale Anzahl von Uplink-Slot(s) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, in dem ersten Zeitfenster.

27. Die Netzwerkvorrichtung nach Anspruch 26, wobei der Transceiver (810) ferner derart konfiguriert ist:
vor dem Erfassen der zweiten Anzeigeinformationen zweite Leistungsklasseninformationen des Endgeräts an dem ersten Arbeitsfrequenzband, an dem die Netzwerkvorrichtung arbeitet, zu erfassen;
wobei eine einer zweiten Leistungsklasseninformation entsprechende Sendeleistung größer ist als eine einer ersten Leistungsklasseninformation entsprechende Sendeleistung;
oder,
wobei der Prozessor (800) ferner derart konfiguriert ist:
die maximal verfügbare, für das Endgerät im ersten Zeitfenster konfigurierte Ausgangsleistung gemäß den vom Endgerät gemeldeten zweiten Anzeigeinformationen zu bestimmen; oder
erste Leistungsklasseninformationen des Endgeräts an einem ersten Arbeitsfrequenzband, an dem die Netzwerkvorrichtung arbeitet, gemäß den vom Endgerät gemeldeten zweiten Anzeigeinformationen zu bestimmen; oder
gemäß den vom Endgerät gemeldeten zweiten Anzeigeinformationen mindestens eines der Folgenden zu bestimmen:
die maximale Uplink-Dauer des Endgeräts, die geplant oder übertragen werden kann, eine maximale Anzahl von Uplink-Slot(s) des Endgeräts, die geplant oder übertragen werden kann, eine maximale Anzahl von Uplink-Subframe(s) des Endgeräts, die geplant oder übertragen werden kann, eine maximale Anzahl von Uplink-Symbol(en) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, im ersten Zeitfenster.

28. Die Netzwerkvorrichtung nach Anspruch 26 oder 27, wobei der Prozessor (800) ferner derart konfiguriert ist:
eine Uplink-Ressourcenplanung oder eine Uplink-Übertragung für das Endgerät durchzuführen;
wobei eine Dauer einer geplanten oder übertragenen Ressource kleiner oder gleich einer maximalen Uplink-Dauer des Endgeräts ist, die geplant oder übertragen werden kann; oder
eine Anzahl von Slots der geplanten oder übertragenen Ressource kleiner oder gleich einer maximalen Anzahl von Uplink-Slot(s) des Endgeräts ist, die geplant oder übertragen werden kann; oder
eine Anzahl von Uplink-Subframes der geplanten oder übertragenen Ressource kleiner oder gleich einer maximalen Anzahl von Uplink-Subframe(s) des Endgeräts ist, die geplant oder übertragen werden kann; oder
eine Anzahl von Uplink-Symbolen der geplanten oder übertragenen Ressource kleiner oder gleich einer maximalen Anzahl von Uplink-Symbol(en) des Endgeräts ist, die geplant oder übertragen werden kann; oder
ein Uplink-Dauer-Prozentsatz der geplanten oder übertragenen Ressource kleiner oder gleich einem maximalen Prozentsatz einer Uplink-Dauer des Endgeräts ist, die geplant oder übertragen werden kann; oder
ein Uplink-Slot-Prozentsatz der geplanten oder übertragenen Ressource kleiner oder gleich einem maximalen Prozentsatz von Uplink-Slot(s) des Endgeräts ist, die geplant oder übertragen werden kann; oder
ein Uplink-Subframe-Prozentsatz der geplanten oder übertragenen Ressource kleiner oder gleich einem maximalen Prozentsatz von Uplink-Subframe(s) des Endgeräts ist, die geplant oder übertragen werden kann; oder
ein Uplink-Symbol-Prozentsatz der geplanten oder übertragenen Ressource kleiner oder gleich einem maximalen Prozentsatz von Uplink-Symbol(en) des Endgeräts ist, die geplant oder übertragen werden kann.

29. Die Netzwerkvorrichtung nach Anspruch 26 oder 27, wobei der Prozessor (800) ferner derart konfiguriert ist:
einen Leistungsanpassungswert an das Endgerät zu senden; wobei:
in einem Fall, dass der Leistungsanpassungswert auf das Endgerät angewandt wird, eine Sendeleistung des Endgeräts kleiner oder gleich einer maximal verfügbaren, für das Endgerät konfigurierten Ausgangsleistung ist; oder
in dem Fall, dass der Leistungsanpassungswert auf das Endgerät angewandt wird, die Sendeleistung des Endgeräts kleiner oder gleich einem einer ersten Leistungsklasse des Endgeräts an einem ersten Arbeitsfrequenzband entsprechenden Sendeleistungswert ist; oder
in dem Fall, dass der Leistungsanpassungswert auf das Endgerät angewandt wird, die Sendeleistung des Endgeräts kleiner oder gleich der maximal verfügbaren, für das Endgerät konfigurierten Ausgangsleistung in einem Fall ist, dass die aktuelle Uplink- und Downlink-Konfiguration der Netzwerkvorrichtung angewandt wird.

30. Die Netzwerkvorrichtung nach Anspruch 25, wobei:
das erste Zeitfenster ein vordefinierter Auswertungszeitraum ist; oder
das erste Zeitfenster ein Zeitraum für das Endgerät ist, um auszuwerten, ob die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren Uplink-Ressource des Endgeräts in einem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren, für das Endgerät konfigurierten Ausgangsleistung in dem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind.

31. Die Netzwerkvorrichtung nach Anspruch 25, wobei der Transceiver (810) ferner derart konfiguriert ist:
vor dem Empfangen der vom Endgerät gesendeten zweiten Anzeigeinformationen zweite Leistungsklasseninformationen des Endgeräts an dem ersten Arbeitsfrequenzband, an dem die Netzwerkvorrichtung arbeitet, zu empfangen;
wobei eine einer zweiten Leistungsklasseninformation entsprechende Sendeleistung größer ist als eine einer ersten Leistungsklasseninformation entsprechende Sendeleistung.

32. Die Netzwerkvorrichtung nach Anspruch 25, wobei der Prozessor (800) ferner derart konfiguriert ist:
eine Uplink-Ressourcenplanung oder eine Uplink-Übertragung für das Endgerät durchzuführen;
wobei:
eine Dauer einer geplanten oder übertragenen Ressource kleiner oder gleich einer maximalen Uplink-Dauer des Endgeräts im ersten Zeitfenster ist, die geplant oder übertragen werden kann; oder
eine Anzahl von Slots einer geplanten oder übertragenen Ressource kleiner oder gleich einer maximalen Anzahl von Uplink-Slot(s) des Endgeräts im ersten Zeitfenster ist, die geplant oder übertragen werden kann; oder
eine Anzahl von Uplink-Subframes einer geplanten oder übertragenen Ressource kleiner oder gleich einer maximalen Anzahl von Uplink-Subframe(s) des Endgeräts im ersten Zeitfenster ist, die geplant oder übertragen werden kann; oder
eine Anzahl von Uplink-Symbolen einer geplanten oder übertragenen Ressource kleiner oder gleich einer maximalen Anzahl von Uplink-Symbol(en) des Endgeräts im ersten Zeitfenster ist, die geplant oder übertragen werden kann; oder
ein Uplink-Dauer-Prozentsatz einer geplanten oder übertragenen Ressource kleiner oder gleich einem maximalen Prozentsatz einer Uplink-Dauer des Endgeräts im ersten Zeitfenster ist, die geplant oder übertragen werden kann; oder
ein Uplink-Slot-Prozentsatz einer geplanten oder übertragenen Ressource kleiner oder gleich einem maximalen Prozentsatz von Uplink-Slot(s) des Endgeräts im ersten Zeitfenster ist, die geplant oder übertragen werden kann; oder
ein Uplink-Subframe-Prozentsatz einer geplanten oder übertragenen Ressource kleiner oder gleich einem maximalen Prozentsatz von Uplink-Subframe(s) des Endgeräts im ersten Zeitfenster ist, die geplant oder übertragen werden kann; oder
ein Uplink-Symbol-Prozentsatz einer geplanten oder übertragenen Ressource kleiner oder gleich einem maximalen Prozentsatz von Uplink-Symbol(en) des Endgeräts im ersten Zeitfenster ist, die geplant oder übertragen werden kann;
oder, wobei der Prozessor (800) ferner derart konfiguriert ist:
einen Leistungsanpassungswert an das Endgerät zu senden; wobei:
in einem Fall, dass der Leistungsanpassungswert auf das Endgerät angewandt wird, eine Sendeleistung des Endgeräts kleiner oder gleich einer maximal verfügbaren, für das Endgerät konfigurierten Ausgangsleistung ist; oder
in dem Fall, dass der Leistungsanpassungswert auf das Endgerät angewandt wird, die Sendeleistung des Endgeräts kleiner oder gleich einem einer ersten Leistungsklasse des Endgeräts an einem ersten Arbeitsfrequenzband entsprechenden Sendeleistungswert ist; oder
in dem Fall, dass der Leistungsanpassungswert auf das Endgerät angewandt wird, die Sendeleistung des Endgeräts kleiner oder gleich der maximal verfügbaren, für das Endgerät konfigurierten Ausgangsleistung in einem Fall ist, dass die aktuelle Uplink- und Downlink-Konfiguration der Netzwerkvorrichtung angewandt wird.

33. Ein Endgerät, aufweisend einen Prozessor (900) und einen Transceiver (910), wobei der Prozessor (900) derart konfiguriert ist, den Transceiver (910) zu steuern zum:
Senden von zweiten Anzeigeinformationen an eine Netzwerkvorrichtung,
**dadurch gekennzeichnet, dass**
die zweiten Anzeigeinformationen Folgendes aufweisen:
mindestens eine der folgenden Informationen:
in einem ersten Zeitfenster eine maximale Uplink-Dauer des Endgeräts, die geplant oder übertragen werden kann, eine maximale Anzahl von Uplink-Slot(s) des Endgeräts, die geplant oder übertragen werden kann, eine maximale Anzahl von Uplink-Subframe(s) des Endgeräts, die geplant oder übertragen werden kann, eine maximale Anzahl von Uplink-Symbol(en) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, in dem Fall, dass der spezifische Absorptionsraten-, SAR-, Wert des Endgeräts einschlägigen Anforderung(en) an die elektromagnetische Energieabsorption oder den Anforderung(en) an die spezifische Absorptionsrate der elektromagnetischen Strahlung entspricht.

34. Das Endgerät nach Anspruch 33, wobei der Prozessor (900) vor dem Senden der zweiten Anzeigeinformationen an die Netzwerkvorrichtung ferner derart konfiguriert ist, den Transceiver (910) zu steuern zum:
Empfangen von ersten Anzeigeinformationen, die von der Netzwerkvorrichtung gesendet werden, wobei die ersten Anzeigeinformationen mindestens eines der folgenden aufweisen:
Ortsbereichsidentitätsinformation der Netzwerkvorrichtung;
Informationen einer aktuellen Uplink- und Downlink-Konfiguration der Netzwerkvorrichtung; und
Uplink-Ressourcensteuerungsinformationen, aufweisend mindestens eines von:
eine Anzahl von Uplink-Zeitbereichsressourcen, eine Anzahl von Uplink-Symbolen, eine Anzahl von Uplink-Slots, ein Uplink-Symbol-Tastverhältnis, ein Uplink-Slot-Tastverhältnis, eine maximale Anzahl verfügbarer Uplink-Zeitbereichsressourcen des Endgeräts, eine maximale Anzahl verfügbarer Uplink-Symbole des Endgeräts, eine maximale Anzahl verfügbarer Uplink-Slot(s) des Endgeräts, ein maximales verfügbares Uplink-Symbol-Tastverhältnis des Endgeräts, ein maximales Uplink-Slot-Tastverhältnis des Endgeräts, eine maximale Anzahl von Uplink-Zeitbereichsressourcen des Endgeräts, die geplant oder übertragen werden kann, eine maximale Anzahl von Uplink-Symbol(en) des Endgeräts, die geplant oder übertragen werden kann, eine maximale Anzahl von Uplink-Slot(s) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann, in dem ersten Zeitfenster.

35. Das Endgerät nach Anspruch 34, wobei der Transceiver (910) ferner derart konfiguriert ist:
vor dem Melden der zweiten Anzeigeinformationen an die Netzwerkvorrichtung zweite Leistungsklasseninformationen des Endgeräts an das erste Arbeitsfrequenzband, an dem die Netzwerkvorrichtung arbeitet, zu senden;
wobei eine einer zweiten Leistungsklasseninformation entsprechende Sendeleistung größer ist als eine einer ersten Leistungsklasseninformation entsprechende Sendeleistung.

36. Das Endgerät nach Anspruch 34, wobei, in einem Fall, dass die ersten Anzeigeinformationen die Ortsbereichsidentitätsinformation der Netzwerkvorrichtung aufweisen, der Prozessor (900) ferner derart konfiguriert ist:
gemäß einer Länderidentität in der Ortsbereichsidentitätsinformation der Netzwerkvorrichtung ein Land zu bestimmen, in dem sich die Netzwerkvorrichtung befindet, und die einschlägigen Anforderung(en) an die elektromagnetische Energieabsorption oder die Anforderung(en) an die spezifische Absorptionsrate der elektromagnetischen Strahlung abzurufen, die dem Land entsprechen; oder
gemäß einer Länderidentität und einer Betreiberidentität in der Ortsbereichsidentitätsinformation der Netzwerkvorrichtung ein Land und einen Betreiber zu bestimmen, in dem bzw. bei dem sich die Netzwerkvorrichtung befindet, und die einschlägigen Anforderung(en) an die elektromagnetische Energieabsorption oder die Anforderung(en) an die spezifische Absorptionsrate der elektromagnetischen Strahlung abzurufen, die dem Land und dem Betreiber entsprechen.

37. Das Endgerät nach Anspruch 34, wobei der Prozessor (900) ferner derart konfiguriert ist:
gemäß den ersten Anzeigeinformationen mindestens eines der folgenden zu bestimmen:
in einem Fall der Sicherstellung der Einhaltung der einschlägigen Anforderung(en) an die elektromagnetische Energieabsorption oder der Anforderung(en) an die spezifische Absorptionsrate der elektromagnetischen Strahlung mindestens eines der verfügbaren Uplink- und Downlink-Konfigurationsinformationen des Endgeräts, eine maximale Uplink-Dauer des Endgeräts, die geplant oder übertragen werden kann, eine maximale Anzahl von Uplink-Slot(s) des Endgeräts, die geplant oder übertragen werden kann, die maximale Anzahl von Uplink-Subframe(s) des Endgeräts, die geplant oder übertragen werden kann, eine maximale Anzahl von Uplink-Symbol(en) des Endgeräts, die geplant oder übertragen werden kann, einen maximalen Prozentsatz einer Uplink-Dauer des Endgeräts, die geplant oder übertragen werden kann, einen maximalen Prozentsatz von Uplink-Slot(s) des Endgeräts, die geplant oder übertragen werden kann, einen maximalen Prozentsatz von Uplink-Subframe(s) des Endgeräts, die geplant oder übertragen werden kann, und einen maximalen Prozentsatz von Uplink-Symbol(en) des Endgeräts, die geplant oder übertragen werden kann;
in einem Fall, dass die aktuelle Uplink- und Downlink-Konfiguration der Netzwerkvorrichtung angewandt wird, eine maximal verfügbare, für das Endgerät konfigurierte Ausgangsleistung in einem Fall der Sicherstellung der Einhaltung der einschlägigen Anforderung(en) an die elektromagnetische Energieabsorption oder der Anforderung(en) an die spezifische Absorptionsrate der elektromagnetischen Strahlung; und
die maximal verfügbaren, für das Endgerät konfigurierten Ausgangsleistungen in unterschiedlichen Uplink- und Downlink-Konfigurationen in dem Fall, dass die einschlägigen Anforderung(en) an die elektromagnetische Energieabsorption oder die Anforderung(en) an die spezifische Absorptionsrate der elektromagnetischen Strahlung erfüllt sind.

38. Das Endgerät nach Anspruch 34, wobei der Prozessor (900) ferner derart konfiguriert ist:
in einem Fall, dass eine Dauer einer geplanten oder übertragenen Ressource des Endgeräts größer ist als eine maximale Uplink-Dauer des Endgeräts im ersten Zeitfenster, die geplant oder übertragen werden kann, eine maximal verfügbare Ausgangsleistung des Endgeräts zu rekonfigurieren oder ein Power-Back-Off des Endgeräts durchzuführen; oder
in einem Fall, dass eine Anzahl von Slots einer geplanten oder übertragenen Ressource des Endgeräts größer ist als eine maximale Anzahl von Uplink-Slot(s) des Endgeräts im ersten Zeitfenster, die geplant oder übertragen werden kann, eine maximal verfügbare Ausgangsleistung des Endgeräts zu rekonfigurieren oder ein Power-Back-Off des Endgeräts durchzuführen; oder
in einem Fall, dass eine Anzahl von Uplink-Subframes einer geplanten oder übertragenen Ressource des Endgeräts größer ist als eine maximale Anzahl von Uplink-Subframe(s) des Endgeräts im ersten Zeitfenster, die geplant oder übertragen werden kann, eine maximal verfügbare Ausgangsleistung des Endgeräts zu rekonfigurieren oder ein Power-Back-Off des Endgeräts durchzuführen; oder
in einem Fall, dass eine Anzahl von Uplink-Symbol(en) einer geplanten oder übertragenen Ressource des Endgeräts größer ist als eine maximale Anzahl von Uplink-Symbol(en) des Endgeräts im ersten Zeitfenster, die geplant oder übertragen werden kann, eine maximal verfügbare Ausgangsleistung des Endgeräts zu rekonfigurieren oder ein Power-Back-Off des Endgeräts durchzuführen; oder
in einem Fall, dass ein Uplink-Dauer-Prozentsatz einer geplanten oder übertragenen Ressource des Endgeräts größer ist als ein maximaler Prozentsatz einer Uplink-Dauer des Endgeräts im ersten Zeitfenster, die geplant oder übertragen werden kann, eine maximal verfügbare Ausgangsleistung des Endgeräts zu rekonfigurieren oder ein Power-Back-Off des Endgeräts durchzuführen; oder
in einem Fall, dass ein Uplink-Slot-Prozentsatz einer geplanten oder übertragenen Ressource des Endgeräts größer ist als ein maximaler Prozentsatz von Uplink-Slot(s) des Endgeräts im ersten Zeitfenster, die geplant oder übertragen werden kann, eine maximal verfügbare Ausgangsleistung des Endgeräts zu rekonfigurieren oder ein Power-Back-Off des Endgeräts durchzuführen; der
in einem Fall, dass ein Uplink-Subframe-Prozentsatz einer geplanten oder übertragenen Ressource des Endgeräts größer ist als ein maximaler Prozentsatz von Uplink-Subframe(s) des Endgeräts im ersten Zeitfenster, die geplant oder übertragen werden kann, eine maximal verfügbare Ausgangsleistung des Endgeräts zu rekonfigurieren oder ein Power-Back-Off des Endgeräts durchzuführen; oder
in einem Fall, dass ein Uplink-Symbol-Prozentsatz einer geplanten oder übertragenen Ressource des Endgeräts größer ist als ein maximaler Prozentsatz von Uplink-Symbol(en) des Endgeräts im ersten Zeitfenster, die geplant oder übertragen werden kann, eine maximal verfügbare Ausgangsleistung des Endgeräts zu rekonfigurieren oder ein Power-Back-Off des Endgeräts durchzuführen.

39. Das Endgerät nach Anspruch 34 oder 35, wobei der Prozessor (900) ferner derart konfiguriert ist:
in einem Fall, dass ein geplanter oder übertragener Uplink-Symbol-Prozentsatz des Endgeräts im ersten Zeitfenster größer ist als eine Fähigkeit des Endgeräts, die den zweiten Anzeigeinformationen entspricht, alle Anforderungen für die erste Leistungsklasse auf eine unterstützte Leistungsklasse anzuwenden;
oder, wobei der Prozessor (900) ferner derart konfiguriert ist:
in einem Fall, dass ein geplanter oder übertragener Uplink-Symbol-Prozentsatz des Endgeräts im ersten Zeitfenster größer ist als eine Fähigkeit des Endgeräts, die den zweiten Anzeigeinformationen entspricht, eine untere Grenze eines maximalen Ausgangsleistungskonfigurationswertes des Endgeräts abzusenken.

40. Das Endgerät nach Anspruch 33, wobei:
das erste Zeitfenster ein vordefinierter Auswertungszeitraum ist; oder
das erste Zeitfenster ein Zeitraum für das Endgerät ist, um auszuwerten, ob die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren Uplink-Ressource des Endgeräts in einem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind; oder
das erste Zeitfenster ein Zeitraum einer maximal verfügbaren, für das Endgerät konfigurierten Ausgangsleistung in dem Fall ist, dass das Endgerät auswertet, dass die einschlägigen Anforderung(en) an die elektromagnetische Energieabsorption oder die Anforderung(en) an die spezifische Absorptionsrate der elektromagnetischen Strahlung erfüllt sind.

41. Das Endgerät nach Anspruch 33, wobei der Transceiver (910) ferner derart konfiguriert ist:
vor dem Senden der zweiten Anzeigeinformationen an die Netzwerkvorrichtung zweite Leistungsklasseninformationen des Endgeräts an das erste Arbeitsfrequenzband, an dem die Netzwerkvorrichtung arbeitet, zu senden;
wobei eine einer zweiten Leistungsklasseninformation entsprechende Sendeleistung größer ist als eine einer ersten Leistungsklasseninformation entsprechende Sendeleistung.

42. Das Endgerät nach Anspruch 33 oder 41, wobei der Prozessor (900) ferner derart konfiguriert ist:
in einem Fall, dass ein geplanter oder übertragener Uplink-Symbol-Prozentsatz des Endgeräts im ersten Zeitfenster größer ist als eine Fähigkeit des Endgeräts, die den zweiten Anzeigeinformationen entspricht, alle Anforderungen für die erste Leistungsklasse auf eine unterstützte Leistungsklasse anzuwenden;
oder,
der Prozessor (900) ferner derart konfiguriert ist:
in einem Fall, dass ein geplanter oder übertragener Uplink-Symbol-Prozentsatz des Endgeräts im ersten Zeitfenster größer ist als eine Fähigkeit des Endgeräts, die den zweiten Anzeigeinformationen entspricht, eine untere Grenze eines maximalen Ausgangsleistungskonfigurationswertes des Endgeräts abzusenken.

43. Ein computerlesbares Speichermedium, aufweisend Instruktionen, welche, wenn sie von einem Prozessor einer Netzwerkvorrichtung ausgeführt werden, den Prozessor veranlassen, das Verfahren der Ansprüche 1 bis 11 durchzuführen.

44. Ein computerlesbares Speichermedium, aufweisend Instruktionen, welche, wenn sie von einem Prozessor eines Endgeräts ausgeführt werden, den Prozessor veranlassen, das Verfahren der Ansprüche 12 bis 24 durchzuführen.

## Revendications

1. Une méthode de transmission d'informations, appliquée à un dispositif de réseau, comprenant:
la réception (601) d'une seconde information d'indication envoyée par un terminal, **caractérisée en ce que**,
la seconde information d'indication comprend:
au moins une des informations suivantes: dans une première fenêtre temporelle, une durée maximale de liaison montante pouvant être programmée ou transmise du terminal, une quantité maximale de créneaux de liaison montante pouvant être programmés ou transmis du terminal, une quantité maximale de sous-trames de liaison montante pouvant être programmées ou transmises du terminal, une quantité maximale de symboles de liaison montante pouvant être programmés ou transmis du terminal, un pourcentage maximal de durée de liaison montante pouvant être programmée ou transmise du terminal, un pourcentage maximal de créneaux de liaison montante pouvant être programmés ou transmis du terminal, un pourcentage maximal de sous-trames de liaison montante pouvant être programmées ou transmises du terminal et un pourcentage maximal de symboles de liaison montante pouvant être programmés ou transmis du terminal, dans le cas où la valeur du débit d'absorption spécifique, DAS, du terminal est conforme aux exigences applicables d'absorption d'énergie électromagnétique ou aux exigences du débit d'absorption spécifique de rayonnement électromagnétique.

2. La méthode selon la revendication 1, avant de recevoir (601) la seconde information d'indication envoyée par le terminal, comprenant en outre:
l'envoi (101) d'une première information d'indication au terminal, où la première information d'indication comprend au moins l'un des éléments suivants:
l'information d'identité de zone de localisation du dispositif de réseau;
l'information de configuration de liaison montante et descendante du dispositif de réseau; et
l'information de contrôle des ressources de liaison montante, comprenant au moins l'un des éléments suivants: une quantité de ressources du domaine temporel de liaison montante, une quantité de symboles de liaison montante, une quantité de créneaux de liaison montante, un rapport cyclique de symboles de liaison montante, un rapport cyclique de créneaux de liaison montante, une quantité maximale de ressources du domaine temporel de liaison montante disponibles du terminal, une quantité maximale de symboles de liaison montante disponibles du terminal, une quantité maximale de créneaux de liaison montante disponibles du terminal, un rapport cyclique maximal de symboles de liaison montante disponibles du terminal, un rapport cyclique maximal de créneaux de liaison montante du terminal, une quantité maximale de ressources du domaine temporel de liaison montante pouvant être programmées ou transmises du terminal, une quantité maximale de symbole(s) de liaison montante pouvant être programmés ou transmis du terminal, une quantité maximale de créneau(x) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal dans la première fenêtre temporelle.

3. La méthode selon la revendication 2, dans laquelle l'envoi (101) de la première information d'indication au terminal comprend:
l'envoi de la première information d'indication au terminal par le biais d'informations de diffusion; ou l'envoi de la première information d'indication au terminal par le biais d'une signalisation dédiée.

4. La méthode selon la revendication 2, dans laquelle
la première fenêtre temporelle comprend au moins une période de structure de trame; ou
la première fenêtre temporelle comprend au moins un créneau; ou
la première fenêtre temporelle comprend au moins une sous-trame; ou,
la première fenêtre temporelle comprend au moins un symbole; ou
la première fenêtre temporelle comprend au moins une mil-liseconde.

5. La méthode selon la revendication 2 ou 4, dans laquelle
la première fenêtre temporelle est une période d'évaluation prédéfinie;
la première fenêtre temporelle est une référence temporelle pour que le terminal évalue si les exigences applicables d'absorption d'énergie électromagnétique ou les exigences du débit d'absorption spécifique de rayonnement électromagnétique sont satisfaites; ou
la première fenêtre temporelle est une plage temporelle d'une ressource maximale de liaison montante disponible du terminal dans le cas où le terminal évalue que les exigences applicables d'absorption d'énergie électromagnétique ou les exigences du débit d'absorption spécifique de rayonnement électromagnétique sont satisfaites; ou
la première fenêtre temporelle est une plage temporelle d'une puissance de sortie maximale disponible configurée pour le terminal dans le cas où le terminal évalue que les exigences applicables d'absorption d'énergie électromagnétique ou les exigences du débit d'absorption spécifique de rayonnement électromagnétique sont satisfaites.

6. La méthode selon la revendication 2, comprenant en outre:
avant d'acquérir la seconde information d'indication, l'acquisition d'une seconde information de classe de puissance du terminal à la première bande de fréquence de travail où fonctionne le dispositif de réseau;
dans laquelle une puissance de transmission correspondant à la seconde information de classe de puissance est supérieure à une puissance de transmission correspondant à une première information de classe de puissance;
ou
la méthode comprend en outre:
la détermination de la puissance de sortie maximale disponible configurée pour le terminal dans la première fenêtre temporelle, selon la seconde information d'indication rapportée par le terminal; ou
la détermination de la première information de classe de puissance du terminal à une première bande de fréquence de travail où fonctionne le dispositif de réseau, selon la seconde information d'indication rapportée par le terminal; ou
la détermination, selon la seconde information d'indication rapportée par le terminal, d'au moins l'un des éléments suivants: la durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal dans la première fenêtre temporelle; ou
dans laquelle la méthode comprend en outre:
l'envoi, par le dispositif de réseau, d'une valeur d'ajustement de puissance au terminal; dans laquelle
dans le cas où la valeur d'ajustement de puissance est appliquée au terminal, une puissance de transmission du terminal est inférieure ou égale à une puissance de sortie maximale disponible configurée pour le terminal; ou
dans le cas où la valeur d'ajustement de puissance est appliquée au terminal, la puissance de transmission du terminal est inférieure ou égale à une valeur de puissance de transmission correspondant à une première classe de puissance du terminal à une première bande de fréquence de travail; ou
dans le cas où la valeur d'ajustement de puissance est appliquée au terminal, la puissance de transmission du terminal est inférieure ou égale à la puissance de sortie maximale disponible configurée pour le terminal dans le cas où la configuration actuelle de liaison montante et descendante du dispositif de réseau est appliquée.

7. La méthode selon la revendication 2, dans laquelle soit la méthode comprend en outre:
dans le cas où une configuration actuelle de liaison montante et descendante du dispositif de réseau est appliquée, la détermination d'une puissance de sortie maximale disponible configurée pour le terminal dans le cas d'assurer la conformité avec les exigences applicables d'absorption d'énergie électromagnétique ou les exigences du débit d'absorption spécifique de rayonnement électromagnétique; ou
dans le cas où la configuration actuelle de liaison montante et descendante du dispositif de réseau est appliquée, la détermination d'au moins l'un des éléments suivants: une durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, la quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal; ou
la détermination de la première information de classe de puissance du terminal à une première bande de fréquence de travail où fonctionne le dispositif de réseau; ou
la détermination d'une puissance de sortie maximale disponible configurée pour le terminal dans la première fenêtre temporelle; ou
la détermination d'au moins l'un des éléments suivants: une durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal dans la première fenêtre temporelle;
ou,
dans laquelle la méthode comprend en outre:
l'exécution par le dispositif de réseau d'une programmation de ressources de liaison montante ou d'une transmission de liaison montante pour le terminal;
dans laquelle une durée de ressource programmée ou transmise est inférieure ou égale à une durée maximale de liaison montante pouvant être programmée ou transmise du terminal; ou
une quantité de créneaux de la ressource programmée ou transmise est inférieure ou égale à une quantité maximale de créneau(x) de liaison montante pouvant être programmés ou transmis du terminal; ou
une quantité de sous-trames de liaison montante de la ressource programmée ou transmise est inférieure ou égale à une quantité maximale de sous-trame(s) de liaison montante pouvant être programmées ou transmises du terminal; ou
une quantité de symboles de liaison montante de la ressource programmée ou transmise est inférieure ou égale à une quantité maximale de symbole(s) de liaison montante pouvant être programmés ou transmis du terminal; ou
un pourcentage de durée de liaison montante de la ressource programmée ou transmise est inférieur ou égal à un pourcentage maximal de durée de liaison montante pouvant être programmée ou transmise du terminal; ou
un pourcentage de créneaux de liaison montante de la ressource programmée ou transmise est inférieur ou égal à un pourcentage maximal de créneau(x) de liaison montante pouvant être programmés ou transmis du terminal; ou
un pourcentage de sous-trames de liaison montante de la ressource programmée ou transmise est inférieur ou égal à un pourcentage maximal de sous-trame(s) de liaison montante pouvant être programmées ou transmises du terminal; ou
un pourcentage de symboles de liaison montante de la ressource programmée ou transmise est inférieur ou égal à un pourcentage maximal de symbole(s) de liaison montante pouvant être programmés ou transmis du terminal.

8. La méthode selon la revendication 1, dans laquelle
la première fenêtre temporelle comprend au moins une période de structure de trame; ou
la première fenêtre temporelle comprend au moins un créneau; ou
la première fenêtre temporelle comprend au moins une sous-trame; ou,
la première fenêtre temporelle comprend au moins un symbole; ou
la première fenêtre temporelle comprend au moins une milliseconde.

9. La méthode selon la revendication 1 ou 8, dans laquelle la première fenêtre temporelle est une période d'évaluation prédéfinie;
la première fenêtre temporelle est une plage temporelle pour que le terminal évalue si les exigences applicables d'absorption d'énergie électromagnétique ou les exigences du débit d'absorption spécifique de rayonnement électromagnétique sont satisfaites; ou
la première fenêtre temporelle est une plage temporelle d'une ressource maximale de liaison montante disponible du terminal dans le cas où le terminal évalue que les exigences applicables d'absorption d'énergie électromagnétique ou les exigences du débit d'absorption spécifique de rayonnement électromagnétique sont satisfaites; ou
la première fenêtre temporelle est une plage temporelle d'une puissance de sortie maximale disponible configurée pour le terminal dans le cas où le terminal évalue que les exigences applicables d'absorption d'énergie électromagnétique ou les exigences du débit d'absorption spécifique de rayonnement électromagnétique sont satisfaites.

10. La méthode selon la revendication 1, comprenant en outre:
avant de recevoir la seconde information d'indication envoyée par le terminal, la réception d'une seconde information de classe de puissance du terminal à la première bande de fréquence de travail où fonctionne le dispositif de réseau qui est envoyée par le terminal;
dans laquelle une puissance de transmission correspondant à la seconde information de classe de puissance est supérieure à une puissance de transmission correspondant à une première information de classe de puissance.

11. La méthode selon la revendication 1, comprenant en outre:
l'exécution par le dispositif de réseau d'une programmation de ressources de liaison montante ou d'une transmission de liaison montante pour le terminal;
une durée de ressource programmée ou transmise est inférieure ou égale à la durée maximale de liaison montante pouvant être programmée ou transmise du terminal dans la première fenêtre temporelle; ou
une quantité de créneaux de ressource programmée ou transmise est inférieure ou égale à une quantité maximale de créneau(x) de liaison montante pouvant être programmés ou transmis du terminal dans la première fenêtre temporelle; ou
une quantité de sous-trames de liaison montante de ressource programmée ou transmise est inférieure ou égale à une quantité maximale de sous-trame(s) de liaison montante pouvant être programmées ou transmises du terminal dans la première fenêtre temporelle; ou
une quantité de symboles de liaison montante de ressource programmée ou transmise est inférieure ou égale à une quantité maximale de symbole(s) de liaison montante pouvant être programmés ou transmis du terminal dans la première fenêtre temporelle; ou
un pourcentage de durée de liaison montante de ressource programmée ou transmise est inférieur ou égal à un pourcentage maximal de durée de liaison montante pouvant être programmée ou transmise du terminal dans la première fenêtre temporelle; ou
un pourcentage de créneaux de liaison montante de ressource programmée ou transmise est inférieur ou égal à un pourcentage maximal de créneau(x) de liaison montante pouvant être programmés ou transmis du terminal dans la première fenêtre temporelle; ou
un pourcentage de sous-trames de liaison montante de ressource programmée ou transmise est inférieur ou égal à un pourcentage maximal de sous-trame(s) de liaison montante pouvant être programmées ou transmises du terminal dans la première fenêtre temporelle; ou
un pourcentage de symboles de liaison montante de ressource programmée ou transmise est inférieur ou égal à un pourcentage maximal de symbole(s) de liaison montante pouvant être programmés ou transmis du terminal dans la première fenêtre temporelle;
ou,
la méthode comprend en outre:
l'envoi, par le dispositif de réseau, d'une valeur d'ajustement de puissance au terminal; dans laquelle
dans le cas où la valeur d'ajustement de puissance est appliquée au terminal, une puissance de transmission du terminal est inférieure ou égale à une puissance de sortie maximale disponible configurée pour le terminal; ou
dans le cas où la valeur d'ajustement de puissance est appliquée au terminal, la puissance de transmission du terminal est inférieure ou égale à une valeur de puissance de transmission correspondant à une première classe de puissance du terminal à une première bande de fréquence de travail; ou
dans le cas où la valeur d'ajustement de puissance est appliquée au terminal, la puissance de transmission du terminal est inférieure ou égale à la puissance de sortie maximale disponible configurée pour le terminal dans le cas où la configuration actuelle de liaison montante et descendante du dispositif de réseau est appliquée.

12. Une méthode de transmission d'informations, appliquée à un terminal, comprenant: l'envoi (501) d'une seconde information d'indication à un dispositif de réseau,
**caractérisée en ce que**,
la seconde information d'indication comprend:
au moins une des informations suivantes: dans une première fenêtre temporelle, une durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal, dans le cas où la valeur du débit d'absorption spécifique, DAS, du terminal est conforme aux exigences applicables d'absorption d'énergie électromagnétique ou aux exigences du débit d'absorption spécifique de rayonnement électromagnétique.

13. La méthode selon la revendication 12, avant d'envoyer (501) la seconde information d'indication au dispositif de réseau, comprenant en outre:
la réception (201) d'une première information d'indication envoyée par le dispositif de réseau, où la première information d'indication comprend au moins l'un des éléments suivants:
l'information d'identité de zone de localisation du dispositif de réseau;
l'information de configuration actuelle de liaison montante et descendante du dispositif de réseau; et
l'information de contrôle des ressources de liaison montante, comprenant au moins l'un des éléments suivants: une quantité de ressources du domaine temporel de liaison montante, une quantité de symboles de liaison montante, une quantité de créneaux de liaison montante, un rapport cyclique de symboles de liaison montante, un rapport cyclique de créneaux de liaison montante, une quantité maximale de ressources du domaine temporel de liaison montante disponibles du terminal, une quantité maximale de symboles de liaison montante disponibles du terminal, une quantité maximale de créneaux de liaison montante disponibles du terminal, un rapport cyclique maximal de symboles de liaison montante disponibles du terminal, un rapport cyclique maximal de créneaux de liaison montante du terminal, une quantité maximale de ressources du domaine temporel de liaison montante pouvant être programmées ou transmises du terminal, une quantité maximale de symbole(s) de liaison montante pouvant être programmés ou transmis du terminal, une quantité maximale de créneau(x) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal dans la première fenêtre temporelle.

14. La méthode selon la revendication 13, dans laquelle la réception (201) de la première information d'indication envoyée par le dispositif de réseau comprend:
la réception de la première information d'indication du dispositif de réseau envoyée par le dispositif de réseau par le biais d'informations de diffusion; ou
la réception de la première information d'indication du dispositif de réseau envoyée par le dispositif de réseau par le biais d'une signalisation dédiée.

15. La méthode selon la revendication 13, dans laquelle
la première fenêtre temporelle comprend au moins une période de structure de trame; ou
la première fenêtre temporelle comprend au moins un créneau; ou
la première fenêtre temporelle comprend au moins une sous-trame; ou,
la première fenêtre temporelle comprend au moins un symbole; ou
la première fenêtre temporelle comprend au moins une mil-liseconde.

16. La méthode selon la revendication 13 ou 15, dans laquelle
la première fenêtre temporelle est une période d'évaluation prédéfinie;
la première fenêtre temporelle est une plage temporelle pour que le terminal évalue si les exigences applicables d'absorption d'énergie électromagnétique ou les exigences du débit d'absorption spécifique de rayonnement électromagnétique sont satisfaites; ou
la première fenêtre temporelle est une plage temporelle d'une ressource maximale de liaison montante disponible du terminal dans le cas où le terminal évalue que les exigences applicables d'absorption d'énergie électromagnétique ou les exigences du débit d'absorption spécifique de rayonnement électromagnétique sont satisfaites; ou
la première fenêtre temporelle est une plage temporelle d'une puissance de sortie maximale disponible configurée pour le terminal dans le cas où le terminal évalue que les exigences applicables d'absorption d'énergie électromagnétique ou les exigences du débit d'absorption spécifique de rayonnement électromagnétique sont satisfaites.

17. La méthode selon la revendication 13,
dans laquelle la méthode comprend en outre:
avant de rapporter la seconde information d'indication au dispositif de réseau, l'envoi, au dispositif de réseau, d'une seconde information de classe de puissance du terminal à la première bande de fréquence de travail où fonctionne le dispositif de réseau;
dans laquelle une puissance de transmission correspondant à la seconde information de classe de puissance est supérieure à une puissance de transmission correspondant à une première information de classe de puissance.

18. La méthode selon la revendication 13, comprenant en outre:
la détermination, selon la première information d'indication, d'au moins l'un des éléments suivants:
dans le cas d'assurer la conformité avec les exigences applicables d'absorption d'énergie électromagnétique ou les exigences du débit d'absorption spécifique de rayonnement électromagnétique, au moins l'une des informations de configuration de liaison montante et descendante disponibles du terminal, une durée maximale de liaison montante pouvant être programmée ou transmise du terminal, une quantité maximale de créneau(x) de liaison montante pouvant être programmés ou transmis du terminal, la quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal;
dans le cas où la configuration actuelle de liaison montante et descendante du dispositif de réseau est appliquée, une puissance de sortie maximale disponible configurée pour le terminal dans le cas d'assurer la conformité avec les exigences applicables d'absorption d'énergie électromagnétique ou les exigences du débit d'absorption spécifique de rayonnement électromagnétique; et
les puissances de sortie maximales disponibles configurées pour le terminal dans différentes configurations de liaison montante et descendante, dans le cas où les exigences applicables d'absorption d'énergie électromagnétique ou les exigences du débit d'absorption spécifique de rayonnement électromagnétique sont satisfaites;
dans laquelle la méthode comprend en outre:
la reconfiguration d'une puissance de sortie maximale disponible du terminal, ou le contrôle du terminal pour effectuer un recul de puissance, ou l'interdiction d'une transmission d'au moins une pièce d'information de liaison montante du terminal; dans laquelle l'information de liaison montante comprend: un créneau de liaison montante, ou une sous-trame de liaison montante, ou un symbole de liaison montante;
dans laquelle l'interdiction de la transmission de l'au moins une pièce d'information de liaison montante du terminal comprend:
dans le cas d'assurer la conformité avec les exigences applicables d'absorption d'énergie électromagnétique ou les exigences du débit d'absorption spécifique de rayonnement électromagnétique, la détermination, selon la première information d'indication, d'au moins l'une des informations de configuration de liaison montante et descendante disponibles du terminal, une durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal;
dans le cas où une durée de liaison montante programmée par le dispositif de réseau pour le terminal est supérieure à une durée maximale de liaison montante pouvant être programmée ou transmise du terminal ou dans le cas où un pourcentage de durée de liaison montante programmé par le dispositif de réseau pour le terminal est supérieur à un pourcentage maximal de durée de liaison montante pouvant être programmée ou transmise du terminal, l'interdiction d'une transmission de données sur au moins une unité temporelle de liaison montante; ou
dans le cas où une quantité de ressources de créneaux de liaison montante programmée par le dispositif de réseau pour le terminal est supérieure à une quantité maximale de ressources de créneaux de liaison montante pouvant être programmés ou transmis du terminal ou dans le cas où un pourcentage de créneaux de liaison montante programmé par le dispositif de réseau pour le terminal est supérieur à un pourcentage maximal de créneau(x) de liaison montante pouvant être programmés ou transmis du terminal, l'interdiction d'une transmission de données sur une ressource d'au moins un créneau de liaison montante; ou
dans le cas où une quantité de ressources de sous-trames de liaison montante programmée par le dispositif de réseau pour le terminal est supérieure à une quantité maximale de sous-trame(s) de liaison montante pouvant être programmées ou transmises du terminal ou dans le cas où un pourcentage de sous-trames de liaison montante programmé par le dispositif de réseau pour le terminal est supérieur à un pourcentage maximal de sous-trame(s) de liaison montante pouvant être programmées ou transmises du terminal, l'interdiction d'une transmission de données sur une ressource d'au moins une sous-trame de liaison montante; ou
dans le cas où une quantité de ressources de symboles de liaison montante programmée par le dispositif de réseau pour le terminal est supérieure à une quantité maximale de symbole(s) de liaison montante pouvant être programmés ou transmis du terminal ou dans le cas où un pourcentage de symboles de liaison montante programmé par le dispositif de réseau pour le terminal est supérieur à un pourcentage maximal de symbole(s) de liaison montante pouvant être programmés ou transmis du terminal, l'interdiction d'une transmission de données sur une ressource d'au moins un symbole de liaison montante.

19. La méthode selon la revendication 13, comprenant en outre:
dans le cas où une durée de ressource programmée ou transmise du terminal est supérieure à une durée maximale de liaison montante pouvant être programmée ou transmise du terminal dans la première fenêtre temporelle, la reconfiguration, par le terminal, d'une puissance de sortie maximale disponible du terminal ou l'exécution d'un recul de puissance par le terminal; ou
dans le cas où une quantité de créneaux de ressource programmée ou transmise du terminal est supérieure à une quantité maximale de créneau(x) de liaison montante pouvant être programmés ou transmis du terminal dans la première fenêtre temporelle, la reconfiguration, par le terminal, d'une puissance de sortie maximale disponible du terminal ou l'exécution d'un recul de puissance par le terminal; ou
dans le cas où une quantité de sous-trames de liaison montante de ressource programmée ou transmise du terminal est supérieure à une quantité maximale de sous-trame(s) de liaison montante pouvant être programmées ou transmises du terminal dans la première fenêtre temporelle, la reconfiguration, par le terminal, d'une puissance de sortie maximale disponible du terminal ou l'exécution d'un recul de puissance par le terminal;
ou
dans le cas où une quantité de symboles de liaison montante de ressource programmée ou transmise du terminal est supérieure à une quantité maximale de symbole(s) de liaison montante pouvant être programmés ou transmis du terminal dans la première fenêtre temporelle, la reconfiguration, par le terminal, d'une puissance de sortie maximale disponible du terminal ou l'exécution d'un recul de puissance par le terminal; ou
dans le cas où un pourcentage de durée de liaison montante de ressource programmée ou transmise du terminal est supérieur à un pourcentage maximal de durée de liaison montante pouvant être programmée ou transmise du terminal dans la première fenêtre temporelle, la reconfiguration, par le terminal, d'une puissance de sortie maximale disponible du terminal ou l'exécution d'un recul de puissance par le terminal; ou
dans le cas où un pourcentage de créneaux de liaison montante de ressource programmée ou transmise du terminal est supérieur à un pourcentage maximal de créneau(x) de liaison montante pouvant être programmés ou transmis du terminal dans la première fenêtre temporelle, la reconfiguration, par le terminal, d'une puissance de sortie maximale disponible du terminal ou l'exécution d'un recul de puissance par le terminal; ou
dans le cas où un pourcentage de sous-trames de liaison montante de ressource programmée ou transmise du terminal est supérieur à un pourcentage maximal de sous-trame(s) de liaison montante pouvant être programmées ou transmises du terminal dans la première fenêtre temporelle, la reconfiguration, par le terminal, d'une puissance de sortie maximale disponible du terminal ou l'exécution d'un recul de puissance par le terminal; ou
dans le cas où un pourcentage de symboles de liaison montante de ressource programmée ou transmise du terminal est supérieur à un pourcentage maximal de symbole(s) de liaison montante pouvant être programmés ou transmis du terminal dans la première fenêtre temporelle, la reconfiguration, par le terminal, d'une puissance de sortie maximale disponible du terminal ou l'exécution d'un recul de puissance par le terminal;
dans laquelle la méthode comprend en outre:
le rapport d'une puissance de sortie maximale disponible re-configurée du terminal au dispositif de réseau; ou
dans le cas où la ressource de liaison montante programmée du terminal dans la première fenêtre temporelle dépasse un premier seuil, l'exécution, par le terminal, du recul de puissance, pour faire en sorte qu'une valeur de puissance du terminal soit inférieure ou égale à une puissance de sortie maximale disponible configurée pour le terminal.

20. La méthode selon la revendication 13 ou 17, comprenant en outre:
dans le cas où le pourcentage de symboles de liaison montante programmé ou transmis du terminal dans la première fenêtre temporelle est supérieur à une capacité du terminal correspondant à la seconde information d'indication, l'application de toutes les exigences pour la première classe de puissance à une classe de puissance prise en charge;
ou,
la méthode comprend en outre:
dans le cas où le pourcentage de symboles de liaison montante programmé ou transmis du terminal dans la première fenêtre temporelle est supérieur à une capacité du terminal correspondant à la seconde information d'indication, l'abaissement d'une limite inférieure d'une valeur de configuration de puissance de transmission maximale du terminal.

21. La méthode selon la revendication 12, dans laquelle
la première fenêtre temporelle comprend au moins une période de structure de trame; ou
la première fenêtre temporelle comprend au moins un créneau; ou
la première fenêtre temporelle comprend au moins une sous-trame; ou,
la première fenêtre temporelle comprend au moins un symbole;
ou
la première fenêtre temporelle comprend au moins une mil-liseconde.

22. La méthode selon la revendication 12 ou 21, dans laquelle
la première fenêtre temporelle est une période d'évaluation prédéfinie;
la première fenêtre temporelle est une plage temporelle pour que le terminal évalue si les exigences applicables d'absorption d'énergie électromagnétique ou les exigences du débit d'absorption spécifique de rayonnement électromagnétique sont satisfaites; ou
la première fenêtre temporelle est une plage temporelle d'une ressource maximale de liaison montante disponible du terminal dans le cas où le terminal évalue que les exigences applicables d'absorption d'énergie électromagnétique ou les exigences du débit d'absorption spécifique de rayonnement électromagnétique sont satisfaites; ou
la première fenêtre temporelle est une plage temporelle d'une puissance de sortie maximale disponible configurée pour le terminal dans le cas où le terminal évalue que les exigences applicables d'absorption d'énergie électromagnétique ou les exigences du débit d'absorption spécifique de rayonnement électromagnétique sont satisfaites.

23. La méthode selon la revendication 12, comprenant en outre:
avant d'envoyer la seconde information d'indication au dispositif de réseau, l'envoi, au dispositif de réseau, d'une seconde information de classe de puissance du terminal à la première bande de fréquence de travail où fonctionne le dispositif de réseau;
dans laquelle une puissance de transmission correspondant à la seconde information de classe de puissance est supérieure à une puissance de transmission correspondant à une première information de classe de puissance.

24. La méthode selon la revendication 12 ou 23, comprenant en outre:
dans le cas où le pourcentage de symboles de liaison montante programmé ou transmis du terminal dans la première fenêtre temporelle est supérieur à une capacité du terminal correspondant à la seconde information d'indication, l'application de toutes les exigences pour la première classe de puissance à une classe de puissance prise en charge;
ou,
la méthode comprend en outre:
dans le cas où le pourcentage de symboles de liaison montante programmé ou transmis du terminal dans la première fenêtre temporelle est supérieur à une capacité du terminal correspondant à la seconde information d'indication, l'abaissement d'une limite inférieure d'une valeur de configuration de puissance de transmission maximale du terminal.

25. Un dispositif de réseau, comprenant un processeur (800) et un émetteur-récepteur (810), dans lequel le processeur (800) est configuré pour contrôler l'émetteur-récepteur (810) pour:
recevoir une seconde information d'indication envoyée par un terminal,
**caractérisé en ce que**,
la seconde information d'indication comprend:
au moins une des informations suivantes: dans une première fenêtre temporelle, une durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal, dans le cas où la valeur du débit d'absorption spécifique, DAS, du terminal est conforme aux exigences applicables d'absorption d'énergie électromagnétique ou aux exigences du débit d'absorption spécifique de rayonnement électromagnétique.

26. Le dispositif de réseau selon la revendication 25, dans lequel avant de recevoir la seconde information d'indication rapportée par le terminal, l'émetteur-récepteur (810) est en outre configuré pour:
envoyer une première information d'indication au terminal, dans laquelle la première information d'indication comprend au moins l'un des éléments suivants:
l'information d'identité de zone de localisation du dispositif de réseau;
l'information de configuration actuelle de liaison montante et descendante du dispositif de réseau; et
l'information de contrôle des ressources de liaison montante, comprenant au moins l'un des éléments suivants: une quantité de ressources du domaine temporel de liaison montante, une quantité de symboles de liaison montante, une quantité de créneaux de liaison montante, un rapport cyclique de symboles de liaison montante, un rapport cyclique de créneaux de liaison montante, une quantité maximale de ressources du domaine temporel de liaison montante disponibles du terminal, une quantité maximale de symboles de liaison montante disponibles du terminal, une quantité maximale de créneaux de liaison montante disponibles du terminal, un rapport cyclique maximal de symboles de liaison montante disponibles du terminal, un rapport cyclique maximal de créneaux de liaison montante du terminal, une quantité maximale de ressources du domaine temporel de liaison montante pouvant être programmées ou transmises du terminal, une quantité maximale de symbole(s) de liaison montante pouvant être programmés ou transmis du terminal, une quantité maximale de créneau(x) de liaison montante pouvant être programmés ou transmis du terminal, un pourcentage maximal de durée de liaison montante pouvant être programmée ou transmise du terminal, un pourcentage maximal de créneau pouvant être programmé ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal dans la première fenêtre temporelle.

27. Le dispositif de réseau selon la revendication 26, dans lequel l'émetteur-récepteur (810) est en outre configuré pour:
avant d'acquérir la seconde information d'indication, acquérir une seconde information de classe de puissance du terminal à la première bande de fréquence de travail où fonctionne le dispositif de réseau;
dans lequel une puissance de transmission correspondant à la seconde information de classe de puissance est supérieure à une puissance de transmission correspondant à une première information de classe de puissance;
ou,
le processeur (800) est en outre configuré pour:
déterminer la puissance de sortie maximale disponible configurée pour le terminal dans la première fenêtre temporelle, selon la seconde information d'indication rapportée par le terminal; ou
déterminer la première information de classe de puissance du terminal à une première bande de fréquence de travail où fonctionne le dispositif de réseau, selon la seconde information d'indication rapportée par le terminal; ou
déterminer, selon la seconde information d'indication rapportée par le terminal, au moins l'un des éléments suivants: la durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal dans la première fenêtre temporelle.

28. Le dispositif de réseau selon la revendication 26 ou 27, dans lequel le processeur (800) est en outre configuré pour:
exécuter une programmation de ressources de liaison montante ou une transmission de liaison montante pour le terminal;
dans lequel une durée de ressource programmée ou transmise est inférieure ou égale à une durée maximale de liaison montante pouvant être programmée ou transmise du terminal; ou
une quantité de créneaux de la ressource programmée ou transmise est inférieure ou égale à une quantité maximale de créneau(x) de liaison montante pouvant être programmés ou transmis du terminal; ou
une quantité de sous-trames de liaison montante de la ressource programmée ou transmise est inférieure ou égale à une quantité maximale de sous-trame(s) de liaison montante pouvant être programmées ou transmises du terminal; ou
une quantité de symboles de liaison montante de la ressource programmée ou transmise est inférieure ou égale à une quantité maximale de symbole(s) de liaison montante pouvant être programmés ou transmis du terminal; ou
un pourcentage de durée de liaison montante de la ressource programmée ou transmise est inférieur ou égal à un pourcentage maximal de durée de liaison montante pouvant être programmée ou transmise du terminal; ou
un pourcentage de créneaux de liaison montante de la ressource programmée ou transmise est inférieur ou égal à un pourcentage maximal de créneau(x) de liaison montante pouvant être programmés ou transmis du terminal; ou
un pourcentage de sous-trames de liaison montante de la ressource programmée ou transmise est inférieur ou égal à un pourcentage maximal de sous-trame(s) de liaison montante pouvant être programmées ou transmises du terminal; ou
un pourcentage de symboles de liaison montante de la ressource programmée ou transmise est inférieur ou égal à un pourcentage maximal de symbole(s) de liaison montante pouvant être programmés ou transmis du terminal.

29. Le dispositif de réseau selon la revendication 26 ou 27, dans lequel le processeur (800) est en outre configuré pour:
envoyer une valeur d'ajustement de puissance au terminal;
dans lequel
dans le cas où la valeur d'ajustement de puissance est appliquée au terminal, une puissance de transmission du terminal est inférieure ou égale à une puissance de sortie maximale disponible configurée pour le terminal; ou
dans le cas où la valeur d'ajustement de puissance est appliquée au terminal, la puissance de transmission du terminal est inférieure ou égale à une valeur de puissance de transmission correspondant à une première classe de puissance du terminal à une première bande de fréquence de travail; ou
dans le cas où la valeur d'ajustement de puissance est appliquée au terminal, la puissance de transmission du terminal est inférieure ou égale à la puissance de sortie maximale disponible configurée pour le terminal dans le cas où la configuration actuelle de liaison montante et descendante du dispositif de réseau est appliquée.

30. Le dispositif de réseau selon la revendication 25, dans lequel la première fenêtre temporelle est une période d'évaluation prédéfinie;
la première fenêtre temporelle est une plage temporelle pour que le terminal évalue si les exigences applicables d'absorption d'énergie électromagnétique ou les exigences du débit d'absorption spécifique de rayonnement électromagnétique sont satisfaites; ou
la première fenêtre temporelle est une plage temporelle d'une ressource maximale de liaison montante disponible du terminal dans le cas où le terminal évalue que les exigences applicables d'absorption d'énergie électromagnétique ou les exigences du débit d'absorption spécifique de rayonnement électromagnétique sont satisfaites; ou
la première fenêtre temporelle est une plage temporelle d'une puissance de sortie maximale disponible configurée pour le terminal dans le cas où le terminal évalue que les exigences applicables d'absorption d'énergie électromagnétique ou les exigences du débit d'absorption spécifique de rayonnement électromagnétique sont satisfaites.

31. Le dispositif de réseau selon la revendication 25, dans lequel l'émetteur-récepteur (810) est en outre configuré pour:
avant de recevoir la seconde information d'indication envoyée par le terminal, recevoir une seconde information de classe de puissance du terminal à la première bande de fréquence de travail où fonctionne le dispositif de réseau qui est envoyée par le terminal;
dans lequel une puissance de transmission correspondant à la seconde information de classe de puissance est supérieure à une puissance de transmission correspondant à une première information de classe de puissance.

32. Le dispositif de réseau selon la revendication 25, dans lequel le processeur (800) est en outre configuré pour:
exécuter une programmation de ressources de liaison montante ou une transmission de liaison montante pour le terminal;
une durée de ressource programmée ou transmise est inférieure ou égale à la durée maximale de liaison montante pouvant être programmée ou transmise du terminal dans la première fenêtre temporelle; ou
une quantité de créneaux de ressource programmée ou transmise est inférieure ou égale à une quantité maximale de créneau(x) de liaison montante pouvant être programmés ou transmis du terminal dans la première fenêtre temporelle; ou
une quantité de sous-trames de liaison montante de ressource programmée ou transmise est inférieure ou égale à une quantité maximale de sous-trame(s) de liaison montante pouvant être programmées ou transmises du terminal dans la première fenêtre temporelle; ou
une quantité de symboles de liaison montante de ressource programmée ou transmise est inférieure ou égale à une quantité maximale de symbole(s) de liaison montante pouvant être programmés ou transmis du terminal dans la première fenêtre temporelle; ou
un pourcentage de durée de liaison montante de ressource programmée ou transmise est inférieur ou égal à un pourcentage maximal de durée de liaison montante pouvant être programmée ou transmise du terminal dans la première fenêtre temporelle; ou
un pourcentage de créneaux de liaison montante de ressource programmée ou transmise est inférieur ou égal à un pourcentage maximal de créneau(x) de liaison montante pouvant être programmés ou transmis du terminal dans la première fenêtre temporelle; ou
un pourcentage de sous-trames de liaison montante de ressource programmée ou transmise est inférieur ou égal à un pourcentage maximal de sous-trame(s) de liaison montante pouvant être programmées ou transmises du terminal dans la première fenêtre temporelle; ou
un pourcentage de symboles de liaison montante de ressource programmée ou transmise est inférieur ou égal à un pourcentage maximal de symbole(s) de liaison montante pouvant être programmés ou transmis du terminal dans la première fenêtre temporelle;
ou,
le processeur (800) est en outre configuré pour:
envoyer une valeur d'ajustement de puissance au terminal;
dans lequel
dans le cas où la valeur d'ajustement de puissance est appliquée au terminal, une puissance de transmission du terminal est inférieure ou égale à une puissance de sortie maximale disponible configurée pour le terminal; ou
dans le cas où la valeur d'ajustement de puissance est appliquée au terminal, la puissance de transmission du terminal est inférieure ou égale à une valeur de puissance de transmission correspondant à une première classe de puissance du terminal à une première bande de fréquence de travail; ou
dans le cas où la valeur d'ajustement de puissance est appliquée au terminal, la puissance de transmission du terminal est inférieure ou égale à la puissance de sortie maximale disponible configurée pour le terminal dans le cas où la configuration actuelle de liaison montante et descendante du dispositif de réseau est appliquée.

33. Un terminal, comprenant un processeur (900) et un émetteur-récepteur (910), dans lequel le processeur (900) est configuré pour contrôler l'émetteur-récepteur (910) pour:
envoyer une seconde information d'indication à un dispositif de réseau,
**caractérisé en ce que**,
la seconde information d'indication comprend:
au moins une des informations suivantes: dans une première fenêtre temporelle, une durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal, dans le cas où la valeur du débit d'absorption spécifique, DAS, du terminal est conforme aux exigences applicables d'absorption d'énergie électromagnétique ou aux exigences du débit d'absorption spécifique de rayonnement électromagnétique.

34. Le terminal selon la revendication 33, dans lequel, avant d'envoyer la seconde information d'indication au dispositif de réseau, le processeur (900) est en outre configuré pour contrôler l'émetteur-récepteur (910) pour:
recevoir une première information d'indication envoyée par le dispositif de réseau, dans laquelle la première information d'indication comprend au moins l'un des éléments suivants:
l'information d'identité de zone de localisation du dispositif de réseau;
l'information de configuration actuelle de liaison montante et descendante du dispositif de réseau; et
l'information de contrôle des ressources de liaison montante, comprenant au moins l'un des éléments suivants: une quantité de ressources du domaine temporel de liaison montante, une quantité de symboles de liaison montante, une quantité de créneaux de liaison montante, un rapport cyclique de symboles de liaison montante, un rapport cyclique de créneaux de liaison montante, une quantité maximale de ressources du domaine temporel de liaison montante disponibles du terminal, une quantité maximale de symboles de liaison montante disponibles du terminal, une quantité maximale de créneau(x) de liaison montante disponibles du terminal, un rapport cyclique maximal de symboles de liaison montante disponibles du terminal, un rapport cyclique maximal de créneaux de liaison montante du terminal, une quantité maximale de ressources du domaine temporel de liaison montante pouvant être programmées ou transmises du terminal, une quantité maximale de symbole(s) de liaison montante pouvant être programmés ou transmis du terminal, une quantité maximale de créneau(x) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal dans la première fenêtre temporelle.

35. Le terminal selon la revendication 34, dans lequel l'émetteur-récepteur (910) est en outre configuré pour:
avant de rapporter la seconde information d'indication au dispositif de réseau, envoyer, au dispositif de réseau, une seconde information de classe de puissance du terminal à la première bande de fréquence de travail où fonctionne le dispositif de réseau;
dans lequel une puissance de transmission correspondant à la seconde information de classe de puissance est supérieure à une puissance de transmission correspondant à une première information de classe de puissance.

36. Le terminal selon la revendication 34, dans lequel dans le cas où la première information d'indication comprend l'information d'identité de zone de localisation du dispositif de réseau, le processeur (900) est en outre configuré pour:
déterminer, selon une identité de pays dans l'information d'identité de zone de localisation du dispositif de réseau, un pays où est situé le dispositif de réseau, et acquérir les exigences applicables d'absorption d'énergie électromagnétique ou les exigences du débit d'absorption spécifique de rayonnement électromagnétique correspondant au pays; ou
déterminer, selon une identité de pays et une identité d'opérateur dans l'information d'identité de zone de localisation du dispositif de réseau, un pays et un opérateur où est situé le dispositif de réseau, et acquérir les exigences applicables d'absorption d'énergie électromagnétique ou les exigences du débit d'absorption spécifique de rayonnement électromagnétique correspondant au pays et à l'opérateur.

37. Le terminal selon la revendication 34, dans lequel le processeur (900) est en outre configuré pour:
déterminer, selon la première information d'indication, au moins l'un des éléments suivants:
dans le cas d'assurer la conformité avec les exigences applicables d'absorption d'énergie électromagnétique ou les exigences du débit d'absorption spécifique de rayonnement électromagnétique, au moins l'une des informations de configuration de liaison montante et descendante disponibles du terminal, une durée maximale de liaison montante pouvant être programmée ou transmise du terminal, une quantité maximale de créneau(x) de liaison montante pouvant être programmés ou transmis du terminal, une quantité maximale de sous-trame(s) de liaison montante pouvant être programmées ou transmises du terminal, une quantité maximale de symbole(s) de liaison montante pouvant être programmés ou transmis du terminal, un pourcentage maximal de durée de liaison montante pouvant être programmée ou transmise du terminal, un pourcentage maximal de créneau(x) de liaison montante pouvant être programmés ou transmis du terminal, un pourcentage maximal de sous-trame(s) de liaison montante pouvant être programmées ou transmises du terminal et un pourcentage maximal de symbole(s) de liaison montante pouvant être programmés ou transmis du terminal;
dans le cas où la configuration actuelle de liaison montante et descendante du dispositif de réseau est appliquée, une puissance de sortie maximale disponible configurée pour le terminal dans le cas d'assurer la conformité avec les exigences applicables d'absorption d'énergie électromagnétique ou les exigences du débit d'absorption spécifique de rayonnement électromagnétique; et
les puissances de sortie maximales disponibles configurées pour le terminal dans différentes configurations de liaison montante et descendante, dans le cas où les exigences applicables d'absorption d'énergie électromagnétique ou les exigences du débit d'absorption spécifique de rayonnement électromagnétique sont satisfaites.

38. Le terminal selon la revendication 34, dans lequel le processeur (900) est en outre configuré pour:
dans le cas où une durée de ressource programmée ou transmise du terminal est supérieure à une durée maximale de liaison montante pouvant être programmée ou transmise du terminal dans la première fenêtre temporelle, reconfigurer une puissance de sortie maximale disponible du terminal ou exécuter un recul de puissance par le terminal; ou
dans le cas où une quantité de créneaux de ressource programmée ou transmise du terminal est supérieure à une quantité maximale de créneau(x) de liaison montante pouvant être programmés ou transmis du terminal dans la première fenêtre temporelle, reconfigurer une puissance de sortie maximale disponible du terminal ou exécuter un recul de puissance par le terminal; ou
dans le cas où une quantité de sous-trames de liaison montante de ressource programmée ou transmise du terminal est supérieure à une quantité maximale de sous-trame(s) de liaison montante pouvant être programmées ou transmises du terminal dans la première fenêtre temporelle, reconfigurer une puissance de sortie maximale disponible du terminal ou exécuter un recul de puissance par le terminal; ou
dans le cas où une quantité de symboles de liaison montante de ressource programmée ou transmise du terminal est supérieure à une quantité maximale de symbole(s) de liaison montante pouvant être programmés ou transmis du terminal dans la première fenêtre temporelle, reconfigurer une puissance de sortie maximale disponible du terminal ou exécuter un recul de puissance par le terminal; ou
dans le cas où un pourcentage de durée de liaison montante de ressource programmée ou transmise du terminal est supérieur à un pourcentage maximal de durée de liaison montante pouvant être programmée ou transmise du terminal dans la première fenêtre temporelle, reconfigurer une puissance de sortie maximale disponible du terminal ou exécuter un recul de puissance par le terminal; ou
dans le cas où un pourcentage de créneaux de liaison montante de ressource programmée ou transmise du terminal est supérieur à un pourcentage maximal de créneau(x) de liaison montante pouvant être programmés ou transmis du terminal dans la première fenêtre temporelle, reconfigurer une puissance de sortie maximale disponible du terminal ou exécuter un recul de puissance par le terminal; ou
dans le cas où un pourcentage de sous-trames de liaison montante de ressource programmée ou transmise du terminal est supérieur à un pourcentage maximal de sous-trame(s) de liaison montante pouvant être programmées ou transmises du terminal dans la première fenêtre temporelle, reconfigurer une puissance de sortie maximale disponible du terminal ou exécuter un recul de puissance par le terminal; ou
dans le cas où un pourcentage de symboles de liaison montante de ressource programmée ou transmise du terminal est supérieur à un pourcentage maximal de symbole(s) de liaison montante pouvant être programmés ou transmis du terminal dans la première fenêtre temporelle, reconfigurer une puissance de sortie maximale disponible du terminal ou exécuter un recul de puissance par le terminal.

39. Le terminal selon la revendication 34 ou 35, dans lequel le processeur (900) est en outre configuré pour:
dans le cas où un pourcentage de symboles de liaison montante programmé ou transmis par le terminal dans la première fenêtre temporelle est supérieur à une capacité du terminal correspondant à la seconde information d'indication, appliquer toutes les exigences pour la première classe de puissance à une classe de puissance prise en charge;
ou, le processeur (900) est en outre configuré pour:
dans le cas où un pourcentage de symboles de liaison montante programmé ou transmis par le terminal dans la première fenêtre temporelle est supérieur à une capacité du terminal correspondant à la seconde information d'indication, abaisser une limite inférieure d'une valeur de configuration de puissance de transmission maximale du terminal.

40. Le terminal selon la revendication 33, dans lequel
la première fenêtre temporelle est une période d'évaluation prédéfinie;
la première fenêtre temporelle est une plage temporelle pour que le terminal évalue si les exigences applicables d'absorption d'énergie électromagnétique ou les exigences du débit d'absorption spécifique de rayonnement électromagnétique sont satisfaites; ou
la première fenêtre temporelle est une plage temporelle d'une ressource maximale de liaison montante disponible du terminal dans le cas où le terminal évalue que les exigences applicables d'absorption d'énergie électromagnétique ou les exigences du débit d'absorption spécifique de rayonnement électromagnétique sont satisfaites; ou
la première fenêtre temporelle est une plage temporelle d'une puissance de sortie maximale disponible configurée pour le terminal dans le cas où le terminal évalue que les exigences applicables d'absorption d'énergie électromagnétique ou les exigences du débit d'absorption spécifique de rayonnement électromagnétique sont satisfaites.

41. Le terminal selon la revendication 33, dans lequel l'émetteur-récepteur (910) est en outre configuré pour:
avant d'envoyer la seconde information d'indication au dispositif de réseau, envoyer, au dispositif de réseau, une seconde information de classe de puissance du terminal à la première bande de fréquence de travail où fonctionne le dispositif de réseau;
dans lequel une puissance de transmission correspondant à la seconde information de classe de puissance est supérieure à une puissance de transmission correspondant à une première information de classe de puissance.

42. Le terminal selon la revendication 33 ou 41, dans lequel le processeur (900) est en outre configuré pour:
dans le cas où un pourcentage de symboles de liaison montante programmé ou transmis par le terminal dans la première fenêtre temporelle est supérieur à une capacité du terminal correspondant à la seconde information d'indication, appliquer toutes les exigences pour la première classe de puissance à une classe de puissance prise en charge;
le processeur (900) est en outre configuré pour:
dans le cas où un pourcentage de symboles de liaison montante programmé ou transmis par le terminal dans la première fenêtre temporelle est supérieur à une capacité du terminal correspondant à la seconde information d'indication, abaisser une limite inférieure d'une valeur de configuration de puissance de transmission maximale du terminal.

43. Un support de stockage lisible par ordinateur comprenant des instructions qui, lorsqu'elles sont exécutées par un processeur d'un dispositif de réseau, amènent le processeur à exécuter la méthode des revendications 1 à 11.

44. Un support de stockage lisible par ordinateur comprenant des instructions qui, lorsqu'elles sont exécutées par un processeur d'un terminal, amènent le processeur à exécuter la méthode des revendications 12 à 24.
